# EUROPEAN PATENT APPLICATION

(11) **EP 4 524 516 A1**
(43) Date of publication of application: **19.03.2025**
(21) Application number: 23839803.6
(22) Date of filing: 02.06.2023
(51) Int. Cl.: G01C 21/36, G01C 21/00, G06T 15/00, G06T 17/05, G06T 19/00

(54) **MIXED REALITY-BASED DISPLAY DEVICE AND PATH GUIDING SYSTEM**

(30) Priority: 12.07.2022 WO PCT/KR2022/010139
(71) Applicant: LG Electronics Inc., Yeongdeungpo-gu Seoul 07336 (KR)
(72) Inventor: LEE, Heemin, Seoul 06772 (KR); CHOI, Sunghwan, Seoul 06772 (KR); KIM, Taekyoung, Seoul 06772 (KR); SEO, Jungryul, Seoul 06772 (KR)
(74) Representative: Vossius & Partner Patentanwälte Rechtsanwälte mbB
(86) International application number: PCT/KR2023/007639
(87) International publication number: WO 2024/014709

(57) **Abstract**

The present invention comprises an interface unit for receiving sensing information collected from a sensor, a tile database including tiles corresponding to at least one of an image and a shape of a part of a building, a memory for storing map information including virtual objects corresponding to buildings, and building profiles of the buildings corresponding to the virtual objects included in the map information, and a processor for performing control to: when a driving path of a vehicle is determined, detect building profiles corresponding to buildings around the vehicle on the basis of the driving path; on the basis of tile information for each area of the building profiles corresponding to virtual objects of the respective buildings around the vehicle, tile different areas of the respective virtual objects by using different tiles of the tile database; combine each tiled area; and display, on a display unit of the vehicle, MR information obtained by performing texturing on each virtual object.

## Description

### Technical Field

The present disclosure relates to a display device and a path guiding system for guiding a path for a vehicle to travel.

### Background Art

Recently, the development of a technology related to mixed reality (MR), which may provide various simulation information related to a vehicle by applying digital twinning (DT) is actively in progress, following augmented reality (AR) which outputs a graphic object through a windshield of a vehicle or a head-up display (HUD) or additionally outputs a graphic object in real world by using a graphic object using an image captured by a camera.

As an effort to develop such MR-related technology, a method of providing information related to path guidance to a driver using the MR is being actively researched. The path guidance using the MR has the advantage of providing the driver with various types of information that the driver in a cockpit cannot check, such as displaying a graphic object corresponding to a vehicle on a 3D map digitized through the digital twinning technology and providing information related to a driving route on which the driver has not driven the vehicle yet through the map and the graphic object, or providing a field of view (viewing angle) such as a bird's-eye view.

In order for a driver to obtain accurate information through the path guidance using the MR, a high matching rate is required between the map digitized through the digital twinning, that is, a digital twin map, and the real world. For this purpose, it is necessary to provide a 3D map rather than a 2D map. Accordingly, service providers that provide digital twin maps currently provide 3D maps obtained by 3D mapping of 2D maps.

However, those service providers currently use building modeling using satellite or aerial photos to provide 3D mapping. When using satellite or aerial photos, it is difficult to obtain images of various lateral surfaces of a building because such images are captured at an angle of elevation. This causes difficulty in providing accurate textures for the building. Accordingly, a typical 3D map is provided in the form of polygon data having floor footprint and height of the building.

However, the 3D map including building modeling provided in the form of polygon data has a problem in that it does not include accurate textures of the building. As such, a 3D map obtained through such polygon modeling only shows a location and 3D volume of a building, but has a difference from the real shape of the building. This difference causes a gap between the digital twin map and the real world, which makes it difficult to provide correct information to the driver.

### Disclosure of Invention

### Technical Problem

The present disclosure is directed to solving the aforementioned problems and other drawbacks.

An aspect of the present disclosure is to provide a display device and a path guiding system capable of providing a more realistic mixed reality-based path guiding service through a digital twin map including virtual objects with more realistic textures corresponding to the form of each side of a building.

In addition, another aspect of the present disclosure is to provide a display device and a path guiding system capable of providing a mixed reality-based path guiding service through a digital twin map more similar to the real world at a lower cost.

### Solution to Problem

A display device according to an embodiment of the present disclosure may include an interface unit that receives sensing information collected from at least one sensor provided in a vehicle, a memory that stores a tile database including tiles corresponding to at least one of shapes and images of parts of different buildings, map information including virtual objects corresponding to buildings in an area where the vehicle is located, and building profiles of buildings corresponding to the virtual objects included in the map information, and a processor that detects building profiles corresponding to buildings located around the vehicle based on a driving path of the vehicle when the driving path of the vehicle is determined, tiles different areas of each virtual object with different tiles of the tile database based on area-specific tile information included in a building profile corresponding to each of the virtual objects, for respective virtual objects corresponding to respective buildings located around the vehicle, combines respective areas on which tiling is carried out according to the building profile to perform texturing on each of the virtual objects, and controls the interface unit to display MR information that renders at least one of the textured virtual objects on a display module of the vehicle.

In one embodiment, the interface unit may acquire a building image corresponding to a specific building whose building profile is not detected from among the buildings around the vehicle through a camera provided in the vehicle, wherein the processor acquires images of different areas of the specific building based on the building image, determines tiles corresponding to the different areas of the specific building from the tile database based on the acquired images of the different areas, and generates and stores a building profile including combination information for combining information of the determined tiles for the different areas of the specific building and the acquired images of the different areas based on the building image.

In one embodiment, the tile database may be provided with a plurality of tile groups including different tiles depending on the type of a building, wherein the processor determines a tile corresponding to a specific area of the specific building from tiles included in a specific tile group of the tile database according to the type of the specific building.

In one embodiment, the interface unit may acquire a building image corresponding to a specific building from among the buildings around the vehicle through a camera provided in the vehicle, wherein the processor acquires an image of a specific area of the specific building based on the building image, determines a tile corresponding to the specific area from the tile database based on the acquired image of the specific area, and updates tile information of the specific area included in building profile information corresponding to the specific building based on a result of comparing the determined tile with the tile information of the specific area included in the building profile information corresponding to the specific building.

In one embodiment, the display device may further include a communication unit that communicates with a cloud server, wherein the processor transmits a driving path of the vehicle to the cloud server, and receives building profile information corresponding to at least one of buildings located around the vehicle from the cloud server in response to the transmitted driving path.

In one embodiment, the processor may receive at least one tile according to the received building profile information from the cloud server.

In one embodiment, the cloud server may receive building profile information, which is generated by a plurality of vehicles, corresponding to respective buildings in an area where the vehicles are located, from the plurality of vehicles that are connected in communication with the cloud server, compare tile information set in different areas of the buildings included in the respective received building profile information with one another, and generate building profile information including information on the most selected tile for each area of the buildings as tile information corresponding to each area of the buildings.

In one embodiment, the cloud server may collect, from a plurality of vehicles connected to the cloud server, information on tiles corresponding to different areas of respective buildings in an area where the vehicles are located, and generate building profile information including information on the most selected tile for each area of the buildings as tile information corresponding to each area of the buildings.

In one embodiment, the processor may determine any one tile corresponding to the specific area based on a result of calculating a similarity between at least one of a shape, a color, and a form extracted from an image of the specific area and each of the tiles included in the tile database.

In one embodiment, the processor may calculate, based on features detected from an image of the specific area, a recognition rate for a building image of the specific area, and determine whether to determine a tile corresponding to the specific area based on the calculated recognition rate.

In one embodiment, in the tile database, matchable tiles may be grouped for the respective plurality of preset layers, wherein the processor divides the specific building into the plurality of preset layers based on the acquired building image, and determines tiles corresponding to each of the divided layers from the grouped tiles of the tile database corresponding to each of the divided layers based on the image of each of the divided layers.

In one embodiment, the processor may normalize, when tiles are acquired into the tile database, the stored tiles according to preset sizes or aspect ratios to store the normalized tiles in the tile database, wherein the sizes or aspect ratios of the normalized tiles are different for the respective plurality of preset layers of the grouped tile database.

In one embodiment, the processor may divide, based on the acquired building image, the specific building into a bottom layer, which is a layer closest to the ground, and at least one middle layer, detect a sub-area corresponding to the bottom layer area from the acquired building image according to normalized sizes of tiles included in a tile group of the tile database corresponding to the bottom layer, and detect a sub-area corresponding to the at least one middle layer area from the acquired building image according to normalized sizes of tiles included in a tile group of the tile database corresponding to the middle layer.

In one embodiment, the processor may remove, on at least one virtual object included in the map information, overlapping vertices between virtual objects and corrects an outline of the virtual object through a vertex resampling algorithm, and perform texturing on a virtual object corresponding to a building around the vehicle according to the building profile for the virtual object whose vertices have been removed and whose outline has been corrected.

In one embodiment, the processor may detect outline vertices, which are corner points of an outline constituting an outline of the virtual object, detect areas between outline vertices whose distance to another outline vertex is not an integer multiple of a horizontal length of a preset tile, from among the outline vertices, and remove at least one of the detected outline vertices so as to allow a distance between the outline vertices to correspond to an integer multiple of a preset length of tile.

In one embodiment, the normalization may further include tiling reference point normalization that changes the tiling reference points of the acquired tiles to preset tiling reference points.

A path guiding system according to an embodiment of the present disclosure may include a cloud server that detects, when a driving path of a vehicle is received, buildings located around the received driving path from map information, and transmits building profiles corresponding to the respective detected buildings as a response to the received driving path, and a display device provided in the vehicle to transmit a driving path according to a destination of the vehicle acquired from a navigation system of the vehicle to the cloud server, determine a target building on which texturing is to be performed based on at least one of a location, a speed, and a driving direction of the vehicle when the building profiles are received in response to the transmission of the driving path, tile different areas of a virtual object corresponding to the target building with different tiles based on area-specific tile information included in a building profile corresponding to the determined target building, among the received building profiles, and perform texturing on the virtual object by combining respective areas where tiling is carried out according to the building profile.

In one embodiment, the cloud server may acquire images of surrounding buildings through a camera, acquire images of different areas of the surrounding buildings based on the acquired building images, determine tiles corresponding to the different areas of the surrounding buildings based on the acquired images of the different areas, receive building profile information generated by a plurality of vehicles, which includes combination information for combining the acquired images of different areas based on the information of the determined tiles and the building image, from the plurality of vehicles, and determine a building profile corresponding to a specific building based on at least one building profile information received for the specific building from among the received building profile information.

In one embodiment, the cloud server may determine, when among the received building profile information, there is building profile information including tile information of different tiles for a specific area of the specific building, any one tile having the largest amount of collected building profile information corresponding to the specific area, among the different tiles corresponding to the specific area, as a tile corresponding to the specific area.

In one embodiment, the cloud server may be provided with a tile database including tile data for each of a plurality of tiles to provide tile database information for synchronization with the tile database to the plurality of vehicles and the display device, wherein the plurality of vehicles and the display device are provided with a tile database in synchronization with the tile database of the cloud server based on the tile database information to determine a tile corresponding to a specific area of a specific building based on a plurality of tiles included in the tile database in synchronization therewith.

### Advantageous Effects of Invention

Hereinafter, effects of a display device and a path guiding system according to an embodiment of the present disclosure will be described.

First, the present disclosure may tile respective parts of a building around a vehicle with tiles having images or three-dimensional forms similar to those of the building to generate textures corresponding to those of the building and combine those of the building with the generated textures, thereby generating a digital twin map including a building model synthesized with textures more similar to an actual building. This can provide an advantage of providing a digital twin map having a higher similarity with the real world.

Second, the present disclosure may generate and distribute building profile information including tile information selected for respective sub-areas of each building and combination information for the respective sub-areas through a cloud server, thereby allowing a vehicle that has received the building profile information to synthesize textures for respective parts of a building around the vehicle according to tile information included in the received building profile information, and combine a plurality of sub-areas where textures are synthesized based on the received building profile information so as to synthesize textures for virtual objects corresponding to buildings around the vehicle. Even when three-dimensional map information including a polygon-shaped virtual object that does not include a texture is provided, there is an advantage in that a vehicle that has received tile information and building profile information can display map information in which textures similar to an actual building are synthesized on the polygon-shaped virtual object.

Third, the present disclosure may select tiles for sub-areas of a building and tile the selected tiles to synthesize textures for the sub-areas of the building. In addition, the present disclosure may select tiles corresponding to the sub-areas based on an image acquired from a building, thereby changing, when the image of the building changes, the tiles corresponding to the sub-areas. Accordingly, the present disclosure may change tiles corresponding to the sub-areas to different tiles according to a change in the real world, thereby having an effect of allowing textures synthesized to a virtual object to be updated for the respective sub-areas by reflecting the change in the real world, such as the passage of time.

### Brief Description of Drawings

FIG. 1 is a view illustrating appearance of a vehicle in accordance with an embodiment of the present disclosure.
FIG. 2 is a set of views illustrating the vehicle in accordance with the embodiment from various angles.
FIGS. 3 and 4 are diagrams illustrating the interior of the vehicle in accordance with the embodiment.
FIGS. 5 and 6 are diagrams referenced to describe objects in accordance with an embodiment.
FIG. 7 is a block diagram reference to describe the vehicle in accordance with the embodiment.
FIG. 8A is a conceptual view illustrating an AR service platform according to the present disclosure.
FIG 8B is a conceptual view illustrating an MR service platform for providing an MR service according to the present disclosure.
FIG. 8C is a conceptual view illustrating an MRAMS client according to the present disclosure.
FIG. 8D is a conceptual view illustrating an MRAMS server according to the present disclosure.
FIG. 9 is a conceptual view illustrating a DTaaS server according to the present disclosure.
FIG. 10 is a block diagram illustrating a structure of a display device according to an embodiment of the present disclosure.
FIG. 11 is a block diagram illustrating a more detailed structure of a display device according to an embodiment of the present disclosure.
FIG. 12 is a conceptual diagram illustrating an operation flow of a display device and an MR service device according to an embodiment of the present disclosure.
FIG. 13 is a flowchart illustrating an operation process of displaying, by a processor of a display device according to an embodiment of the present disclosure, map information including a virtual object with textures synthesized thereto.
FIG. 14 is an exemplary diagram for explaining an example of determining a building area according to a driving path of a vehicle in FIG. 13.
FIG. 15 is an exemplary diagram illustrating an example of carrying out texturing on a surface area of a virtual object with the combination of respective sub-areas in which tiling is carried out according to the operation process illustrated in FIG. 13.
FIG. 16 is an exemplary diagram illustrating an example of a resampling process that is carried out as a preprocessing process when displaying a virtual object with textures synthesized according to the operation process illustrated in FIG. 13.
FIG. 17 is a flowchart illustrating an operation process of updating building profile information for sub-areas to which tile information is not assigned in FIG. 13.
FIG. 18 and FIG. 19 are a flowchart and an exemplary diagram illustrating an operation process of determining a tile group according to characteristic information of a building and determining tiles corresponding to sub-areas of a target building through the determined tile group and an example thereof.
FIG. 20 is a flowchart illustrating an operation process of updating, by a display device according to an embodiment of the present disclosure, tile information assigned to a specific sub-area based on an acquired image.
FIG. 21 is an exemplary diagram illustrating an example of updating a texture corresponding to an object around a vehicle to reflect the passage of time according to the operation process of FIG. 20.
FIG. 22 is a conceptual diagram illustrating a path guiding system including a display device and a cloud server providing building profile information and tile information according to an embodiment of the present disclosure.
FIG. 23 is a block diagram illustrating a structure of the path guiding system according to FIG. 22.
FIG. 24 is a conceptual diagram illustrating an operation flow of a path guiding system including a display device, an MR service device, and a second cloud server as illustrated above in FIG. 23.
FIG. 25 is a flowchart illustrating an operation process of generating, by a vehicle connected in communication with a cloud server, building profile information and providing the generated information to the cloud server in the path guiding system illustrated in FIG. 22.
FIG. 26 is an exemplary diagram illustrating an example of a tile table generated in the cloud server to update building profile information.
FIG. 27 is a flowchart illustrating an operation process of updating, by the cloud server of the path guiding system illustrated in FIG. 22, building profile information.
FIG. 28 is an exemplary diagram illustrating an example of synthesizing textures to a polygon-shaped virtual object according to an embodiment of the present disclosure.

### Mode for the Invention

A description will now be given in detail according to one or more embodiments disclosed herein, with reference to the accompanying drawings, and regardless of reference numerals, the same or similar components are given the same reference number, and descriptions thereof will be omitted. The terms "module" and "unit" as used herein interchangeably or individually used to refer to a constituent element only for convenience in description in the present specification and therefore are not themselves intended to take on different meanings or to depict different functions. In describing the embodiments disclosed herein, moreover, a detailed description of a related well-known technology will be omitted when it is determined that it would obscure the gist of the present disclosure. Furthermore, the accompanying drawings are provided only for a better understanding of the embodiments disclosed herein, and are not intended to limit the technical ideas disclosed herein. Therefore, it should be understood that the accompanying drawings include all modifications, equivalents, and substitutions within the scope and technical ideas of the disclosure.

The terms including an ordinal number such as first, second, and the like may be used to describe various elements, but the elements should not be limited by those terms. The terms are used merely for the purpose of distinguishing one element from another.

It will be understood that when a component is referred to as being "connected to" or "coupled to" another component, it may be directly connected to or coupled to another component or intervening components may be present. In contrast, when a component is referred to as being "directly connected to" or "directly coupled to" another component, it should be understood that there are no intervening components present.

As used herein, the singular form is intended to include the plural forms as well, unless context clearly indicates otherwise.

In the present application, it should be further understood that the terms "comprises," "includes," etc. specify the presence of stated features, integers, steps, operations, elements, components, or combinations thereof, but do not preclude the presence or addition of one or more other features, integers, steps, operations, elements, components, or combinations thereof.

A vehicle according to an embodiment of the present disclosure may be understood as a conception including automobiles, motorcycles, and the like. Hereinafter, the vehicle will be described based on a car.

A vehicle as described herein may include any of an internal combustion engine vehicle including an engine as a power source, a hybrid vehicle including both an engine and an electric motor as power sources, an electric vehicle including an electric motor as a power source, and the like.

In the following description, a left side of a vehicle refers to a left side in a driving direction of the vehicle, and a right side of the vehicle refers to a right side in the driving direction.

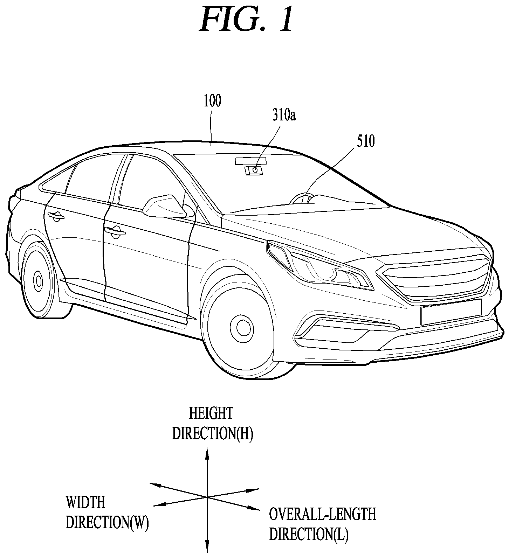

FIG. 1 is a view illustrating appearance of a vehicle in accordance with an embodiment of the present disclosure.

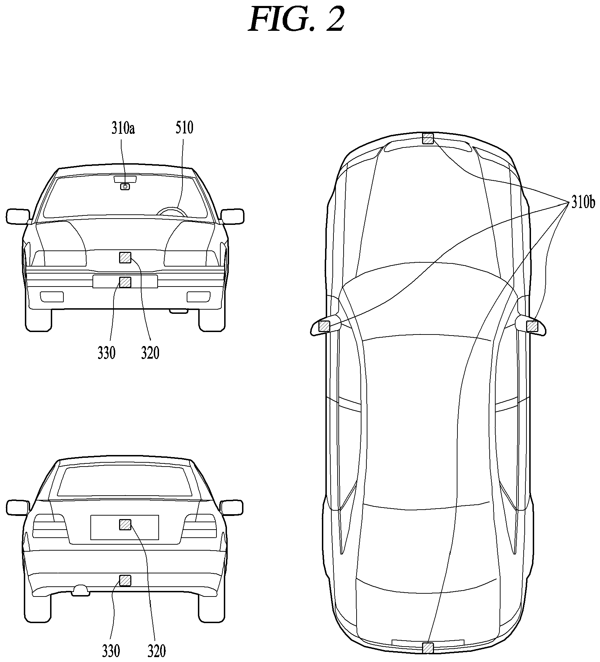

FIG. 2 is a set of views illustrating the exterior of the vehicle in accordance with the embodiment from various angles.

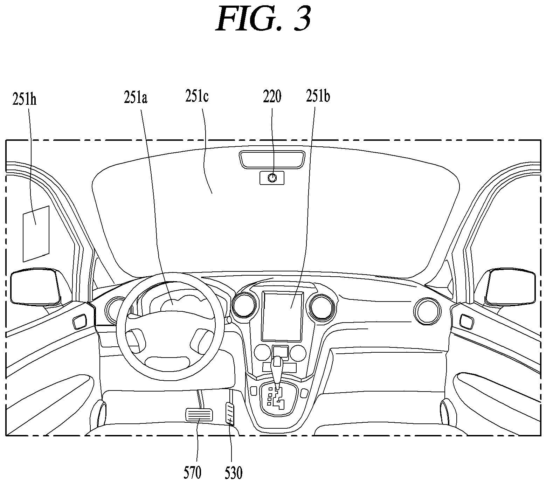

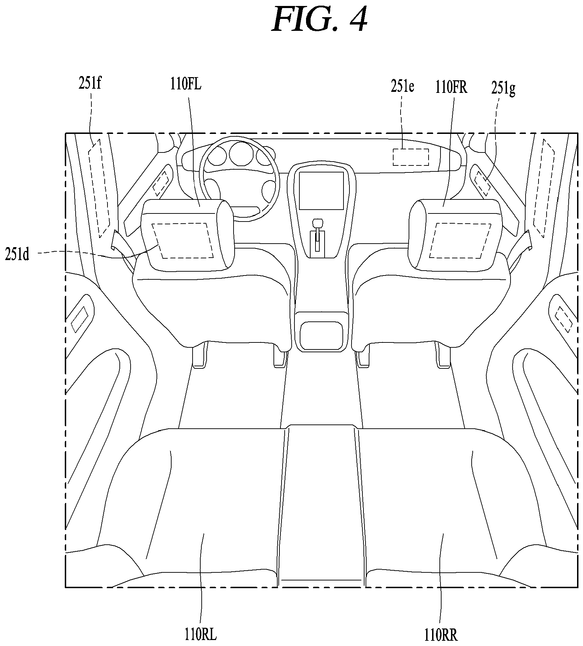

FIGS. 3 and 4 are diagrams illustrating the interior of the vehicle in accordance with the embodiment.

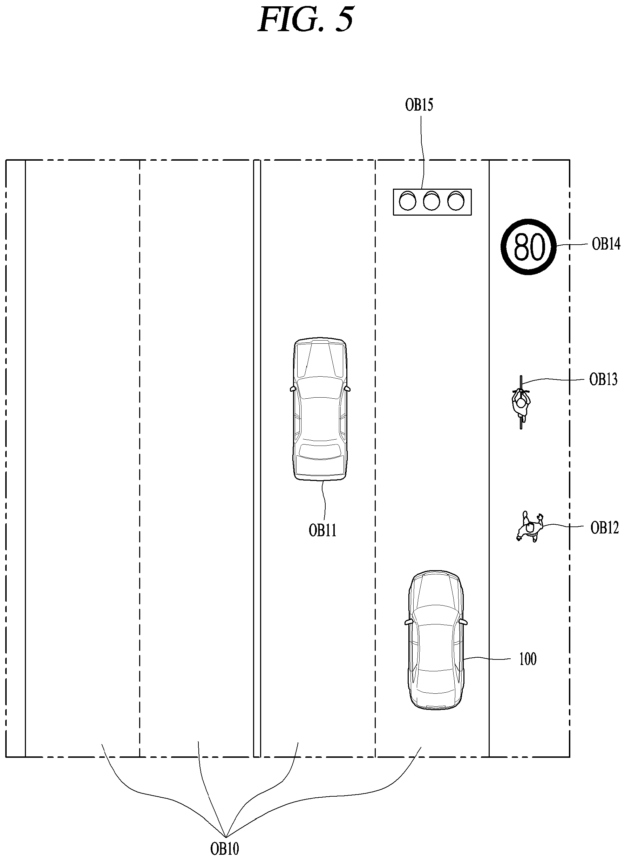

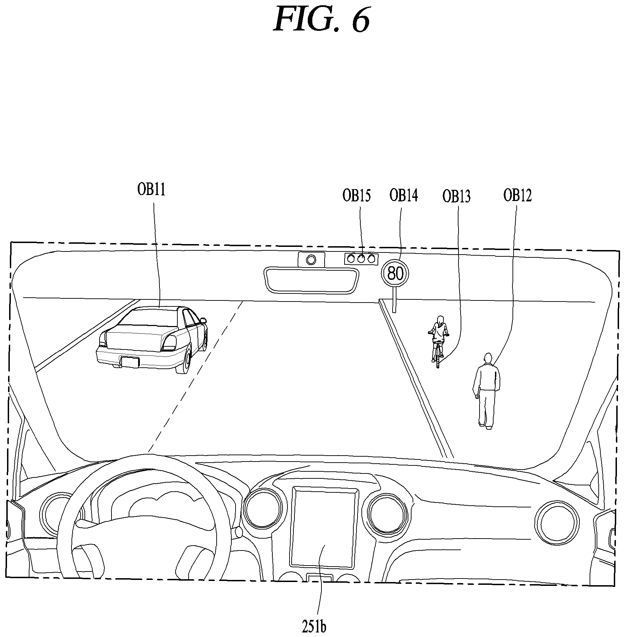

FIGS. 5 and 6 are diagrams referenced to describe objects in accordance with an embodiment.

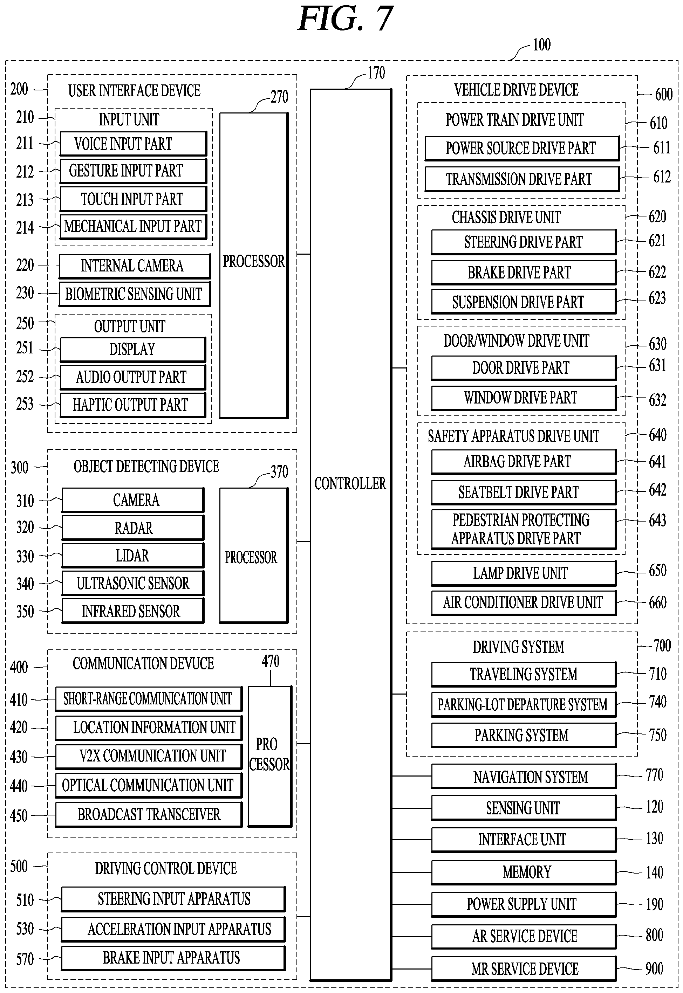

FIG. 7 is a block diagram referenced to describe the vehicle in accordance with the embodiment.

As illustrated in FIGS. 1 to 7, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may switch into an autonomous mode or a manual mode based on a user input.

For example, the vehicle 100 may switch from the manual mode into the autonomous mode or from the autonomous mode into the manual mode based on a user input received through a user interface device 200.

The vehicle 100 may switch into the autonomous mode or the manual mode based on traveling situation information. The traveling situation information may be generated based on object information provided from an object detection device 300.

For example, the vehicle 100 may switch from the manual mode into the autonomous mode or from the autonomous mode into the manual mode based on the traveling situation information generated by the object detection device 300.

For example, the vehicle 100 may switch from the manual mode into the autonomous mode or from the autonomous mode into the manual mode based on the traveling situation information received through a communication device 400.

The vehicle 100 may switch from the manual mode into the autonomous mode or from the autonomous module into the manual mode based on information, data, or signal provided by an external device.

When the vehicle 100 is driven in the autonomous mode, the vehicle 100 may be driven through a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include a user interface device 200, an object detection device 300, a communication device 400, a driving operation device 500, a vehicle drive device 600, a driving system 700, a navigation system 770, a sensing unit 120, a vehicle interface 130, a memory 140, a controller 170, and a power supply unit 190.

In some embodiments, the vehicle 100 may include more components in addition to the aforementioned components or may not include some of the aforementioned components.

The user interface device 200 is a device for communication between the vehicle 100 and the user. The user interface device 200 may receive a user input and provide information generated in the vehicle 100 to the user. The vehicle 100 may implement user interfaces (Uls) or user experiences (UXs) through the user interface device 200.

The user interface device 200 may include an input unit 210, an internal camera 220, a biometric sensing unit 230, an output unit 250 and a processor 270.

In some embodiments, the user interface device 200 may include more components in addition to the aforementioned components or may not include some of the aforementioned components.

The input unit 200 may allow the user to input information. Data collected in the input unit 120 may be analyzed by the processor 270 and processed into a user's control command.

The input unit 200 may be disposed inside the vehicle. For example, the input unit 200 may be disposed on one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The voice input part 211 may convert a user's voice input into an electric signal. The converted electric signal may be provided to the processor 270 or the controller 170.

The voice input part 211 may include at least one microphone.

The gesture input module 212 may convert a user's gesture input into an electric signal. The converted electric signal may be provided to the processor 270 or the controller 170

The gesture input part 212 may include at least one of an infrared sensor and an image sensor, each of which is for detecting a user's gesture input.

In some embodiments, the gesture input part 212 may detect a user's three-dimensional (3D) gesture input. To this end, the gesture input part 212 may include a light emitting diode emitting a plurality of infrared rays, or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170.

The touch input part 213 may include a touch sensor for detecting the user's touch input.

In some embodiments, the touch input part 213 may be integrally formed with the display 251, thereby implementing a touch screen. The touch screen may provide both an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an image of the interior of the vehicle. The processor 270 may detect a user's status from the image of the interior of the vehicle. The processor 270 may acquire information related to the user's gaze from the image of the interior of the vehicle. The processor 270 may detect the user's gesture from the image of the interior of the vehicle.

The biometric sensing unit 230 may acquire the user's biometric information. The biometric sensing unit 230 may include a sensor for acquiring the user's biometric information and acquire the user's fingerprint information, heart rate information, and the like using the sensor. The biometric information may be used for user authentication.

The output unit 250 may generate an output related to a visual, auditory or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display, and an e-ink display.

The display 251 may be inter-layered or integrally formed with the touch input part 213, thereby implementing a touch screen.

The display 251 may be implemented as a head-up display (HUD). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and may output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

Meanwhile, the user interface device 200 may include a plurality of displays 251a to 251g.

The display 251 may be disposed on one region of the steering wheel, one region 521a, 251b, 251e of the instrument panel, one region 251d of the seat, one region 251f of each pillar, one region 251g of the door, one region of the center console, one region of the headlining, or one region of the sun visor, or implemented on one region 251c of the windshield or one region 251h of the window.

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate a steering wheel, a safety belt, seats 110FL, 110FR, 110RL, and 110RR, thereby enabling the user to recognize such vibration output.

The processor 270 may control the overall operation of each unit of the user interface device 200.

In some embodiments, the user interface device 200 may include a plurality of processors 270 or may not include any processor 270.

When the processor 270 is not included in the user interface device 200, the user interface device 200 may operate under the control of a processor of another apparatus within the vehicle 100 or under the control of the controller 170.

Meanwhile, the user interface device 200 may be named a display apparatus for vehicle.

The user interface device 200 may operate under the control of the controller 170.

The object detection device 300 is a device for detecting an object located outside the vehicle 100.

Examples of the object may include a variety of objects associated with driving (operation) of the vehicle 100.

Referring to FIGS. 5 and 6, examples of an object O may include a traffic lane OB10, another vehicle OB11, a pedestrian OB12, a two-wheeled vehicle OB13, traffic signals OB14 and OB15, light, a road, a structure, a speed hump, a terrain feature, an animal, and the like.

The lane OB10 may be a traveling lane, a lane adjacent to the traveling lane, or a lane along which another vehicle in an opposite direction travels. The lanes OB10 may conceptually include left and right lines forming a lane.

The another vehicle OB11 may be a vehicle which travels in the vicinity of the vehicle 100. The another vehicle OB11 may be a vehicle located within a predetermined distance from the vehicle 100. For example, the another vehicle OB11 may be a vehicle which travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a person-carrying vehicle that is located in the vicinity of the vehicle 100 and moves on two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

Examples of the traffic signal may include a traffic light OB15, a traffic sign OB14, and a pattern or text drawn on a road surface.

The light may be light emitted from a lamp provided on another vehicle. The light may be light generated from a streetlamp. The light may be solar light.

Examples of the road may include a road surface, a curve, an upward slope, a downward slope, and the like.

The structure may be an object that is located in the vicinity of a road and fixed on the ground. Examples of the structure may include a streetlamp, a roadside tree, a building, an electric pole, a traffic light, a bridge, and the like.

Examples of the terrain feature may include a mountain, a hill, and the like.

Meanwhile, objects may be classified into moving objects and stationary objects. Examples of the moving object may conceptually include another vehicle and a pedestrian. Examples of the stationary object may conceptually include a traffic signal, a road, and a structure.

The object detection device 300 may include a camera 310, a radar 320, a LiDAR 330, an ultrasonic sensor 340, an infrared sensor 350, and a processor 370.

In some embodiments, the object detection device 300 may further include other components in addition to the aforementioned components, or may not include some of the aforementioned components.

The camera 310 may be located at an appropriate portion on the exterior of the vehicle to acquire an image of the exterior of the vehicle. The camera 310 may be a mono camera, a stereo camera 310a, an around view monitoring (AVM) camera 310b, or a 360-degree camera.

For example, the camera 310 may be disposed adjacent to a front windshield within the vehicle to acquire an image of the surroundings in front of the vehicle. Alternatively, the camera 310 may be disposed adjacent to a front bumper or a radiator grill.

For example, the camera 310 may be disposed adjacent to rear glass within the vehicle to acquire an image of the surrounding behind the vehicle. Alternatively, the camera 310 may be disposed adjacent to a rear bumper, a trunk, or a tail gate.

For example, the camera 310 may be disposed adjacent to at least one of side windows within the vehicle to acquire an image of the surroundings alongside the vehicle. Alternatively, the camera 310 may be disposed adjacent to a side mirror, a fender, or a door.

The camera 310 may provide an acquired image to the processor 370.

The radar 320 may include an electric wave transmission unit and an electromagnetic wave reception unit. The radar 320 may be implemented in a pulse radar scheme or a continuous wave radar scheme according to a principle of emitting radio waves. The radar 320 may be implemented in a frequency modulated continuous wave (FMCW) manner or a frequency shift keying (FSK) manner, among the continuous wave radar manners, according to a signal waveform.

The radar 320 may detect an object in a time of flight (TOF) manner or a phase-shift manner, with an electromagnetic wave as a medium, and may detect a location of the detected object, a distance to the detected object, and a relative speed with respect to the detected object.

The radar 320 may be disposed at an appropriate location on the exterior of the vehicle to detect an object which is located in front of, behind, or alongside the vehicle.

The LiDAR 330 may include a laser transmission unit and a laser reception unit. The LiDAR 330 may be implemented using a time of flight (TOF) scheme or a phase-shift scheme.

The LiDAR 330 may be implemented as a drive type or a non-drive type.

When implemented as the drive type, the LiDAR 330 may be rotated by a motor and may detect object in the vicinity of the vehicle 100.

When implemented as the non-drive type, the LiDAR 330 may detect, through light steering, an object which are located within a predetermined range based on the vehicle 100. The vehicle 100 may include a plurality of non-drive type LiDARs 330.

The LiDAR 330 may detect an object using a time of flight (TOF) technique or a phase-shift technique, with laser as a medium, and may detect a location of the detected object, a distance to the detected object, and a relative speed with respect to the detected object.

The LiDAR 330 may be disposed at an appropriate position on the exterior of the vehicle to detect an object located in front of, behind, or alongside the vehicle.

The ultrasonic sensor 340 may include an ultrasonic wave transmission unit and an ultrasonic wave reception unit. The ultrasonic sensor 340 may detect an object using an ultrasonic wave and detect a position of the detected object, a distance to the detected object, and a relative speed with respect to the detected object.

The ultrasonic sensor 340 may be disposed at an appropriate position on the exterior of the vehicle to detect an object located in front of, behind, or alongside the vehicle.

The infrared sensor 350 may include an infrared light transmission unit and an infrared light reception unit. The infrared sensor 340 may detect an object using infrared light, and detect a location of the detected object, a distance to the detected object, and a relative speed with respect to the detected object.

The infrared sensor 350 may be disposed at an appropriate location on the exterior of the vehicle to detect an object located in front of, behind, of alongside the vehicle.

The processor 370 may control an overall operation of each unit of the object detection device 300.

The processor 370 may detect an object based on an acquired image, and track the object. The processor 370 may execute operations, such as calculation of a distance to an object, calculation of a relative speed with respect to the object, and the like, through an image processing algorithm.

The processor 370 may detect an object based on a reflected electromagnetic wave, resulting from an emitted electromagnetic wave being reflected off the object, and track the object. The processor 370 may execute operations, such as calculation of a distance to the object, calculation of a relative speed with respect to the object, and the like, based on the electromagnetic wave.

The processor 370 may detect an object based on a reflected laser beam, resulting from an emitted laser beam being reflected off the object, and track the object. The processor 370 may execute operations, such as calculation of a distance to the object, calculation of a relative speed with respect to the object, and the like, based on the laser beam.

The processor 370 may detect an object based on a reflected ultrasonic wave, resulting from an emitted ultrasonic wave being reflected off the object, and track the object. The processor 370 may execute operations, such as calculation of a distance to the object, calculation of a relative speed with respect to the object and the like, based on the ultrasonic wave.

The processor 370 may detect an object based on reflected infrared light, resulting from emitted infrared light being reflected from the object, and track the object. The processor 370 may execute operations, such as calculation of a distance to the object, calculation of a relative speed with respect to the object and the like, based on the infrared light.

In some embodiments, the object detection device 300 may include a plurality of processors 370 or may not include any processor 370. For example, each of the camera 310, the radar 320, the LiDAR 330, the ultrasonic sensor 340, and the infrared sensor 350 may include its own processor.

When the processor 370 is not included in the object detection device 300, the object detection device 300 may operate under the control of a processor of a device within the vehicle 100 or under the control of the controller 170.

The object detection device 400 may operate under the control of the controller 170.

The communication device 400 is a device for performing communication with an external device. Here, the external device may be another vehicle, a mobile terminal, or a server.

To perform communication, the communication device 400 may include a transmitting antenna, a receiving antenna, and at least one of a radio frequency (RF) circuit and an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

In some embodiments, the communication device 400 may further include other components in addition to the aforementioned components, or may not include some of the aforementioned components.

The short-range communication unit 410 is a unit for facilitating short-range communications. The short-range communication unit 410 may support such short-range communications using at least one of the following technologies: BLUETOOTH^{™}, radio frequency identification (RFID), infrared data association (IrDA), ultra-wideband (UWB), ZigBee, near field communication (NFC), wireless-fidelity (Wi-Fi), Wi-Fi Direct, wireless universal serial bus(USB), and the like.

The short-range communication unit 410 may construct short-range wireless area networks to perform short-range communication between the vehicle 100 and at least one external device.

The location information unit 420 is a unit for acquiring location information. For example, the location information unit 420 may include a global positioning system (GPS) module or a differential global positioning system (DGPS) module.

The V2X communication unit 430 is a unit for performing wireless communications with a server (vehicle to infrastructure (V2I)), another vehicle (vehicle to vehicle (V2V)), or a pedestrian (vehicle to pedestrian (V2P)). The V2X communication unit 430 may include an RF circuit capable of implementing protocols for communication with an infrastructure (V2I), communication between vehicles (V2V) and communication with a pedestrian (V2P).

The optical communication unit 440 is a unit for performing communication with an external device, with light as a medium. The optical communication unit 440 may include an optical transmission part for converting an electric signal into an optical signal and transmitting the optical signal to the outside, and an optical reception part for converting the received optical signal into the electric signal.

In some embodiments, the optical transmission part may be formed integrally with a lamp provided on the vehicle 100.

The broadcast transceiver 450 is a unit for receiving a broadcast signal from an external broadcast managing server or transmitting a broadcast signal to the broadcast managing server over a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication device 400.

In some embodiments, the communication device 400 may include a plurality of processors 470 or may not include any processor 470.

When the processor 470 is not included in the communication device 400, the communication device 400 may operate under the control of a processor of another device within the vehicle 100 or under the control of the controller 170.

Meanwhile, the communication device 400 may implement a display apparatus for a vehicle together with the user interface device 200. In this instance, the display device for the vehicle may be referred to as a telematics apparatus or an audio video navigation (AVN) apparatus.

The communication device 400 may operate under the control of the controller 170.

The driving operation device 500 is a device for receiving a user input for driving.

In the manual mode, the vehicle 100 may be driven based on a signal provided by the driving operation device 500.

The driving operation device 500 may include a steering input apparatus 510, an acceleration input apparatus 530 and a brake input apparatus 570.

The steering input apparatus 510 may receive an input regarding a driving (ongoing) direction of the vehicle 100 from the user. The steering input apparatus 510 is preferably configured in the form of a wheel, which the user rotates to apply a steering input. In some embodiments, the steering input apparatus may also be configured in the form of a touch screen, a touchpad, or a button.

The acceleration input apparatus 530 may receive an input for accelerating the vehicle 100 from the user. The brake input apparatus 570 may receive an input for decelerating the vehicle 100 from the user. The acceleration input apparatus 530 and the brake input apparatus 570 are preferably configured in the form of a pedal. In some embodiments, the acceleration input apparatus or the brake input apparatus may also be configured in the form of a touch screen, a touch pad, or a button.

The driving operation device 500 may operate under the control of the controller 170.

The vehicle drive device 600 is a device for electrically controlling driving of the various devices and apparatuses within the vehicle 100.

The vehicle drive device 600 may include a power train drive unit 610, a chassis drive unit 620, a door/window drive unit 630, a safety apparatus drive unit 640, a lamp drive unit 650, and an air-conditioner drive unit 660.

In some embodiments, the communication device 600 may further include other components in addition to the aforementioned components, or may not include some of the aforementioned components.

In some examples, the vehicle drive device 600 may include a processor. Each unit of the vehicle drive device 600 may include its own processor.

The power train drive unit 610 may control an operation of a power train apparatus.

The power train drive unit 610 may include a power source drive part 611 and a transmission drive part 612.

The power source drive part 611 may control a power source of the vehicle 100.

For example, in the case where a fossil fuel-based engine is the power source, the power source drive part 611 may perform electronic control on the engine. Accordingly, an output torque and the like of the engine may be controlled. The power source drive part 611 may adjust the engine output torque under the control of the controller 170.

For example, in the case where an electric energy-based motor is the power source, the power source drive part 611 may perform control on the motor. The power source drive part 611 may adjust a rotating speed, a torque and the like of the motor under the control of the controller 170.

The transmission drive part 612 may perform control on a transmission.

The transmission drive part 612 may adjust a state of the transmission. The transmission drive part 612 may change the state of the transmission to Drive (D), Reverse (R), Neutral (N) or Park (P).

In some examples, when an engine is the power source, the transmission drive part 612 may adjust a gear-engaged state in Drive (D).

The chassis drive unit 620 may control an operation of a chassis apparatus.

The chassis drive unit 620 may include a steering drive part 621, a brake drive part 622 and a suspension drive part 623.

The steering drive part 621 may perform electronic control on a steering apparatus within the vehicle 100. The steering drive part 621 may change the driving direction of the vehicle.

The brake drive part 622 may perform electronic control on a brake apparatus within the vehicle 100. For example, the brake drive part 622 may reduce the speed of the vehicle 100 by controlling operations of brakes provided on wheels.

In some examples, the brake drive part 622 may individually control a plurality of brakes. The brake drive part 622 may apply a different braking force to each of the plurality of wheels.

The suspension drive part 623 may perform electronic control on a suspension apparatus within the vehicle 100. For example, when a road surface is uneven, the suspension drive part 623 may control the suspension apparatus to reduce vibration of the vehicle 100.

In some examples, the suspension drive part 623 may individually control a plurality of suspensions.

The door/window drive part 630 may perform electronic control on a door apparatus or a window apparatus within the vehicle 100.

The door/window drive unit 630 may include a door drive part 631 and a window drive part 632.

The door drive part 631 may control the door apparatus. The door drive part 631 may control opening or closing of a plurality of doors included in the vehicle 100. The door drive part 631 may control opening or closing of a trunk or a tail gate. The door drive part 631 may control opening or closing of a sunroof.

The window drive part 632 may perform electronic control on the window apparatus. The window drive part 632 may control opening or closing of a plurality of windows of the vehicle 100.

The safety apparatus drive unit 640 may perform electronic control on various safety apparatuses within the vehicle 100.

The safety apparatus drive unit 640 may include an airbag drive part 641, a seatbelt drive part 642 and a pedestrian protection apparatus drive part 643.

The airbag drive part 641 may perform electronic control on an airbag apparatus within the vehicle 100. For example, when a risk is detected, the airbag drive part 641 may control the airbag to be deployed.

The seatbelt drive part 642 may perform electronic control on a seatbelt apparatus within the vehicle 100. For example, when a risk is detected, the seatbelt drive part 642 may secure passengers in seats 110FL, 110FR, 110RL, 110RR by tightening seatbelts.

The pedestrian protection apparatus drive part 643 may perform electronic control on a hood lift and a pedestrian airbag. For example, upon detection of a collision with a pedestrian, the pedestrian protection apparatus drive part 643 may control the hood lift and the pedestrian airbag to be deployed.

The lamp drive part 650 may perform electronic control on various lamp apparatuses within the vehicle 100.

The air-conditioner drive part 660 may perform electronic control on an air conditioner within the vehicle 100. For example, when the internal temperature of the vehicle is high, the air-conditioner drive part 660 may operate the air conditioner to supply cool air into the vehicle.

The vehicle drive device 600 may include a processor. Each unit of the vehicle drive device 600 may include its own processor.

The vehicle drive device 600 may operate under the control of the controller 170.

The driving system 700 is a system that controls various driving modes (or functions) of the vehicle 100. The driving system 700 may operate in the autonomous mode.

The driving system 700 may include a traveling system 710, a parking-lot departure system 740 and a parking system 750.

In some embodiments, the driving system 700 may further include other components in addition to the aforementioned components, or may not include some of the aforementioned components.

In some embodiments, the driving system 700 may include a processor. Each unit of the driving system 700 may include its own processor.

In some embodiments, the driving system 700 may be a subordinate concept of the controller 170 when it is implemented in software.

In some embodiments, the driving system 700 may conceptually include at least one of the user interface device 200, the object detection device 300, the communication device 400, the vehicle drive device 600, and the controller 170.

The traveling system 710 may perform traveling of the vehicle 100.

The traveling system 710 may perform traveling of the vehicle 100 by providing a control signal to the vehicle drive device 600, in response to reception of navigation information from a navigation system 770.

The traveling system 710 may perform driving of the vehicle 100 by providing a control signal to the vehicle drive device 600, in response to reception of object information from the object detection device 300.

The traveling system 710 may perform driving of the vehicle 100 by providing a control signal to the vehicle drive device 600, in response to reception of a signal from an external device through the communication devivce 400.

The parking-lot departure system 740 may perform a departure maneuver for the vehicle 100.

The parking-lot departure system 740 may perform a departure maneuver for the vehicle 100 by providing a control signal to the vehicle drive device 600, in response to reception of navigation information from the navigation system 770.

The parking-lot departure system 740 may perform a departure maneuver for the vehicle 100 by providing a control signal to the vehicle drive device 600, in response to reception of object information from the object detection device 300.

The parking-lot departure system 740 may perform a departure maneuver for the vehicle 100 by providing a control signal to the vehicle drive device 600, in response to reception of a signal from an external device through the communication device 400.

The parking system 750 may park the vehicle 100 in a parking space (or a parking lot).

The parking system 750 may park the vehicle 100 in a parking space by providing a control signal to the vehicle drive device 600, in response to reception of navigation information from the navigation system 770.

The parking system 750 may park the vehicle 100 in a parking space by providing a control signal to the vehicle drive device 600, in response to reception of object information from the object detection device 300.

The parking system 750 may park the vehicle 100 in a parking space by providing a control signal to the vehicle drive device 600, in response to reception of a signal from an external device through the communication device 400.

The navigation system 770 may provide navigation information. The navigation information may include at least one of map information, information on a set destination, information on a path to the set destination, information on various objects on a path, lane information, and information on a current location of the vehicle.

The navigation system 770 may include a memory and a processor. The memory may store the navigation information. The processor may control an operation of the navigation system 770.

In some embodiments, the navigation system 770 may update prestored information by receiving information from an external device through the communication device 400.

In some embodiments, the navigation system 770 may be classified as a sub-component of the user interface device 200.

The sensing unit 120 may sense the state of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detection sensor, a heading sensor, a gyro sensor, a position module, a vehicle forward/reverse movement sensor, a battery sensor, a fuel sensor, a tire sensor, a steering sensor based on the rotation of a steering wheel, an in-vehicle temperature sensor, an in-vehicle humidity sensor, an ultrasonic sensor, an illumination sensor, an accelerator pedal position sensor, a brake pedal position sensor, and the like.

The sensing unit 120 may acquire sensing signals with regard to vehicle posture information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information on pressure applied to an accelerator pedal, information on pressure applied to a brake pedal, and the like.

The sensing unit 120 may further include an accelerator pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface 130 may serve as a path to various types of external devices that are connected to the vehicle 100. For example, the vehicle interface 130 may include a port that is connectable to a mobile terminal, and may be connected to the mobile terminal through the port. In some examples, the vehicle interface 130 may exchange data with the mobile terminal.

In some examples, the vehicle interface 130 may serve as a path for supplying electric energy to the connected mobile terminal. When the mobile terminal is electrically connected to the vehicle interface 130, the vehicle interface 130 may supply electric energy, supplied from a power supply unit 190, to the mobile terminal under the control of the controller 170.

The memory 140 is electrically connected to the controller 170. The memory 140 may store basic data for each unit, control data for controlling the operation of each unit, and input/output data. Examples of the memory 140 may include various hardware storage devices, such as a ROM, a RAM, an EPROM, a flash drive, a hard drive, and the like. The memory 140 may store various data for the overall operation of the vehicle 100, such as programs for the processing or control by the controller 170.

In some embodiments, the memory 140 may be integrated with the controller 170 or implemented as a subordinate component of the controller 170.

The controller 170 may control an overall operation of each unit of the vehicle 100. The controller 170 may be referred to as an electronic control unit (ECU).

The power supply unit 190 may supply power required to operate each component under the control of the controller 170. In particular, the power supply unit 190 may receive power supplied from a battery inside the vehicle.

At least one processor and the controller 170, which are included in the vehicle 100, may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

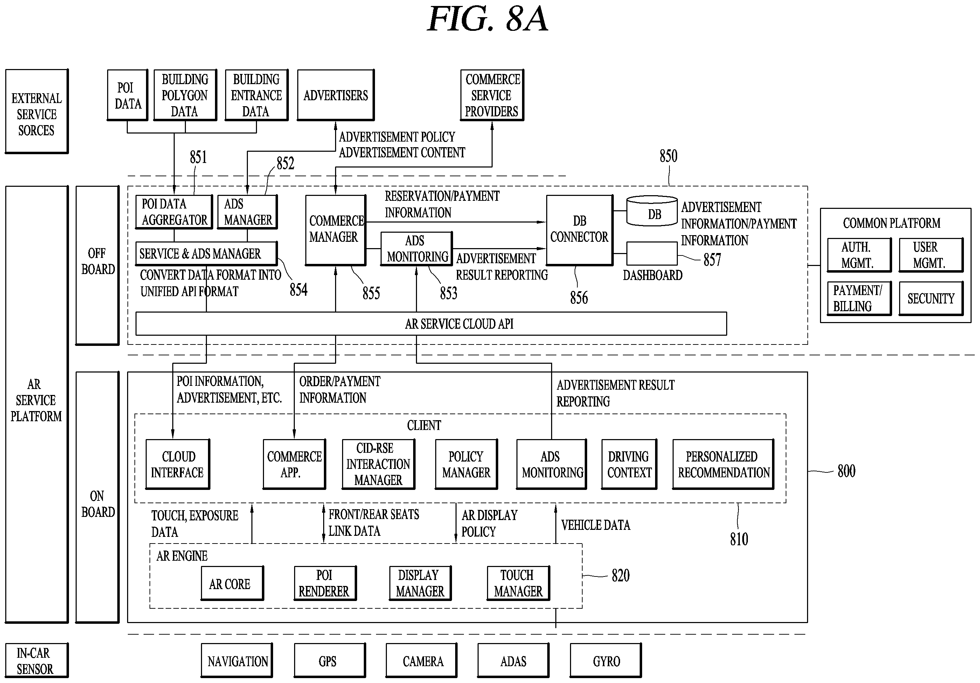

FIG. 8A is a conceptual view for explaining an AR service platform according to the present disclosure.

An AR service platform providing an AR service disclosed herein may be referred to as an AR service system.

The AR service platform may include a server 850 that is disposed outside a vehicle, collects and processes information necessary for an AR service, and transmits the information to the vehicle, and an AR service device 800 that is disposed inside the vehicle and provides the AR service using the information transmitted from the server 850.

The configuration that the server 850 collects and processes information necessary for the AR service and transmits the information to the vehicle may include the meaning that the server 850 collects and processes information necessary for the AR service and transmits the information to the AR service device 800 disposed in the vehicle.

The AR service device 800 may vary information provided through the AR service, based on a situation of the vehicle.

That is, the AR service device 800 according to the disclosure may dynamically adjust (vary) information to be displayed in AR and an amount of information depending on a situation of the vehicle, and select information to be emphasized.

In addition, the AR service platform according to the disclosure may control an AR service provided in the vehicle to be varied depending on specific conditions, such as vehicle conditions, advertisement exposure conditions, and the like.

In the case of the related art AR navigator, when displaying a destination or a major point of interest (POI) on the AR navigator, it is difficult to reflect the latest information due to the use of information stored in map data, and there is a limitation that POI, such as fueling/parking, including real-time properties, is not provided.

On the contrary, the AR service platform of the disclosure may converge vehicle location information, map information, a plurality of sensor data, real-time POI information, advertisement/event information, and the like, and display the converged information on the AR navigator.

As an example, in order to display AR information, the AR service device 800 according to the disclosure may receive AR service information from a server based on a current location of the vehicle and navigation path/guide information, and process the AR service information into a form to be displayed on destination, an AR navigation screen.

As an example, the AR service device 800 may reconfigure real-time AR display information. The AR service device 800 may determine a display format, a size, a location, an exposure method, and the like, of AR content in consideration of a traveling situation (driving environment) to reconfigure service data received from a server to be displayed on the AR navigation screen (e.g., variation of location and size to expose POI according to a driving speed, change of service information exposure location according to a traffic condition, adjustment of display location and exposure time of an AR wall, etc.).

Further, the AR service device 800 may analyze exposure frequency of AR display information through user feedback.

The server 850 may perform a content exposure frequency analysis by collecting user input information (input information such as touch, order, etc.) for AR service content, and adjust a service content exposure policy based on the corresponding information.

With this configuration, various external service contents may be converged to be expressed on the AR navigator, and various services may be provided through POI information including real-time properties.

In addition, various types of AR contents such as advertisements, events, and major landmark information as well as POI information may be displayed.

In addition, a new user experience of the AR navigator may be presented through a UX scenario-based embodiment proposed in the present disclosure.

The present disclosure provides a service platform structure and AR information display method (UX) that dynamically adjust an amount of information (POI data, advertisements) to be displayed in AR according to a vehicle situation and an advertisement exposure condition, a module that collects POI information and commerce service information for AR expression and processes the collected information into a format to be easily rendered in an AR engine, a module that emphasizes specific POI information according to an internal/external situation of the vehicle, a module that collects vehicle situation information and applies a UX policy appropriately to the situation, and an AR engine module that renders an AR object (group POI, mini POI, 3D object, event wall, etc.) according to the device 800 UX policy.

The present disclosure may provide a client module that performs interaction and data transmission/reception between displays of front and rear seats of a vehicle, a service App module that exposes commerce service information associated with POI, a client module that collects user actions on advertisements, such as exposure results, clicks, and the like for AR advertisement objects, and a cloud module that collects/analyzes the user actions on the advertisements, such as the exposure results, clicks, and the like for the AR advertisement objects.

Referring to FIG. 8A, the AR service platform according to the disclosure may include a server 850, which is a component (off-board component) existing outside the vehicle, and an AR service device 800, which is a component (on-board component) disposed inside the vehicle.

First, the server 850 may include a POI data aggregator 851, an advertisement manager (Ads manager) 852, an advertisement monitoring unit (Ads Monitoring) 853, a service and advertisement manager (Service & Ads Manager) 854, a commerce manager 855, a DB connector 856, and a dashboard 857.

The POI data aggregator 851 may receive information necessary for an AR service from a plurality of external servers and convert/integrate the received information into a message format of the AR service platform.

The Ads manager 852 may perform advertisement information/content management and advertisement campaign (ad exposure condition) management.

The advertisement monitoring unit 853 may collect/store advertisement exposure and click results.

The service and advertisement manager 854 may insert advertisement information suitable for an exposure condition into service information to provide to a client.

The commerce manager 855 may collect commerce service interaction/payment information.

The DB connector 856 may store/query advertisement contents, advertisement exposure result information, and commerce payment information.

The dashboard 857 may display a real-time AR service status by visualizing advertisement exposure results/payment details.

In addition, the server 850 may further include an AR service cloud API (or data conversion unit) that converts information transmitted from the AR service device 800 of the vehicle into a data format to be usable by the server, and converts information processed/generated in the server into a data format to be usable by the AR service device 800.

Meanwhile, the AR service device 800 may include a client 810 that includes a cloud interface, a commerce App, a CID-RSE interaction manager, a policy manager, advertisement monitoring, driving context, and personalized recommendation, etc., and an AR engine 820 that includes a POI renderer, a display manager, a touch manager, etc.

The client 810 may receive POI information, advertisements, and the like from the server.

In addition, the client 810 may transmit/receive order/payment information with the server 850 and transmit an advertisement exposure result to the server 850.

The AR engine 820 may transmit to the client 810 data such as the number of touches and the number of exposures with respect to an AR object which is output in AR.

The AR engine 820 may also transmit/receive interlocking data for front/rear seats (CID-RSE) interaction data with the client 810, and output an AR object according to an AR display policy received from the client 810.

In addition, the AR engine 820 may determine a type of an AR object, an output position of the AR object, a type of POI, an output size of the POI, etc. provided through an AR service on the basis of data collected from a gyro sensor, a camera, a communication unit, a navigation, an Advanced Driver Assistance System (ADAS), a GPS, etc.

The on-board AR service device 800 may perform AR rendering of service contents so that data received from the cloud server is displayed in AR on a front camera image.

In addition, the AR service device 800 may mediate data transmission between the server and the AR engine, such as collecting advertisement posting result data from the AR engine and transmitting the data to the server.

The AR service device 800 may also perform CID-RSE (i.e., front/rear seats) interoperation data generated in AR.

The AR service device 800 may perform data management for AR display policies, and specifically, may provide AR display policy data according to a driving situation to the AR engine.

The AR service device 800 may provide situation awareness and personalized service, and specifically, may provide an AR object to the AR engine according to a driving situation (speed, turn-by-turn (TBT), etc.) using in-vehicle data.

In the present disclosure, a description will be given of an example of providing an AR service by outputting AR information (or AR object, AR content, POI information, etc.) to be overlaid on an image captured (received, processed) by a camera disposed in a vehicle.

However, it is not limited thereto, and may be equally/similarly applied to various methods of implementing augmented reality, such as outputting AR information directly on a windshield of a vehicle to overlap a space of the real world, or outputting AR information through a head-up display (HUD), on a driver or passenger (occupant) basis.

Input data (input information) used to provide the AR service and output data (output information) provided through the AR service platform are as follows.

First, types of input data may include map information (navigation information), service content information (POI, advertisement, etc.), dynamic information, vehicle sensor information, historical information, and driving-related information.

The map information (navigation information) may include route information (navigation route) to a destination, guidance information (Turn-by-Turn), a shape of road ahead (road/lane), and a plurality of map attribute information (road type/attribute, width, curvature, slope, speed limit, etc. of road and lane, and the like), localization object information (road marking, traffic sign, etc.), and the like

The service content information (POI, advertisement, etc.) may include POI information received from a plurality of service providers, advertisement information that can be provided at a current location, and real-time information for reservation/payment services of gas stations, charging stations, parking lots, and the like.

The dynamic information may include traffic information (road-unit traffic, lane-unit traffic), event information (accident, hazard warning, etc.), weather information, V2X (V2V, V2I), etc.

The vehicle sensor information may include current location information (GPS/DR), camera input information (ADAS information, object recognition information), and V2X (real-time surrounding information that can be collected through V2V and V2I).

The historical information may include information related to past driving routes, traffic history (e.g., traffic per time zone), communication rate according to zone and time, and the like.

The driving-related information may include a driving mode (manual, autonomous driving, semi-autonomous driving, whether to operate an ADAS function, etc.), whether a destination or via-point has entered, whether to enter a parking lot, and the like.

Output information that may be provided through the AR service platform may include current location/route-based AR service display data.

The current location/route-based AR service display data may include information related to a point (location where an advertisement can be displayed in AR on a route (highlighting AR Wall, POI building), selectable AR building information (selectable main building information such as landmarks), general POI information (POI summary information such as icons or speech bubbles), remote POI information (displaying distance/direction of important POI information that does not exist on the route but is helpful for driving), display information output when multiple POIs exist in the same building, information related to a destination building and a real-time parking lot status, real-time status information of gas stations/charging stations, location-based advertisement/event information, and the like.

The AR service platform according to the present disclosure may filter AR service information according to real-time information and determine a display method.

Specifically, the AR service platform may determine the number of POI to be exposed in real time based on driving speed, POI overlap removal, size adjustment, exposure time, and the like.

In addition, the AR service platform may determine a POI exposure method according to risk information recognition, and specifically, may dynamically change a POI display method depending on an accident, construction, a situation of recognizing a plurality of moving objects, and the like.

The AR service platform may dynamically change a POI display position when a situation in which AR display visibility is deteriorated due to traffic occurs.

The AR service platform may reconstruct front/rear-seat (CID-RSE) AR display data. For example, the AR service platform may reconstruct the CID-RSE AR display data such that AR service information is minimized on the front-seat display and all information to be displayed is displayed on the rear-seat display.

The operation/function/control method of the AR service platform may be implemented by the server included in the AR service platform or the AR service device, or may be implemented by an organic interaction between the server and the AR service device.

Hereinafter, a more detailed description of the configuration of the server 850 of the AR service platform will be given with reference to FIG. 8A.

The service & Ads manager 854 may perform a client request function, aggregation of POI information and advertisement information (data processing & aggregation), and a client respond function.

Specifically, the client request function may include request/reception of POI information (location, category) from a unified API or request/reception of destination entrance location information (one selected from destination coordinates/address/id) from the unified API.

Here, the unified API refers to an API (to minimize client variation) defined in an AR service cloud that is not dependent on a specific data provider.

The function of aggregating POI information and advertisement information (data processing & aggregation) may include aggregation of POI information and advertisement information within a radius of 000m from a location requested from a client (data manager, Ads manager), or aggregation of destination entrance location and POI advertisement information requested from the client (data manager, Ads manager).

Specifically, the function of aggregating POI information and advertisement information may include a function of matching POI information with advertisement information including information regarding a building wall and an event wall, or filtering a plurality of POIs in the server according to priorities when the plurality of POIs are present in the same building (e.g., excluding other POI information except for partner companies).

Here, a filtering criterion may include assigning priorities to POIs, respectively, and comparing the priorities of the POIs.

The client response function may include transmitting POI information and advertisement information to a unified API or transmitting destination entrance location and advertisement information to the unified API.

A data manager (not shown) included in the server 850 may perform a POI information collection/forward function, a building shape (polygon) information collection/forward function, and a destination entrance information collection/forward function.

The POI information collection/forward function may include a function of requesting POI information from a third party API or forwarding (to service & Ads aggregator) the POI information received from the third party API (by converting the same into a unified API response format).

The building shape (polygon) information collection/forward function may include a function of requesting building contour information from the third party API/data set, or forwarding (to service &Ads aggregator) POI information received from the third party API (by converting the same into a unified API response format).

The destination entrance information collection/forward function may include a function of requesting destination entrance information from the third party API or forwarding (to service & Ads aggregator) the destination entrance information received from the third party API (by converting the same into a Unified API response format).

The advertisement manager 852 may provide a partner (advertisement) company management interface, an advertisement campaign management interface, and an advertisement content management interface.

The advertisement monitoring unit 853 may perform a function of receiving advertisement effect measurement feedback and a function of transmitting advertisement information.

The partner (advertisement) company management interface may perform a POI advertiser management (advertiser information addition/modification/deletion) and a general advertiser management (advertiser information addition/deletion).

A POI support advertisement format may include a brand POI pin, a building wall, 3D rendering, an event wall, etc. and a support advertisement format (general support advertisement format) of a brand advertisement (e.g., Coca-Colar advertisement, etc.) that is not involved in an actual POI/location may be an event wall.

The advertisement campaign management interface may perform addition/modification/deletion of an advertisement campaign (an advertisement location, type, time, etc.).

The advertisement content management interface may perform addition/modification/inquiry/deletion of content (POI brand icon image, building wall image, event wall image/video, 3D rendering image) for each advertisement format.

The function of receiving advertisement effect measurement feedback may include a function of receiving advertisement exposure feedback transmitted by the client and forwarding it to a DB manager (CPC/CMP/CPT&P).

The advertisement information transmitting function may include a function of searching for and transmitting advertisement campaign information to be exposed within a radius of 000 m from a location requested by the service & Ads aggregator (in case of CPT&P, transmitting only advertisements that meet a time condition).

The commerce manager 855 may perform a client interoperating function, an external commerce service interoperating function, and a payment information management function.

The client interoperating function may include a function of receiving a request by interoperation with the client through the unified API, converting the request received through the unified API into an external commerce API specification, converting data received from an external API into a message format of the unified API, and forwarding the data to the client.

The commerce manager may convert the request received through the unified API into the external commerce API specification and perform an external service interoperating function based on the converted result.

Converting the data received from the external API into the message format of the unified API may mean a task of converting data received through the external service interoperation into the format of the unified API.

The external commerce service interoperating function may be configured to perform request and result reception for a list of stores adjacent to a current location and meta information thereof, request and result reception for detailed information regarding a specific store from the list, request and result reception for reservations/orders, request and result reception for a service usage status, and link (interoperation) and result reception for membership information of a commerce service.

Here, the request and result reception for the service usage status may be used for sequence management and AR message pop-up according to the service use status (completion of reservation / entering a parking lot / parking in progress / leaving a parking lot / cancellation of reservation).

The link and result reception for membership information of the commerce service may be used for linking information between commerce service members ↔ AR service members (OEM connected service members).

The payment information management function may include a function of collecting payment details (content, amount) for an external commerce service and charging a fee to an external commerce company based on the payment details.

The database (DB) connector 856 may perform an advertisement effect measurement data management function, a commerce data management function, an advertiser data management function, an advertisement content data management function, and an advertisement location data management function.

The advertisement effect measurement data management function may save/delete log data related to CPC/CPM/CPT&P and perform data search (by POI, by brand, by time, by advertisement type).

The commerce data management function may save/delete payment details (contents, amount) made in an external commerce service and perform data search (by POI, by brand, by time, by advertisement type).

The advertiser data management function may perform storage/modification/deletion/inquiry of advertiser information and advertisement campaign settings for each advertiser.

The advertisement content data management function may store/modify/delete/retrieve advertisement contents in association with advertiser information.

The advertisement location data management function may manage event wall section coordinates and building wall coordinates (by brand) for displaying AR advertisements, and may divide such coordinates into coordinates registered by the user and specific coordinates obtained through interoperation with an API of a company/

The dashboard (service dashboard) 857 may perform an advertisement effect measurement data visualization function and a commerce service data visualization function.

The advertisement effect measurement data visualization function may provide CPC: a chart for total clicks on advertisement by company/brand (checkable by period), CPC: an aggregate chart for total clicks on advertisement (checkable by period), CPM: a chart for total advertisement impressions by company/brand (checkable by period), CPM: an aggregate chart for total advertisement impressions (checkable by period), CPT&P: a chart for clicks on advertisement by company/brand (checkable by period), and CPT&P: a chart for advertisement impressions by company/brand (checkable by period).

Such charts may be provided in various ways, such as bar graphs, line graphs, pie charts, word graphs, or geospatial graphs.

CPT&P refers to billing per time other than the number of clicks or impressions, but may be used as data to measure an exposure effect.

The commerce service data visualization function may provide a chart for a cumulative amount of payments by company (checkable by period) and a chart for a total cumulative amount of payments (checkable by period).

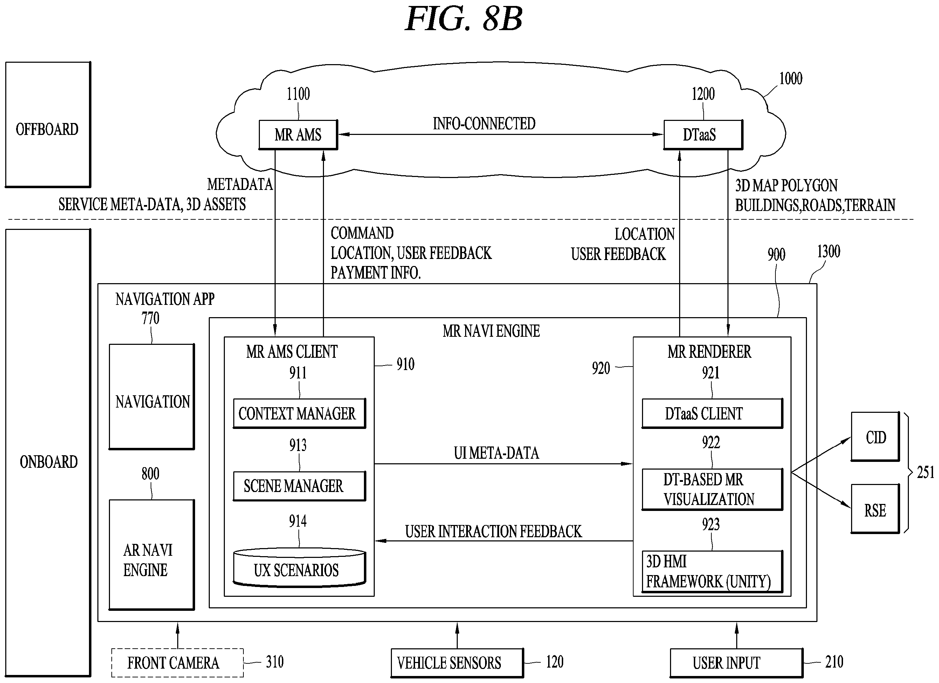

FIG. 8b is a conceptual view illustrating an MR service platform for providing an MR service according to the present disclosure.

The present disclosure may provide a mixed reality (MR) service platform capable of providing an MR automotive metal service (MR AMS) (hereinafter, also referred to as an MR service).

The MR service platform may be referred to as an MR service system, an MR navigation system, an MR platform, an MR system, or the like.

The MR service platform refers to a platform capable of providing a service based on mixed reality, and may include several independent elements.

For example, the MR service platform may include an MR service device 900 (or referred to as an MR navigation engine) which is on board the vehicle, an MR AMS (hereinafter, referred to as an MR AMS server) server 1100 and a digital twin as a service (DTaaS) server 1200 which are disposed on an external server end (or cloud end) off-board the vehicle.

The MR service device 900 may include an MR AMS client 910 and an MR renderer 920.

The MR service described herein may be understood as a mixed reality navigation service for a vehicle. That is, the MR service platform of the present disclosure may provide an interface for a vehicle implemented in mixed reality to a user who is onboard a vehicle.

The MR service provided by the MR service platform of the present disclosure may provide a digital world experience through a display in the vehicle while driving in an actual world.

Specifically, the MR service may interactively provide a driver with directions, safe driving, a point of interest (POI), and an entertainment user experience in a virtual 3D space in which real-world information is fused with the digital world.

Through this, the MR service platform of the present disclosure may provide a variety of user experiences (UXs) deviating from space-time constraints compared to camera-based (or head-up display (HUD)-based) augmented reality (AR) in the related art.

Here, the digital world means a digital twin or a digital twin smart city, and the real world information may include infrastructure data such as Vehicle to Everything (V2X) and Cooperative-Intelligent transport Systems (C-ITS), and/or surrounding data perceived through sensors disposed in an autonomous vehicle.

In addition, the convergence described above may include a conception of converging sensor data of vehicles and infrastructures, in addition to the MR service cloud 1000 (or MR AMS cloud) and the MR service device 900, to implement the MR service platform according to the present disclosure.

In addition, "interactive" should be understood as a concept including not only mixed reality navigation, but also high-quality 3D image rendering and user interaction.

On the other hand, mixed reality (MR) described herein may mean an environment in which virtual reality is grafted to the real world and physical objects in the real world and virtual objects can interact with each other.

Mixed reality (MR) may include the meaning of augmented reality (AR) in which virtual information is added based on reality and augmented virtuality (AV) in which reality information is added to a virtual environment.

In other words, a smart environment in which reality and virtuality are naturally connected to each other may be provided to provide the user with a rich experience. For example, the user may interact with a virtual pet placed on his or her palm or play a game by creating a virtual game environment in a real room. It may also be possible to virtually rearrange furniture in home, or create an environment where remote people come and work together.

A mixed reality automotive meta service (MR AMS) using mixed reality (MR) according to an embodiment of the present disclosure may express a future driving route as a preview to help a user prepare for road shapes and actions in advance.

In addition, the mixed reality automotive meta service (MR AMS) using the mixed reality (MR) according to an embodiment of the present disclosure may improve advertising effects or induce service usage rate improvement by observing a specific point of interest (POI).

In addition, the mixed reality automatic meta service (MR AMS) using mixed reality (MR) according to an embodiment of the present disclosure may not be dependent on a specific map company, and may allow data from various map companies to be fused with one another.

The present disclosure may provide an MR navigation function as one of the mixed reality automotive meta services.

Since the MR navigation function is implemented in a virtual world rather than overlapping an augmented reality object on a real world, it may be possible to solve problems such as front occlusion and difficulties in achieving matching quality that occur in AR navigation.

Accordingly, the present disclosure may improve a user experience (UX) by effectively expressing various contexts that have been difficult to express in the existing navigation through the MR navigation function.

To this end, the MR service platform of the present disclosure may provide an MR context management method, and a method and system of acquiring metadata and 3D assets for providing an MR AMS.

The MR service platform of the present disclosure may render related service metadata and 3D assets to MR navigation by defining MR contexts required in a digital world and modeling service metadata to acquire the MR contexts.

Accordingly, the present disclosure may provide a digital world experience through a display in the vehicle while driving in an actual world, and recommend and provide various additional human machine interface (HMI) services to the user by utilizing the improved visibility and watchfulness of the MR navigation.

Hereinafter, an MR service platform according to an embodiment of the present disclosure for providing the foregoing MR service will be described.

Referring to FIG. 8B, the MR service platform (or MR service system) according to the present disclosure may include an MR service cloud 1000 disposed outside the vehicle and an MR service device 900 disposed inside the vehicle.

The MR service cloud 1100 disposed outside the vehicle (Offboard) may include at least one of a Mixed Reality Automotive Meta Service (MRAMS) server 1100 and a Digital Twin as a Service (DTaaS) server 1200.

The MR service device 900 disposed inside the vehicle (Onboard) may include an MR AMS client 910 and an MR renderer 920.

The MR service device 900 may interact with the AR service device 800 and the navigation system 770 to provide a navigation function (or a navigation application).

Information required for the navigation function may be received through the camera 310, the sensing unit 120, and a user input (or user request) received through the user input unit 210 provided in the vehicle.

Furthermore, the information required for the navigation function may be received through the MR service cloud 1000 provided outside the vehicle (offboard), and information sensed or processed in the vehicle may be transmitted to the MR service cloud 1000 to receive the information required for each vehicle.

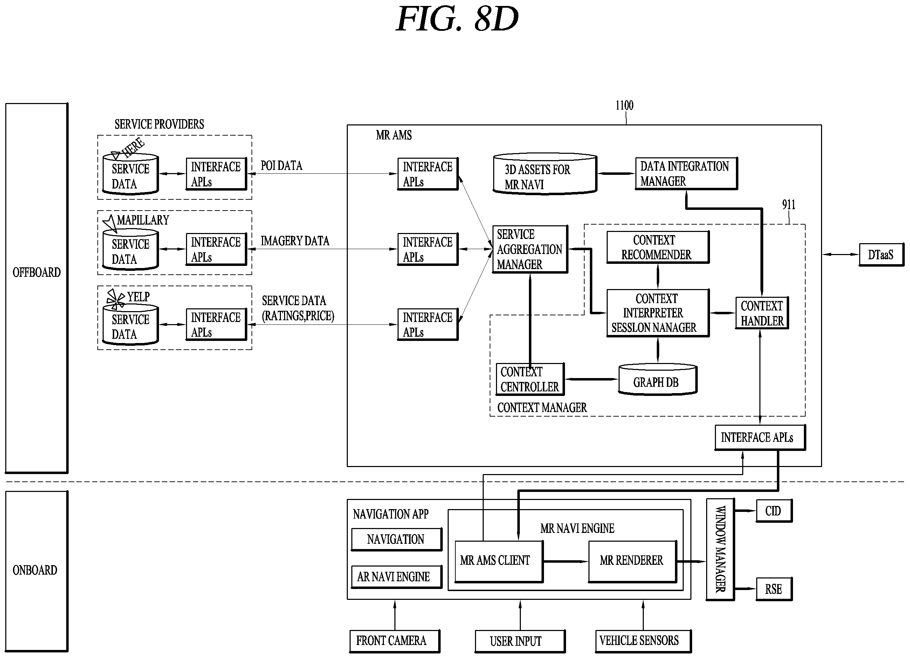

The MR AMS server 1100, as shown in FIG. 8D, may be connected to various service providers 1300a, 1300b, and 1300c that provide Online map services such as Open Street Map (OSM), Mapbox, HERE, WRLD, BingMAP, etc. The MR MAS server 1100 may also aggregate shape information of each building (e.g., floor footprint information and height information of a building) which is included in a map based on results of aggregating map data provided from the connected service providers 1300a, 1300b, and 1300c, and provide the aggregated information to the DTaaS server 1200. Here, the DTaaS server 1200 may refer to a server or apparatus that provides a service using DTaaS, that is, a digital twin map.

The DTaaS may be abbreviated from Digital Twin as a Service or Digital Transformation as a Service.

Meanwhile, the DTaaS server 1200 may be connected to a POI database in which POI service data for each building or each region included in map information is stored. In addition, the DTaaS server 1200 may be connected to a 3D model database in which data of a 3D polygon model (or a three-dimensional (3D) polygon map) for each building included in the map information is stored. Here, the three-dimensional (3D) polygon model, which is a polygon model capable of providing a building volume, may be a polygon model in which a texture is not defined on a surface thereof. The DTaaS server 1200 may receive service data related to POI from the connected POI database, and may receive data of 3D polygon models of respective buildings included in the map information of a region from the connected 3D model database.

The processor (not shown) of the MR service device 900 may receive various information related to the driving of the vehicle from the object detection device 300, the sensing unit 120, and the navigation system 770. For example, the processor may receive information related to an object detected at the front, rear, or side of the vehicle from the camera 310 of the object detection device 300.

In addition, the processor may receive information related to vehicle speed, a driving direction of the vehicle, a current location (GPS) of the vehicle, etc. from the sensing unit 120 which includes sensors connected to each component of the vehicle including the traveling system 710. Furthermore, information related to the driving path of the vehicle may be provided from the navigation system 770.

Meanwhile, the MR service device 900 and the DTaaS server 1200 may be connected through MR AMS interfaces (Interface APIs). Here, the MR service device 900 and the interface APIs of the MR AMS may be connected through a wireless network connection. In this case, the MR AMS server 1100 may be a network server or a cloud server connected to the MR service device 900 in a wireless manner.

When connected to the MR AMS server 1100 as described above, the MR service device 900 may provide at least part of information received from a component (e.g., the vehicle camera 310, the sensing unit 120, or a user input received from the user input unit 210) connected thereto to the MR AMS server 1100 through a network connection. Then, the MR AMS server 1100 may provide three-dimensional map data for providing mixed reality to the MR service device 900 in response to the provided information.

For example, the MR service device 900 may transmit information on objects detected around the vehicle, and information on a speed, a direction of the vehicle, and a current location of the vehicle. Furthermore, information on a driving path may be provided to the MR AMS server 1100. Then, the MRAMS server 1100 may provide the three-dimensional map data of an region according to the current location of the vehicle to the MR service device 900 based on the information provided from the MR service device 900.

In this case, the MR AMS server 1100 may determine POI information based on a current location of the vehicle, a speed of the vehicle, and a driving path of the vehicle, and provide three-dimensional map data further including the determined POI information in the three-dimensional building map. In addition, the MR AMS server 1100 may provide the MR service device 900 with 3D map data, which further includes information related to situations around the vehicle, based on provided information of objects around the vehicle.

Meanwhile, the MR service device 900 may render a mixed reality image based on the three-dimensional map data received from the MR AMS server 1100. For an example, the MR service device 900 may control the MR renderer 920 to display a three-dimensional map screen including models of buildings around the vehicle based on the received three-dimensional map data. Furthermore, the MR renderer 920 may display a graphic object corresponding to the vehicle on the three-dimensional map screen, and display graphic objects corresponding to the received POI data and environment information around the vehicle on the three-dimensional map screen.

Therefore, an image of a virtual environment (i.e., a mixed reality (MR) image, or MR navigation screen, or MR navigation interface) including a three-dimensional building model similar to a current vehicle and a shape of a building around the vehicle and a graphic object corresponding to the vehicle may be displayed on a display 251 provided in the vehicle, for example, a center information display (CID), a head up display (HUD), rear sheet information (RSI), or rear sheet entertainment (RSE).

In this case, information related to driving of the vehicle and an environment around the vehicle may be provided to a driver through the virtual environment. Through the three-dimensional map information, that is, a digital twin map (hereinafter referred to as a DT map), the MR service device 900 according to an embodiment of the present disclosure may provide a mixed reality service to the driver.

Meanwhile, the MR AMS server 1100 may determine three-dimensional map data and three-dimensional map data, and POI information that can be provided along with the dimensional map data or environment information around each vehicle based on information collected from the MR service device 900 provided in one vehicle as well as the MR service devicees 900 provided in a plurality of vehicles. In this case, the MR AMS server 1100 may collect information from a plurality of vehicles in the form of a cloud server, and generate three-dimensional map data for mixed reality based on the collected information. The MR AMS server 1100 may also be configured to provide the MR service to at least one of MR service devices 900 disposed in different vehicles on the basis of the generated 3D map data.

Therefore, for convenience of description, hereinafter, a cloud or server, including the MR AMS server 1100 and the DTaaS server 1200, which provides metadata for providing a mixed reality service (e.g., service metadata, three-dimensional asset), and three-dimensional map information, that is, a digital twin map (DT map) such as a three-dimensional polygon map and a digital twin map, will be referred to as an MR service cloud 1000.

As shown in FIG. 8B, the MR service device 900 (or MR navigation engine) may include an MR AMS client 910 and an MR renderer 920.

In addition, in order to implement an MR navigation function, which is one of the MR services, the MR service device 900 may transmit and receive data to and from the AR service device 800 (or AR engine) and the navigation system 770 provided in the vehicle.

The MR AMS client 910 may include a context manager 911, a scene manager 913, and a UX scenario database 914.

Furthermore, the MR renderer 920 may include a DTaaS client 921, an MR visualization unit 922, and a three-dimensional HMI framework 923.

The MR AMS client 910 may collect vehicle location information, user input, user feedback information, payment information, etc. and transmit the collected information to the MR AMS server 1100 existing outside the vehicle.

The MR AMS server 1100 may transmit at least one of metadata, service metadata, and 3D assets required to provide MR services to the MR AMS client 910, based on the information received from the MR AMS client.

The MR AMS client 910 may transmit the data received from the MR AMS server 910 to the MR renderer 920.

The MR renderer 920 may create a digital twin map using a 3D polygon map received from the DTaaS server 1200 and images received from the MR AMS client 910 or the camera 310 installed in the vehicle.

In addition, the MR renderer 920 may render the data received from the MR AMS client 920 into MR objects that can be overlaid on the digital twin map, and generate an MR image by overlaying the rendered MR objects onto the digital twin map.

Then, the MR renderer 920 may output the generated MR image to the display 251 disposed in the vehicle.

All elements described herein may be implemented as separate hardware modules, and may be understood as elements implemented in units of blocks in a software configuration as necessary.

Hereinafter, each component constituting the MR service platform will be described in more detail with reference to the accompanying drawings.

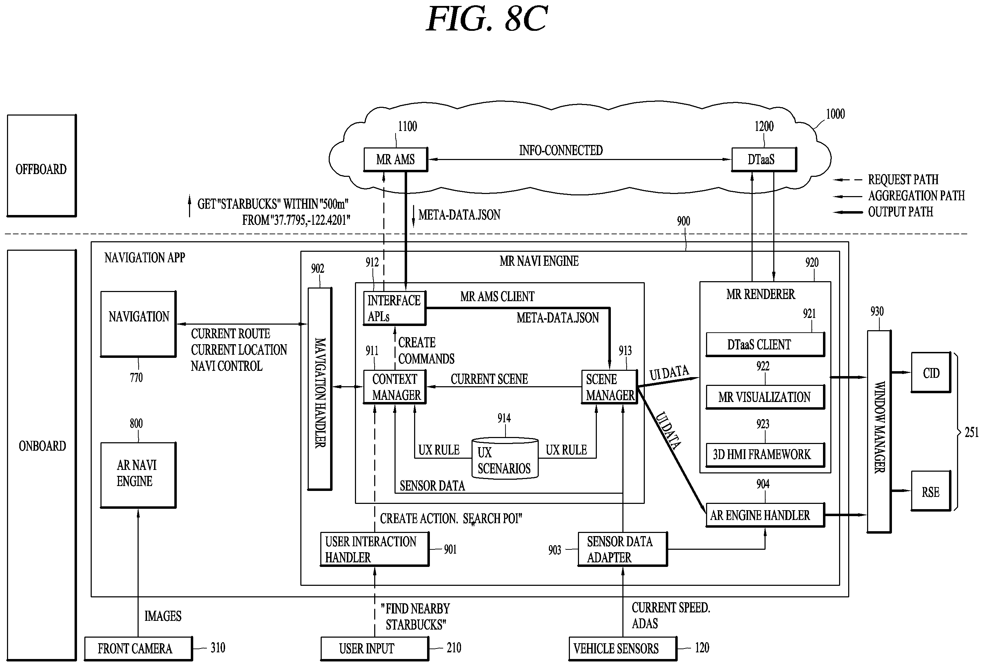

FIG. 8C is a conceptual view illustrating an MR AMS client according to the present disclosure.

The MR AMS client 910 may be disposed in a vehicle and may provide a Mixed Reality Automotive Meta Service (MR AMS).

The MR AMS client 910 may include a context manager 911 configured to request a context corresponding to a user request (or user input) from the MR AMS server 1100 disposed outside the vehicle, a scene manager 913 configured to manage MR scene information to be output to the display 251 disposed in the vehicle, and a UX scenario database 914 configured to provide UX rules to at least one of the context manager 911 and the scene manager 913.

Furthermore, the MR AMS client 910 may further include an interface API 912 that calls a function for communicating with the MR AMS server 1100 provided outside the vehicle.

The interface API 912 may include one or more functions configured to perform communication with the MR AMS server 1100. The interface API 912 may convert a data format or message format using these functions to transmit data to the MR AMS server 1100 or convert a format of data received from the MR AMS server 1100.

The interface API 921 may transmit a context request output from the context manager 911 to the MR AMS server 1100, and receive a 3D asset corresponding to the context requested by the MR AMS server 912.

Here, the context may indicate situation information and may mean information corresponding to a situation the vehicle is in. Furthermore, the context may include the concept of contents.

The 3D asset may mean 3D object data corresponding to the requested context. In addition, the 3D asset may indicate a 3D graphic object that is overlaid on a digital twin image (or digital twin map) or is newly updatable.

The MR AMS client 910 may be included in the MR service device 900.

The MR service device 900 may include a user interaction handler 901 that generates an action corresponding to a user input and transmits the action to the context manager 901 when the user input is received through the input unit 210 provided in the vehicle.

The user interaction handler 901 may be included in the MR service device 900 or included in the MR AMS client 910.

For example, when a user input of "Find nearby Starbucks" is received through the input unit 210 of the vehicle, the user interaction handler 901 may generate an action (e.g., "Search POI") corresponding to the user input, and transmit the generated action to the context manager 911 disposed in the MR AMS client 910.

For example, the action may be determined by an operation that matches a term included in the user input. The action may also be named a command or control command.

The context manager 911 may generate a command for requesting a context corresponding to the action received from the user interaction handler 901 and transmit the command to the MR AMS server 1100 through the interface API 912.

The command may be generated based on an action (e.g., "Search POI") received from the user interaction handler 901, and as an example, may be defined to include a current location of the vehicle, a type of POI to be found, and radius information (e.g., GET "Starbucks" (type of POI) WITHIN "500m" (radius) FROM "37.7795, -122.4201" (current location of vehicle (latitude, longitude)).

The context manager 911 may receive current scene information, which is currently being output in the vehicle, from the scene manager 913 and receive UX rules from the UX scenario database 914.

Furthermore, the context manager 911 may receive navigation information including a current path and a current location from a navigation handler 902 that handles information of the navigation system 770.

The navigation handler 902 may be provided in the MR service device 900 or may be provided in the MR AMS client 910.

The context manager 911 may generate a command for requesting the context based on at least one of the current scene information, the UX rule, and the navigation information.

The current scene information may include screen information currently being displayed on the display 251 of the vehicle. For example, the current scene information may include information related to an MR image in which an MR object and an MR interface are overlaid on a digital twin map.

In addition, at least one of the context manager 911 and the scene manager 913 of the present disclosure may receive sensor data processed through a sensor data adapter 903, which processes information sensed by the sensing unit 120 of the vehicle.

The sensor data adapter 903 may be included either in the MR service device 900 or in the MR AMS client 910. The sensor data adapter 903 may transmit the processed sensor data to the AR engine handler 904 that handles data transmitted to the AR engine (or AR service device) 800.

The interface API 912 may receive, from the MR AMS server 1100, metadata of the context corresponding to the command and/or a 3D asset corresponding to the context.

Then, the interface API 912 may transmit the received metadata and/or 3D asset to the scene manager 913.

The scene manager 913 may generate UI data using the UX rules received from the UX scenario database 914 and the metadata and 3D assets received from the interface API 912.

Then, the scene manager 913 may transmit the generated UI data to the MR renderer 920 that renders the data to be displayed as a mixed reality (MR) or mixed reality image on the display 251 provided in the vehicle.

In addition, the scene manager 913 may further transmit the generated UI data to the AR engine handler 904 that is configured to handle the AR service device 800 disposed in the vehicle.

The UX rules stored in the UX scenario database 914 may refer to information related to rules, shapes, formats, or templates for generating a screen, UX, or user interface to be provided in the MR service device. These UX rules may be previously defined for each type of data.

Also, the UX rules may be updated or modified by a user or administrator.

FIG. 8D is a conceptual view illustrating an MR AMS server according to the present disclosure.

Referring to FIG. 8D, the MR AMS server 1100 which is disposed outside the vehicle and provides the MR AMS may include an interface API 1101 that calls a function for communicating with the MR AMS client disposed in the vehicle, a service aggregation manager 1110 that requests and receives, from a service provider, a context corresponding to a request received from the MR AMS client, and a data integration manager 1120 that loads 3D assets corresponding to the received context from a database (3D assets for MR navigation database 1130.

The interface API 1101 may be named a server interface API 1101 to be distinguished from the interface API 912 of the MR AMS client 910 disposed in the vehicle.

Also, the interface API 912 of the MR AMS client 910 may be named a vehicle interface API or an MR AMS client interface API.

The interface API 1101 disposed in the MR AMS server 1100 may transfer a user request (or context request) received from the MR AMS client to the service aggregation manager 1110.

The interface API may include a first interface API 1101 that calls a function for performing communication with the MR AMS client 910, and second interface APIs 1102a, 1102b, and 1102c through which the service aggregation manager 1110 calls functions for performing communication with service providers 1300a, 1300b, and 1300c.

The second interface API 1102a, 1102b, 1102c may receive service data and/or map data through an interface API provided in the service provider 1300a, 1300b, 1300c.

The second interface API 1102a, 1102b, 1102c and the interface API provided in the service provider 1300a, 1300b, 1300c may perform mutual data transmission and reception, and may include a function defined to convert data format or message format, and may convert data format or message format using such a function to transmit and receive data to and from each other.

The service aggregation manager 1110 may request the requested context from different service providers based on a type of context requested by the MR AMS client 910 provided in the vehicle.

Specifically, the service aggregation manager 1110 may request a first type of context from the first service provider 1300a that provides the first type of context when the requested type of the context is the first type of context, and request a second type of context from the second service provider 1300b that provides the second type of context when the type of the requested context is the second type of context.

For example, when the type of the requested context is related to POI (e.g., "Starbucks"), the service aggregation manager 1110 may request the context related to the POI (or POI data) from the first service provider 1300a, and receive the requested context from the first service provider 1300a.

On the other hand, when the type of the requested context is a view of a certain street, the service aggregation manager 1110 may request context (or imagery data) related to the view of the certain street from the second service provider 1300b that provides information related to the view of the street, and receive the requested context from the second service provider 1300b.

Further, when the type of the requested context is a certain service, the service aggregation manager 1110 may request context (or data for the service for the service (e.g., service ratings or prices) from the third service provider 1300c that provides information related to the service, and receive the requested context from the third service provider 1300c.

Furthermore, the interface API 1101 may request expanded service API calls from the service aggregation manager 1110 based on the service (or context request) requested by the MR AMS client 910.

The service aggregation manager 1110 may request for information corresponding to the expanded service from the service providers 1300a, 1300b, and 1300c based on the expanded service API request, and receive the requested information. The service aggregation manager 1110 may generate a service API using the received information and output the generated service API to the data integration manager 1120.

The data integration manager 1120 may perform data enhancement based on the service API received from the service aggregation manager 1110, and generate a metadata package for the requested context to transmit the generated metadata package to the MR AMS client 910 of the vehicle through the interfaces API 1101.

The metadata package may include the aforementioned 3D assets and service metadata. Here, the service metadata may mean metadata for providing a service corresponding to a requested context.

The interface API 1101 may transmit the 3D assets loaded from the data integration manager 1120 to the MR AMS client 910.

Meanwhile, the MR AMS server 1100 of the present disclosure may further include the context manager 911 described above.

That is, the context manager 911 may be included in the MR AMS client 910 to be provided on the vehicle side, may be included in the MR AMS server 1100 to be provided on the server (cloud) side, or may be provided on both sides.

When included in the MR AMS server 1100, the context manager 911 may be configured to manage context corresponding to a request received from the MR AMS client 910.

The context manager 911 may include a context handler 911a that handles and parses context requests, a context interpreter 911b that manages sessions for interpreting the context requests and generates a context set using data models, and a context graph DB or MR context DB 911c that stores the data models.

Here, the context handler 911a may receive a user request input to the MR AMS client through the interface API 1101, parse the received user request, and transmit the parsed user request to the context interpreter 911b.

After generating a session, the context interpreter 911b may generate a query for context requests corresponding to the user requests, and request and receive a context data models corresponding to the query from a context graph database 911c.

The context interpreter 911b may request a context corresponding to the context data model from the service aggregation manager 1110, and the service aggregation manager 1110 may request and receive context data corresponding to the context data model from the service provider 1300a, 1300b, 1300c.

The service aggregation manager 1110 may request and receive a three-dimensional asset (and/or service meta data) corresponding to the requested context from the data integration manager 1120, and transmit context data received from the service provider and the three-dimensional asset (and/or service metadata) received from the data integration manager to the context interpreter 911b.

The context interpreter 911b may transmit the received context data and 3D assets to the MR AMS client 910 disposed in the vehicle through the context handler 911a and the interface API 1101.

Meanwhile, the context manager 911 may further include a context recommender 911d that extracts a recommended context based on the generated context set, and a context controller 911e (or context tracker) that manages a context to be periodically acquired.

When the completed context data includes information that is unavailable for a specific service, the context recommender 911d may request the context interpreter 911b to generate a query for recommending a service capable of substituting the specific service.

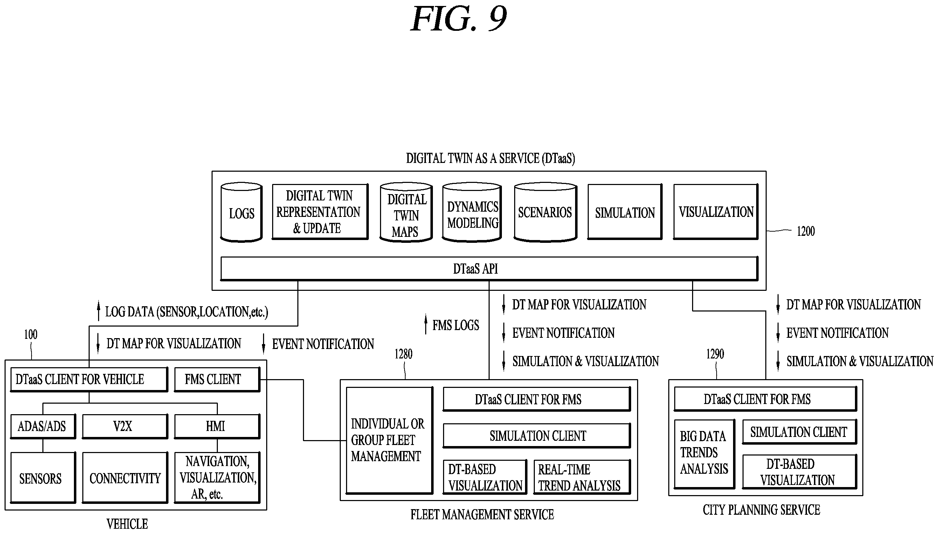

FIG. 9 is a conceptual view illustrating a DTaaS server according to the present disclosure.

Referring to FIG. 9, the Digital Twin as a Service or Digital Transformation as a Service (DTaaS) server 1200 of the present disclosure may be disposed outside the vehicle and provide an MR AMS. Specifically, the DTaaS server 1200 may provide a digital twin map or data (e.g., 3D polygon map or all kinds of information regarding objects overlaid on a digital twin), which is necessary to create the digital twin map.

The DTaaS server 1200 may include a DTaaS API 1210 that calls a function for communication with the MR service device 900 disposed in the vehicle, a digital twin maps DB 1220 that stores a digital twin map and a renderable 3D polygon map to be provided to the MR service device, and a processor 1280 that transmits to the MR service device a 3D polygon map corresponding to location information of the vehicle, received from the MR service device, through the DTaaS API.

The DTaaS server 1200 may further include a telecommunication unit (TCU) 1290 that communicates with the MR AMS server 1100 that is disposed outside the vehicle and provides the MR AMS service.

The DTaaS server 1200 may furtheri nclude a digital twin representation and update unit 1230 that generates a digital twin map by matching an actually-captured image on the 3D polygon map stored in the database 1220.

Furthermore, the DTaaS server 1200 may further include a dynamics modeling DB 1240 that stores dynamic information on a moving object received from at least one of the MR service device 900 and the MR AMS server 1100, and a scenario DB 1250 that stores information related to a scenario that can be implemented in a digital twin.

In addition, the DTaaS server 1200 may further include a simulation unit 1260 that performs a simulation corresponding to a user request on the digital twin, and a visualization unit 1270 that visualizes information to be implemented on the digital twin.

All of the above-described elements may be implemented as independent hardware (e.g., a chip or a module), and may also be implemented as blocked components in a software configuration if necessary.

The DTaaS server 1200 may perform data transmission and reception through the DTaaS API 1210 not only with the vehicle 100 but also with a fleet management system (FMS) server 1280 that provides a fleet management service (or vehicle group management service), and a server 1290 that provides a city planning service.

For example, the DTaaS server 1200 may collect log information collected from each server from at least one of the vehicle 100, the FMS server 1280, and the city planning service providing server 1290.

Then, the DTaaS server 1200 may store the collected log information in a log database.

The DTaaS server 1200 may provide a digital twin map for visualization in at least one of the vehicle 100, the FMS server 1280, and the city planning service providing server 1290, based on the collected log information.

In addition, the DTaaS server 1200 may transmit at least one of event notification information, simulation information and visualization information to at least one of the vehicle 100, the FMS server 1280 and the city planning service providing server 1290 based on the received log information.

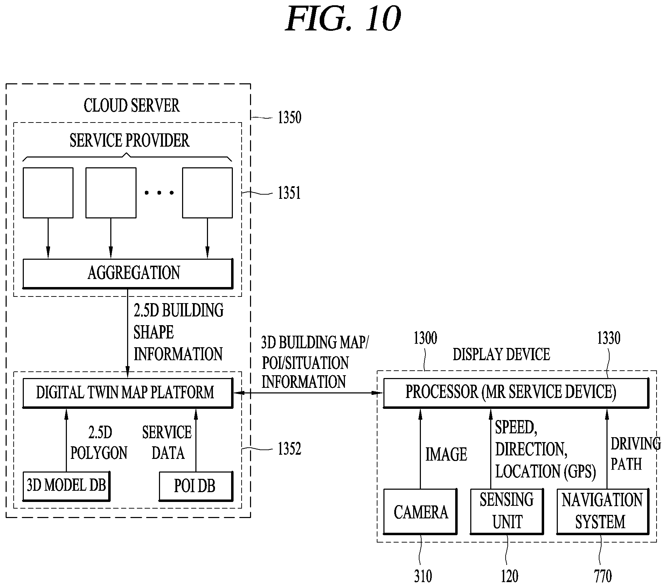

FIG. 10 is a block diagram illustrating the structure of the display device 1300 connected to a cloud server 1350 according to an embodiment of the present disclosure.

Referring to FIG. 10, the MR AMS server 1100 described in FIG. 8D may be connected to various service providers 1351 that provide online map services, such as OSM (Open Street Map), Mapbox, HERE, WRLD, and BingMAP. The MR MAS server 1100 may also aggregate shape information of each building, for example, floor footprint information and height information of a building, which is included in a map based on results of aggregating map data provided from the connected service providers 1351, and provide the aggregated information to the DTaaS 1352. Here, the DTaaS 1352 may indicate a server or device that provides DTaaS, that is, a service using a digital twin map.

Meanwhile, the DTaaS 1352 may be connected to a POI database in which POI service data for each building or area included in map information is stored. In addition, the DTaaS 1352 may be connected to a 3D model database in which data of a 2.5D polygon model for each building included in the map information is stored. Here, the 2.5D polygon model is a polygon model capable of providing a building volume, and may be a polygon model without a texture on a surface thereof. The DTaaS 1352 may receive POI-related service data from the connected POI database, and may receive data of 2.5D polygon models of respective buildings included in map information regarding one area from the connected 3D model database.

The processor 1330 of the MR service device 1300 may receive various information related to the driving of the vehicle from the camera 310, the sensing unit 120, and the navigation system 770. For example, the processor 1330 may receive information related to an object detected at the front, rear, or side of the vehicle from the camera 310. In addition, the processor 1330 may receive information related to vehicle speed, a driving direction of the vehicle, a current location (GPS) of the vehicle, etc. from the sensing unit 120 which includes sensors connected to each component of the vehicle including the traveling system 710. Furthermore, information related to the driving path of the vehicle may be provided from the navigation system 770.

Meanwhile, the display device 1300 and the DTaaS 1352 may be connected through interface APIs of the MR AMS server 1100. In this case, the display device 1300 may have a component corresponding to the MR AMS client 910.

Here, the display device 1300 and the interface APIs of the MR AMS server 1100 may be connected through a wireless network connection. In this case, the MR AMS server 1100 may be a network server or a cloud server wirelessly connected to the display device 1300.

When connected to the MR AMS server 1100, the display device 1300 may provide at least some of information provided from a connected component to the MR AMS server 1100 through a network connection. Then, the MR AMS server 1100 may provide 3D map data for providing mixed reality to the display device 1300 in response to the provided information.

For example, the display device 1300 may provide information on objects detected around the vehicle, information on the vehicle's speed, direction, and current location, and information on the vehicle's driving path to the MR AMS server 1100. Then, the MR AMS server 1100 may provide the three-dimensional map data of an region according to the current location of the vehicle to the display device 1300 based on the information provided from the display device 1300.

In this case, the MR AMS server 1100 may determine POI information based on the current location of the vehicle, the direction and speed of the vehicle, and the driving route of the vehicle, and also provide 3D map data that the determined POI information is further included in the 3D building map. In addition, the MR AMS server 1100 may provide the display device 1300 with 3D map data, which further includes information related to situations around the vehicle, based on the provided information of the objects around the vehicle.

Meanwhile, the display device 1300 may render an MR image based on the 3D map data provided from the MR AMS server 1100. For example, the display device 1300 may control the MR renderer to display a 3D map screen including models for buildings around the vehicle based on the provided 3D map data. In addition, the route guidance device 1300 may display a graphic object corresponding to the vehicle on the 3D map screen, and display graphic objects corresponding to provided POI data and situation information around the vehicle on the 3D map screen.

Therefore, an image of a virtual environment including 3D building models similar to shapes of buildings around the vehicle and a graphic object corresponding to the vehicle may be output to the display 251 such as a Center Information Display (CID), a Head Up Display (HUD), Rear Sheet Information (RSI), or Rear Sheet Entertainment (RSE).

In this case, information related to driving of the vehicle and an environment (situation, condition) around the vehicle may be provided to the driver through the virtual environment. The display device 1300 according to an embodiment of the present disclosure may provide an MR service to the driver through the 3D map information, that is, a digital twin map (hereinafter, referred to as a DT map).

Meanwhile, the MR AMS server 1100 may determine three-dimensional map data and three-dimensional map data, and POI information that can be provided along with the dimensional map data or environment information around each vehicle based on information collected from the display device 1300 provided in one vehicle as well as the display device 1300 provided in a plurality of vehicles. In this case, the MR AMS server 1100 may be a type of a cloud server to collect information from a plurality of vehicles and generate 3D map data for mixed reality based on the collected information. The MR AMS server 1100 may also be configured to transmit MR information for providing an MR service to at least one of display devices 1300 disposed in different vehicles on the basis of the generated 3D map data.

Hereinafter, for convenience of description, the DTaaS 1352 and the MR AMS server 1100, which is connected to the DTaaS 1352 to provide 3D map information, that is, a digital twin map (DT map) for providing MR services will be collectively referred to as a cloud server 1350.

Meanwhile, the display device 1300 may be a device that controls a display disposed in a vehicle through an interface. Alternatively, it goes without saying that the display device 1300 may be a display device disposed in a vehicle. In this case, the display device 1300, that is, the display device 1300 may include a display, and may receive an updated DT map on which photorealistic texturing is performed from the cloud server, and display an MR view image including the received DT map directly on the display disposed in the display device 1300.

For convenience of description, the display device will be named the display device 1300.

Meanwhile, the vehicle 100 according to the present disclosure may include a display device 1300.

The display device 1300 may control at least one of those components illustrated in FIG. 7. From this point of view, the display device 1300 may be the controller 170.

However, the present disclosure is not limited thereto, and the display device 1300 may be a separate configuration independent of the controller 170. When the display device 1300 is implemented as a component independent of the controller 170, the display device 1300 may be provided on a part of the vehicle 100.

Hereinafter, description will be given of an example that the display device 1300 is an element separate from the controller 170 for the sake of explanation. In this specification, functions (operations) and control methods described in relation to the display device 1300 may be executed by the controller 170 of the vehicle. In other words, all the details described in relation to the display device 1300 may be applied to the controller 170 in the same/similar manner.

Furthermore, the display device 1300 described herein may include some of the elements illustrated in FIG. 7 and various elements included in the vehicle. For the sake of explanation, the components illustrated in FIG. 7 and the various components included in the vehicle will be described with separate names and reference numbers.

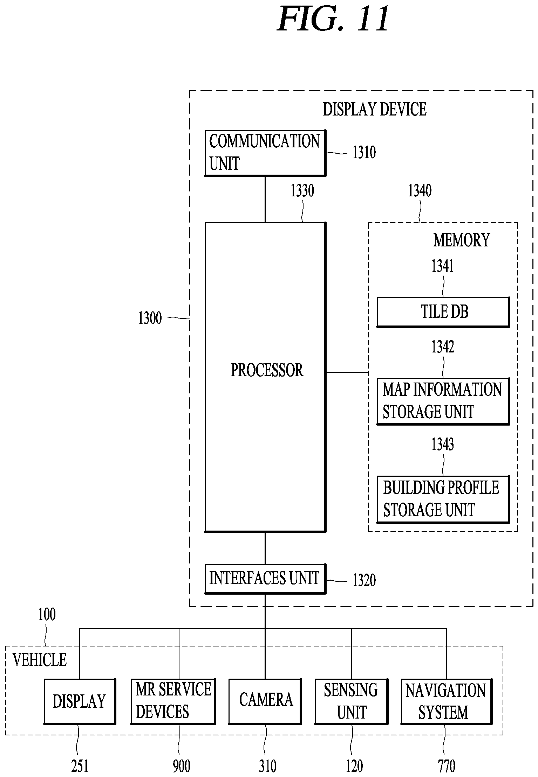

FIG. 11 is a conceptual view illustrating the display device 1300.

A display device 1300 according to an embodiment of the present disclosure may include a communication unit (or part) 1310, an interface (or part) 1320, a memory 1340, and a processor 1330.

The communication unit 1310 may be configured to perform wireless communication with at least one of electrical components included in the vehicle (e.g., the electrical components included in the vehicle illustrated in FIG. 7).

In addition, the communication unit 1310 may perform communication with devices, for example, mobile terminals, servers, other vehicles, infrastructures located on roads, and the like, in addition to the vehicle.

The communication unit 1310 may be the communication device 400 described above, and may include at least one of those components included in the communication device 400.

The interface 1320 may perform communication with at least one of the components disposed in the vehicle.

Specifically, the interface 1320 may perform wired communication with at least one of the electrical components included in the vehicle illustrated in FIG. 7.

Specifically, the interface 1320 receives sensing information from one or more sensors disposed in the vehicle 100.

In some cases, the interface 1320 may be referred to as a sensor data collector.

The interface 1320 collects (receives) information sensed by sensors (V.Sensors) disposed at the vehicle for detecting a manipulation of the vehicle (e.g., heading, throttle, break, wheel, etc.) and sensors (S.Sensors) for detecting surrounding information of the vehicle (e.g., Camera, Radar, LiDAR, Sonar, etc.)

The interface 1320 may transmit the information sensed through the sensors disposed at the vehicle to the TCU 1310 (or a processor 1330) so that the information is reflected in the HD map.

The interface 1320, for example, may serve as a passage with the electrical components disposed in the vehicle through the vehicle interface 130 of the vehicle.

The interface 1320 may exchange data with the vehicle interface 130 of the vehicle.

The interface 1320 may be connected to the vehicle to serve as a path for receiving electrical energy.

For example, the route guidance device may be powered on by receiving electrical energy from the power supply unit 190 of the vehicle through the interface 1320.

Meanwhile, the present disclosure may be provided with a memory 1340 that stores data supporting various functions of the display device 1300. For example, the memory 1340 may store a plurality of application programs (or applications) that can be executed by the processor 1330, data for the operation of the display device 1300, and commands therefor.

As an example of the data, the memory 1340 may store a plurality of preset tiles corresponding to images or three-dimensional forms similar to parts of different buildings. The tiles may be tiles that are different from one another in at least one of color and shape. Alternatively, the tiles may be tiles having different three-dimensional forms as well as colors and shapes. Furthermore, the tiles may be tiles normalized to determined sizes.

Meanwhile, the tiles may be grouped into different groups according to the characteristics of buildings to which the tiles can be applied, such as the types, uses, or sizes of the buildings. For example, the tiles may be grouped into residential buildings, commercial buildings, or officetel buildings. In this case, tiles grouped into different groups, that is, tiles grouped into residential buildings, tiles grouped into commercial buildings, and tiles grouped into officetel buildings, may be tiles normalized to different sizes according to each group.

Additionally, some of the tiles may be associated with at least one other tile. For example, the tiles associated with one another may be tiles that are similar in shape and color. That is, the tiles associated with one another may be tiles that differ only in at least part of their shape or in only their color. Alternatively, the tiles associated with one another may be tiles having the same three-dimensional form or similarity to a predetermined level even when at least one of the shape and color is different from one another. Tiles that are associated with one another in this manner may reflect the passage of time. For example, in the case of tiles with the same three-dimensional form and shape but different colors, they may be used to reflect a change over time in a portion of a specific building.

Meanwhile, the memory 1340 may include association information on tiles that are associated with one another in this manner. Furthermore, a specific tile may be associated with another tile through association information. Therefore, by using the association information, tiles may be associated with one another even when they have different three-dimensional forms, shapes, or colors.

The tiles stored in the memory 1340 may constitute a database including respective tiles and tile information corresponding to the respective tiles. In this case, the tile information stored in the database may include address information on each tile, information on a group in which each tile is included (group information), and when there is another tile associated with a corresponding tile, association information including information on the other associated tile. Hereinafter, a database including a tile and tile information corresponding to each tile is referred to as a tile database (DB) (hereinafter referred to as a tile DB) 1341.

Meanwhile, the memory 1340 may store map information including a virtual object. The map information may be map information including data of a so-called 2.5D polygon model. In addition, the map information may include high-definition (HD) map information having a high accuracy. The map information may be associated with a navigation system 770 and an operation system 700 provided in a vehicle 100, and the memory 1340 may provide the map information to various systems and components associated therewith under the control of the processor 1330.

Additionally, the memory 1340 may store building profile information corresponding to at least one of virtual objects included in the map information. The building profile information, which is information for synthesizing a texture to a surface area of a virtual object included in the map information using tiles included in the tile DB 1341 (hereinafter, an operation process of synthesizing a texture to a surface area of the virtual object using tiles is referred to as texturing), may include tile information corresponding to a surface area of the virtual object.

Meanwhile, the surface area of the virtual object may include a plurality of different sub-areas. In this case, different tiles may be matched to the plurality of sub-areas, respectively, and tiling may be carried out for the plurality of areas, respectively, by different matching tiles. Here, the tiling may refer to a process of filling a specific sub-area with a tile matching that sub-area so as not to overlap tiles with one another.

Meanwhile, as described above, tiling for a specific tile may be carried out for each of the sub-areas, and texturing for a surface area of the virtual object may be carried out by combining the plurality of sub-areas in which the tiling is carried out. In this case, the building profile information may be information including tile information of tiles matching the respective plurality of sub-areas, combination information for combination of the plurality of sub-areas in which the tiling is carried out for surface area texturing of the virtual object, recognition information for recognition of an actual building corresponding to the virtual object, and characteristic information of the actual building.

Here, the combination information may be information on locations of the respective plurality of sub-areas with respect to the corresponding virtual object surface area or a sequence in which tiling is carried out for the respective plurality of sub-areas. Additionally, the recognition information may include location information such as latitude and longitude information of a virtual object included in the map information. In addition, the characteristic information of the building may be information related to the use, type, and construction year of a building corresponding to the virtual object.

The memory 1340 may store building profile information corresponding to at least one of virtual objects included in the map information. Hereinafter, an area on the memory 1340 in which the building profile information is stored will be referred to as a building profile information storage unit 1343.

Meanwhile, the display device 1300 according to an embodiment of the present disclosure may include a processor 1330 that generates a digitally twinned three-dimensional map using at least one of an image captured by a camera 310 provided in a vehicle 100, 2D map information (e.g., HD map information), and three-dimensional map information (e.g., map information including data of a 2.5D polygon model). The processor 1330 may control each component connected thereto, and control an overall operation of the display device 1300.

Additionally, the processor 1330 may overlap (or superimpose, output) graphic objects related to path guidance on a digitally twinned three-dimensional map.

Here, the graphic object related to the path guidance indicates an object output in mixed reality (MR), and may include various types of objects (e.g., POI objects, carpet-type objects, 3D objects, etc.) that are necessary to perform the path guidance. Here, a graphic object related to the path guidance may also be named an MR object.

When the destination of the vehicle 100 is set, the processor 1330 may determine a path on which the vehicle 100 is to drive through the navigation system 770. Furthermore, when the driving path of the vehicle 100 is determined, the processor 1330 may determine at least one virtual object (e.g., an object output as mixed reality (MR)) to perform texturing on a digitally twinned three-dimensional map for path guidance.

To this end, the processor 1330 may detect buildings located around the driving path of the vehicle 100 determined above through map information. Furthermore, building profile information corresponding to the detected buildings may be detected from the building profile information storage unit 1343. Furthermore, based on at least one of the location, speed, and driving direction of the vehicle, at least one building (hereinafter referred to as a target building) on which texturing is to be performed may be determined from among the detected buildings, and based on building profile information corresponding to the target building, texturing may be performed on a virtual object on the map information corresponding to the target building.

In this case, the texturing may be carried out by sequentially combining a plurality of sub-areas constituting the virtual object, which are tiled with tiles that match the building profile information corresponding to the target building.

For example, a virtual object corresponding to the target building may have a surface area divided into a plurality of layers according to an appearance of the target building, and sub-areas may be formed for the respective divided surface areas. For example, the processor 1330 may divide the target building into a bottom layer, a top layer, and at least one middle layer, and different tiles may be matched to respective sub-areas.

In this case, the top layer may be distinguished when it has a shape or form that is distinct from the middle layer, such as a roof, an antenna, or a spire, and when the target building does not have a structure placed on a rooftop of the building, such as a roof, an antenna, or a spire, the processor 1330 may be divided into only a bottom layer and at least one middle layer.

Meanwhile, in the case of the middle layer, the processor 1330 may divide the target building into at least one layer according to a preset inter-layer height or an arrangement of windows, and the like. For example, when the middle layer has different colors or shapes (e.g., different window arrangements), layers having the different colors or shapes may be divided into different middle layers. That is, in the case of layers assigned to commercial spaces and layers assigned to residential spaces, such as in a residential-commercial complex building, the layers assigned to commercial spaces and layers assigned to residential spaces may respectively be divided into different middle layers.

In this case, different layers, for example, a bottom layer, at least one middle layer, and a top layer, may be matched to different tiles. Furthermore, tiling may be carried out for respective layers, that is, respective sub-areas (e.g. a bottom layer, at least one middle layer, a top layer), based on different tiles matched thereto. Then, respective sub-areas in which the tiling is carried out may be sequentially combined in a preset sequence based on combination information assigned in the building profile information corresponding to the target building.

Meanwhile, the tiling may be carried out sequentially based on a tiling sequence assigned in the building profile information. As an example, the respective sub-areas may be combined sequentially starting from a sub-area corresponding to a layer close to the ground. In this case, tiling may be carried out first for a sub-area corresponding to an area in contact with the ground, that is, a bottom layer, and tiling of a sub-area corresponding to a next sequence (e.g., a first middle layer) may be carried out on the sub-area on which tiling is carried out. Furthermore, lastly, tiling may be carried out for a sub-area corresponding to an uppermost layer (e.g. a top layer). As described above, tiling for respective sub-areas may be sequentially carried out for a virtual object in a preset sequence, thereby carrying out texturing for an entire surface area of the virtual object.

In this manner, texturing of a virtual object according to an embodiment of the present disclosure may be carried out according to a sequential combination of respective sub-areas in which tiling has been carried out. Accordingly, texturing of a virtual object according to an embodiment of the present disclosure may also be referred to as procedural texturing or procedural modeling.

Meanwhile, the tile DB 1341 may be provided from a preset server that is connected in communication with the display device 1300. For example, the preset server may be a cloud server. In this case, the cloud server may be the same server as a cloud server that provides map information (e.g., map information including 2.5D polygon objects), but it may also be a different server. In this case, that is, if they are different servers, the cloud server that provides the map information will be described as a first cloud server, and the cloud server that provides the tile DB 1341 and building profile information will be described as a second cloud server in a distinguishable manner.

When the tile DB 1341 is provided, the processor 1330 may generate building profile information on buildings around the vehicle 100 based on information collected around the vehicle 100. For example, the processor 1330 may segment an image of a building around the vehicle 100 acquired through the camera 310 into a plurality of sub-areas, and detect tiles matching the respective segmented images (i.e., sub-area images of a target building). To this end, the processor 1330 may calculate a similarity for each tile included in the tile DB 1341 for each of the sub-area images, and determine a tile matching each of the sub-area images based on the calculated similarity.

For example, the processor 1330 may detect feature information on any one sub-area image. Furthermore, among the tiles included in the tile DB 1341, at least one tile having a feature similar to a feature detected from any one of the sub-area images may be detected. Furthermore, for each of the at least one detected tile, a similarity to any one of the sub-area images may be calculated, and any one of the tiles having the highest calculated similarity may be matched to a tile corresponding to any one of the sub-area images.

For the tile matching, the processor 1330 may use a pre-trained artificial intelligent (AI) model. In this case, the artificial intelligence model may recognize the sub-area image from a feature detected from any one of the sub-area images, and detect any one tile having a feature most similar to a feature point of the recognized sub-area image.

Here, the feature point of the sub-area image may be detected in various ways. For example, the pattern of a shape or form or color of an image may be detected as the feature point. In this case, the more the sub-area image has a distinct pattern of shape, form, or color, the more the artificial intelligence model may detect a clear pattern from the sub-area image, and a high recognition rate may be calculated.

On the contrary, when it is difficult to detect a pattern of shape, form or color from the sub-area image due to low image quality, luminance difference and shaking, and the like, the artificial intelligence model may not be able to detect a feature point of the sub-area image, and in this case, a low recognition rate may be calculated. Then, based on the recognition rate, the artificial intelligence model may not detect a tile corresponding to the sub-area image. That is, the artificial intelligence model may determine whether to detect a tile corresponding to any one of the sub-area images based on the calculated recognition rate.

Here, the artificial intelligence model may be included in the display device 1300 according to an embodiment of the present disclosure as a separate element from the processor 1330 (not shown). Alternatively, the artificial intelligence model may be part of the processor 1330, or the processor 1330 may perform a function of the artificial intelligence model. In this case, the artificial intelligence model may be understood as the same element as the processor 1330.

Meanwhile, when a tile corresponding to each sub-area image is determined, the processor 1330 may generate combination information related to a combination of respective sub-area images based on the acquired image of the building around the vehicle 100. For example, the combination information may be information on locations of respective sub-area images or a sequence in which tiling is carried out for the acquired image of the building around the vehicle 100. Furthermore, building profile information including combination information of respective generated sub-areas and tile information of tiles corresponding to the respective sub-area images may be generated.

In this case, the building profile information may include recognition information such as the acquired location of the building around the vehicle 100 and characteristic information such as the acquired type and use of the building around the vehicle 100. Accordingly, the generated building profile information may correspond to a building around the vehicle 100 from which the image has been acquired.

When building profile information corresponding to a building around the vehicle 100 is generated in this manner, the processor 1330 may detect a virtual object corresponding to a building around the vehicle 100 from which the image has been acquired from the map information. Furthermore, a surface area of the virtual object may be sequentially tiled according to each sub-area included in the building profile information.

As an example, if the target building consists of three layers, including a bottom layer, a first middle layer, and a second middle layer in terms of appearance, the processor 1330 may sequentially tile tiles matching respective sub-areas in a preset sequence on a surface area of a virtual object corresponding to the target building. Here, the preset sequence may be a sequence from closest to the ground.

Accordingly, tiles matching a bottom area, that is, a sub-area (bottom layer) included in the building profile information, may be tiled on a surface of a virtual object in an area in contact with the ground in the virtual object in map information corresponding to the target building. Furthermore, when tiling for the bottom layer is completed, the processor 1330 may tile tiles matching a next sub-area (first middle layer) according to a preset sequence on the sub-area (bottom layer) where tiling has been completed. Furthermore, when tiling for the first middle layer is completed, the processor 1330 may tile tiles matching a next sub-area (second middle layer) according to a preset sequence on the sub-area (first middle layer) where tiling has been completed. In this manner, tiles matching respective sub-areas may be sequentially tiled on a surface area of the target building, thereby performing texturing on a virtual object in map information corresponding to the target building.

Here, each inter-layer height of the target building may correspond to an integer multiple of the tile. For example, when each inter-layer height of the target building is the same as that of the tile, the processor 1330 may perform tiling for the respective sub-areas by consecutively arranging tiles matching the respective sub-areas so as not to overlap one another.

In addition, the target building may be configured such that an inter-layer height or inter-layer width of the bottom layer or top layer is different from an inter-layer height or inter-layer width of the middle layer. To this end, the tile DB 1341 may store tiles corresponding to the bottom and top layers separately from tiles corresponding to the middle layers.

Furthermore, the processor 1330 may control the MR service device 900 to perform MR rendering on a virtual object for which the texturing has been completed and display the MR rendered object on the display. In this case, the processor 1330 may control the MR service device 900 and display of the vehicle 100 through the interface 1320.

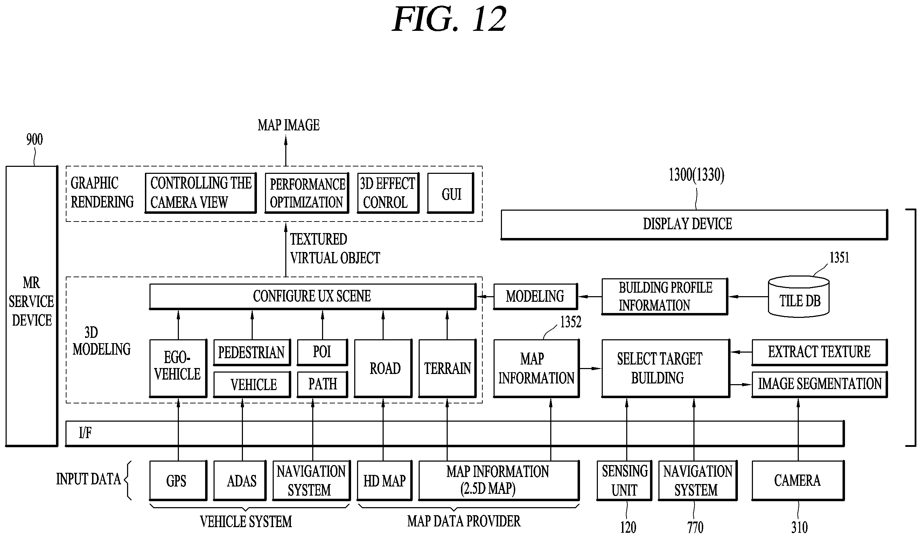

FIG. 12 is a conceptual diagram illustrating an operation flow of the display device 1300 the MR service device 900 according to such an embodiment of the present disclosure.

First, the processor 1330 of the display device 1300 according to an embodiment of the present disclosure may determine a driving path of the vehicle 100 through the navigation system 770 when a destination of the vehicle 100 is determined. Furthermore, based on the determined driving path and map information, buildings around the driving path may be detected. Furthermore, based on at least one of a speed, location, and driving direction of the vehicle 100 detected through the sensing unit 120, at least one building (hereinafter referred to as a target building) on which texturing is to be performed may be selected from among the detected buildings around the driving path.

Meanwhile, when a target building is selected, the processor 1330 may check whether building profile information for the selected target building is stored. Furthermore, if there is pre-stored building profile information, the processor 1330 may detect tiles matching respective sub-areas of the target building included in the building profile information from the tile DB 1341, and perform tiling for the respective sub-areas using the detected tiles. Furthermore, the respective tiled sub-areas may be modeled according to combination information included in the building profile information to perform texturing on a virtual object on map information corresponding to the target building.

Meanwhile, the MR service device 900 may model a location of the ego vehicle 100, pedestrians and other vehicles around the vehicle 100, position of interest (POI) information, path information, and road information and terrain information around the vehicle 100 according to map information, on the basis of information provided from a vehicle system, that is, a GPS, an ADAS, and a navigation system in the vehicle 100. Furthermore, by using the modeled information and information on the modeled virtual object provided from the display device 1300, a UX scene including a textured virtual object may be configured. Furthermore, the MR renderer may be controlled to generate a map image including a camera view, a 3D effect, and a GUI (graphics rendering), and display the generated map image through the display.

Meanwhile, when there is no building profile information corresponding to the target building, the processor 1330 may generate the building profile information based on an image of the target building acquired through the camera 310. For example, the processor 1330 may segment the acquired image of the target building to generate a plurality of sub-area images, and determine tiles corresponding to the respective plurality of generated sub-area images from the tile DB 1341. Furthermore, based on the acquired image of the target building, combination information of the sub-area images may be generated. Furthermore, the processor 1330 may generate and store building profile information including generated combination information, tile information of tiles corresponding to the respective plurality of sub-area images, recognition information for recognizing the target building, such as a location of the target building, and characteristic information such as the type or use of the target building. Here, the recognition information of the target building and the characteristic information of the target building may be extracted from map information. In addition, the map information may be provided from a map data provider, that is, a service provider 1351, connected through a cloud server 1350.

Hereinafter, a method of performing, by the display device 1300 according to an embodiment of the present disclosure, path guidance by displaying a textured virtual object based on tile information and building profile information will be described in more detail with reference to the accompanying drawings.

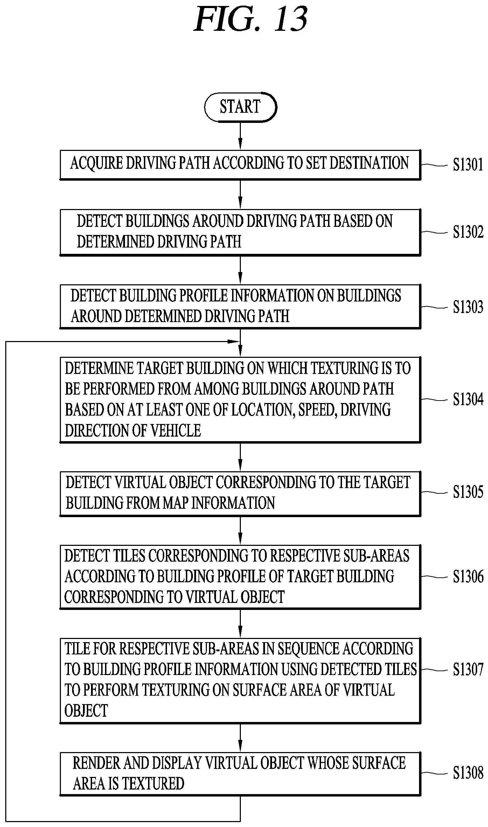

FIG. 13 is a flowchart illustrating an operation process of displaying, by the processor 1330 of the display device 1300 according to an embodiment of the present disclosure, map information including a virtual object with textures synthesized thereto.

Referring to FIG. 13, the processor 1330 of the display device 1300 according to an embodiment of the present disclosure may acquire a driving path of the vehicle 100, which is set from the navigation system 770 (S1301). The navigation system 770 may set, when a destination of the vehicle 100 is set, a driving path of the vehicle 100 based on the current location and the set destination of the vehicle 100, and provide the set driving path to the processor 1330 through the interface 1320.

When the driving path of the vehicle 100 is acquired, the processor 1330 may detect buildings around the driving path based on the acquired driving path from map information (S1302).

In order to detect buildings around the driving path, the processor 1330 may generate a building area based on the acquired driving path. For example, the processor 1330 may generate an area within a predetermined distance around the driving path from the current location to the destination of the vehicle 100 as the building area. Furthermore, based on the map information, buildings located within the building area may be detected as buildings around the driving path.

As an example, when the driving path of the vehicle 100 is a two-lane road with each lane separated by a center line for round-trip traffic, a sidewalk where buildings are located may be adjacent to one side of the vehicle 100, and the center line may be adjacent to the other side thereof. In this case, when the building area is generated, the generated building area may include buildings located on one side of the vehicle 100. Then, buildings located on one side of the vehicle 100 may be detected as buildings around the path.

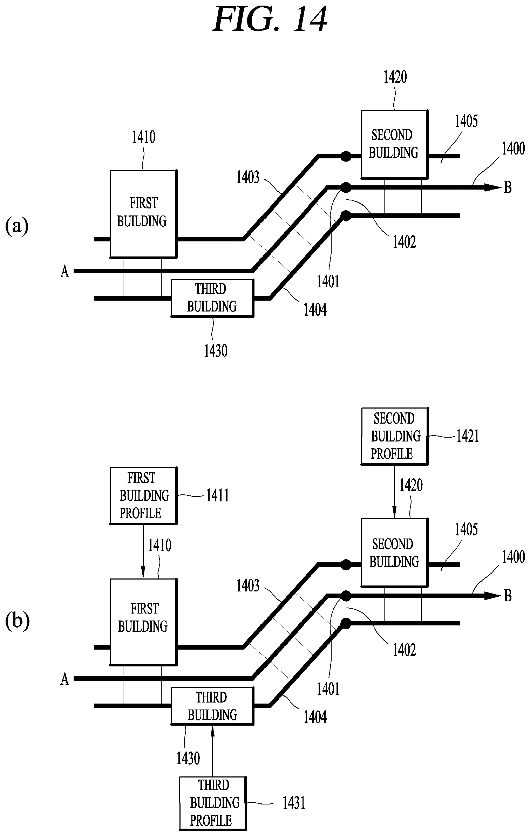

In order to generate such a building area, the processor 1330 may use a variety of methods. For example, the processor 1330 may generate an area within a predetermined distance around the driving path as a building area as described above. Alternatively, the processor 1330 may sample the driving path at predetermined distances, and arrange line segments having a predetermined length and perpendicular to the driving path to be perpendicular to the driving path for the respective samples. Furthermore, an area generated by a first straight line connecting one end points of the line segments and a second straight line connecting the other end points of the line segments may be generated as the building area. An example of a building area generated in this manner will be examined in more detail with reference to FIG. 14 below.

In the step S1302, when buildings around a driving path are detected from map information through a building area generated along the driving path, the processor 1330 may detect building profile information for the respective buildings around the detected driving path from the memory 1340 (e.g., building profile information storage unit 1343) (S1303). Accordingly, among the buildings included in the map information, building profile information for some buildings may be detected according to the building area formed based on the driving path of the vehicle 100.

Meanwhile, when building profile information for respective buildings around the driving path are detected, the processor 1330 may determine a building (hereinafter referred to as a target building) on which texturing is to be performed from among the buildings around the driving path based on at least one of a current location, speed, and driving direction of the vehicle 100 (S1304).

For example, the processor 1330 may determine at least one building adjacent to the current location of the vehicle 100 from among the buildings around the driving path as the target building. Here, the processor 1330 may determine, when there are a plurality of buildings adjacent to the vehicle 100, a building on which texturing is to be performed first from among the plurality of adjacent buildings based on the speed of the vehicle 100 and the driving direction of the vehicle 100.

In this case, in a direction according to the driving direction of the vehicle 100, a building located in front of the current location of the vehicle 100 may be textured with priority over a building located behind the vehicle 100. Additionally, depending on the speed of the vehicle 100, the slower the speed of the vehicle 100, the buildings closer to the vehicle 100 may be more preferentially textured.

That is, when there are a plurality of determined target buildings, the processor 1330 may determine a texturing priority for the respective plurality of target buildings based on the current location, current speed, and driving direction of the vehicle 100, and may perform texturing on the target buildings sequentially according to the determined priority.

Meanwhile, in the step S1304, when a target building on which texturing is to be performed is determined, the processor 1330 may detect a virtual object corresponding to the determined target building from map information (S1305).

To this end, the processor 1330 may detect a virtual object matching the determined target building from the map information based on an image acquired from a camera 310 (e.g., a front camera) of the vehicle 100 and a current location (e.g., latitude and longitude) of the vehicle 100.

In this case, the processor 1330 may perform matching between an image acquired from the camera 310 and a virtual object included in the map information based on the speed of the vehicle 100, an azimuth according to the driving direction of the vehicle 100, and the location and angle of view of the camera 310, and may detect a virtual object corresponding to the determined target building through the matching.

Alternatively, the processor 1330 may recognize a building around the vehicle 100 based on the object detection results of the object detection device 300 provided in the vehicle 100 and detect a virtual object corresponding to the recognized building from map information. For example, when a building is identified from an image acquired through the camera 310, the processor 1330 may emit at least one of a radar signal, a lidar signal, an ultrasonic signal, or an infrared signal from the object detection device 300 to the identified building. Furthermore, based on the emitted signal, a distance and angle between the vehicle 100 and the identified building may be calculated, and a building around the vehicle 100 may be detected based on the calculated distance and angle. Furthermore, based on the current location (latitude and longitude) of the vehicle 100 and the calculated distance and angle, a location (latitude and longitude) of the detected building may be calculated, and a virtual object corresponding to the calculated building location may be detected from the map information, thereby performing matching between the building around the vehicle 100 and the virtual object included in the map information. Furthermore, through the matching, a virtual object corresponding to the determined target building may be detected.

In the step S1305, when a virtual object corresponding to a target building determined from map information is detected, the processor 1330 may detect building profile information corresponding to the determined target building from the memory 1340. Furthermore, based on tile information for respective sub-areas included in the detected building profile information, tiles corresponding to the respective sub-areas may be detected (S1306).

In the step S1306, when tiles corresponding to the respective sub-areas are detected according to the detected building profile information, the processor 1330 may perform tiling for the respective sub-areas according to the detected tiles, in a sequence of the respective sub-areas according to the detected building profile information, on a surface area of the virtual object corresponding to the determined target building (S1307).

Here, tiling may refer to filling respective sub-areas with tiles matching the respective sub-areas in the building profile information so as not to overlap one another. Therefore, when tiling is carried out for all sub-areas in a sequence according to the building profile information, tiling may be carried out for an entire surface area of the virtual object, and thus texturing may be carried out for the virtual object.

Meanwhile, in a case where the virtual object surface area synthesized with the tiles is formed as a plane whose horizontal length is not an integer multiple of the horizontal length of the tiles, when performing tiling using the tiles, there may occur a region in which the tiles are misaligned or the tiles are not filled from the surface area of the virtual object. In order to prevent the fragmentation phenomenon of these tiles, the processor 1330 may resample an outline of the virtual object surface area to become integer multiples of horizontal lengths of the tiles to further simplify the outline. In this case, the horizontal length of the tile may be a unit length with a preset minimum unit.

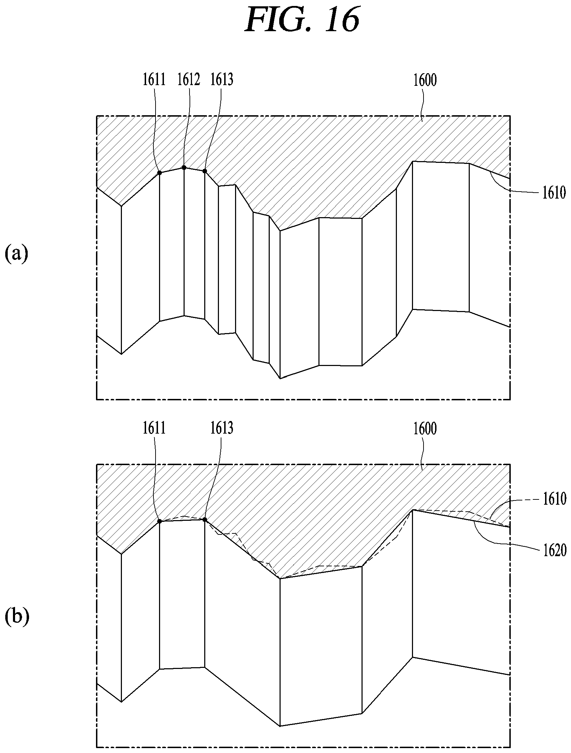

As an example, the processor 1330 may detect outline vertices, which are corner points of an outline that constitutes a contour of the virtual object. Furthermore, from among the outline vertices, areas between outline vertices where a distance therebetween to another outline vertex is not an integer multiple of a horizontal length of the assigned tile may be detected. Furthermore, at least one of the detected outline vertices may be omitted such that a distance between each outline vertex corresponds to an integer multiple of a preset horizontal length of tile (resampling). This resampling process will be described in more detail with reference to FIG. 16 below.

Meanwhile, the resampling may be used to remove overlapping vertices between a plurality of virtual objects. In this case, when the vertices of the plurality of virtual objects are adjacent to one another by a preset distance or more, the processor 1330 may integrate the vertices into one vertex or remove overlapping vertices through the resampling algorithm.

Then, the processor 1330 may control the MR service device 900 to render a virtual object whose surface area is textured, and display the textured virtual object on the display (S1308). For rendering in the step S1308, the processor 1330 may further perform a process of combining tiles tiled on a surface area of the virtual object with the virtual object (object combining), and an optimization process for the virtual object in which texturing is carried out on the entire surface area through tiles tiled in the plurality of sub-areas.

The rendering process may further include roof rendering, which renders the shape of a roof area of a virtual object, and basement rendering, which adjusts a level of the ground according to a height of the ground. Here, the loop rendering may include triangulator rendering to form the shape of various outline vertices into a surface area. Furthermore, through the basement rendering, the processor 1330 may display dummy tiles having a color similar to the bottom layer under the bottom layer on which tiling has been carried out so as to prevent a phenomenon in which the shape of the tiles is misaligned or the virtual object appears to be floating in the air depending on the height of the ground.

Additionally, the optimization process may include a process of performing light processing, a process of combining tiled tiles with a virtual object in a texturing process, and a process of removing redundant resources.

FIG. 14 is an exemplary diagram for explaining an example of determining a building area according to the determined driving path of the vehicle 100 in the step S1302 of FIG. 13.

Referring to FIG. 14, when a destination is set, the controller 170 of the vehicle 100 may determine a path (path from A to B) 1400 on which the vehicle is to drive through the navigation system 770. Furthermore, the processor 1330 may control the interface 1320 to acquire information on the driving path 1400 determined through the navigation system 770.

Then, the processor 1330 may perform sampling for the driving path 1400. The sampling is carried out around the driving path 1400 according to a preset distance, and when the sampling is carried out, the driving path 1400 may be divided into a plurality of sections according to the preset distance, as shown in (a) of FIG. 14.

Meanwhile, the processor 1330 may generate line segments (e.g., 1402) that are perpendicular to the driving path 1400 and have a constant length, around the respective sampled points on the driving path 1400, that is, respective sampling points (e.g., 1401). Furthermore, a first straight line 1403 may be formed by connecting one end points of the generated line segments, and a second straight line 1404 may be formed by connecting the other end points of the line segments. Then, an area 1405 between the first straight line 1403 and the second straight line 1404 formed around the driving path 1400 may be determined as the building area.

Once the building area 1405 is determined, the processor 1330 may detect buildings at least parts of which are included in the building area 1405 based on map information. That is, as shown in (a) of FIG. 14, when a first building 1410, a second building 1420, and a third building 1430 are located on the map information, the processor 1330 may detect the first building 1410, the second building 1420, and the third building 1430 as buildings around the path located around the driving path 1400. Furthermore, building profile information 1411, 1421, 1431 corresponding to the respective detected buildings 1410, 1420, 1430 around the path may be detected from the memory 1340.

In this case, at least one of buildings around the path may be determined as a target building on which texturing is to be performed based on at least one of the current location, speed, and driving direction of the vehicle 100. Furthermore, once it is determined as a target building, texturing may be carried out by using tiles detected based on the corresponding building profile information of the building.

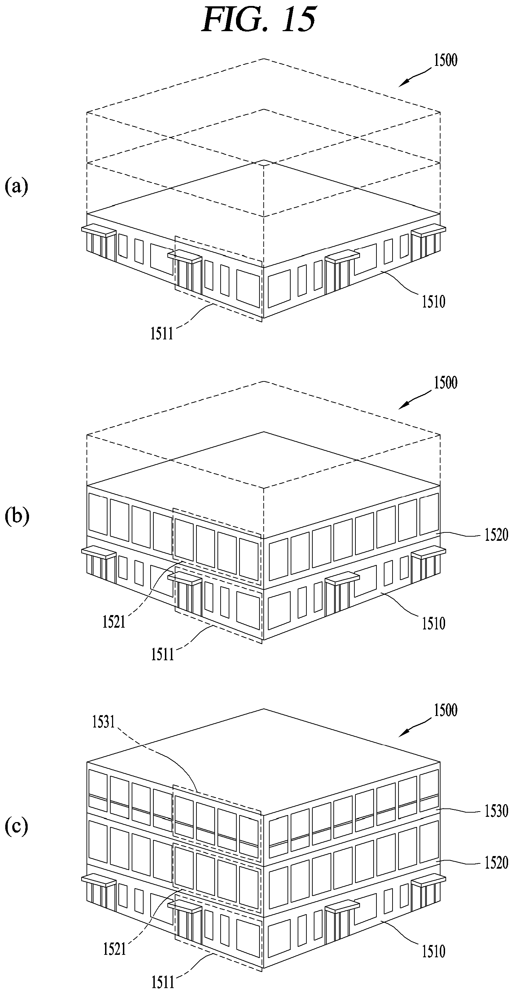

Meanwhile, FIG. 15 is an exemplary diagram illustrating an example of carrying out texturing on a surface area of a virtual object with the combination of respective sub-areas in which tiling is carried out according to the operation process illustrated in FIG. 13.

Here, the sub-area may be an area corresponding to each layer (e.g., a bottom layer, at least one middle layer, a top layer) distinguished from each building corresponding to the virtual object. As an example, in a process of collecting building profile information, for a specific building around the vehicle, the processor 1330 of the display device 1300 according to an embodiment of the present disclosure may divide the building (image of the building) around the vehicle into a plurality of sub-areas corresponding to respective layers (e.g., a bottom layer, at least one middle layer, and a top layer) according to differences in the shape of each layer of the specific building, such as a preset inter-layer height or an arrangement or shape of windows.

For example, the processor 1330 may distinguish each layer of a particular building based on a repetitive arrangement of windows and shapes formed on each layer. That is, the processor 1330 may distinguish an area of the specific building from the ground to a predetermined height, including an entrance or exit such as a door or revolving door, as a sub-area corresponding to the bottom layer. Furthermore, when there is a structure such as a roof, an antenna, or a spire, an uppermost layer area of a specific building in which the structure such as the roof, the antenna, or the spire is disposed may be distinguished as a sub-area corresponding to the top layer. In addition, an area between the bottom layer and the top layer may be divided into at least one middle layer.

In this case, if there is no uppermost layer of a specific building on which a structure such as a roof, an antenna, or a spire is disposed, the processor 1330 may divide the specific building into only a bottom layer and at least one middle layer. Additionally, when the middle layer has different colors or shapes (e.g., window forms, etc.), the processor 1330 may divide the middle layer into different sub-areas, that is, different middle layers.

In this case, the processor 1330 may divide the specific building into a plurality of layers such that each of the layers (e.g., a bottom layer, at least one middle layer, and a top layer) has an integer multiple of a preset inter-layer height (e.g., 3 m).

Alternatively, the processor 1330 may divide the specific building into the bottom layer, at least one middle layer, and the top layer such that the at least one middle layer has an integer multiple of a preset inter-layer height (e.g., 3 m). In this case, the preset inter-layer height may be a normalized height (or vertical length) of tiles set to match the middle layer. Additionally, in the case of the bottom layer and the top layer, the processor 1330 may distinguish the bottom layer and the top layer to have an integer multiple (e.g., 1) of a normalized height (or vertical length) of tiles (e.g., tiles set to match the bottom layer or the top layer) other than those set to match the middle layer.

That is, the processor 1330 may detect a sub-area corresponding to the bottom layer area from the acquired building image according to a normalized size (height or vertical length) of tiles included in the tile group of the tile DB 1341 corresponding to the bottom layer, and may detect at least one sub-area corresponding to the at least one middle layer area from the acquired building image according to a normalized size (height or vertical length) of tiles included in the tile group of the tile DB 1341 corresponding to the middle layer.

Furthermore, the processor 1330 may detect a tile most similar thereto from among the tiles stored in the tile DB 1341 for each of the divided layers based on an image of each divided sub-area, that is, an image of each layer. Furthermore, the detected tiles may be stored to correspond to each of the divided layers (building profile information). Accordingly, building profile information including information on respective layers constituting a surface area of a virtual object corresponding to the specific building and information on tiles detected for the respective layers may be collected.

Furthermore, when the specific building is a target building on which texturing is to be performed according to an embodiment of the present disclosure, the processor 1330 may perform texturing on a surface area of a virtual object corresponding to the specific building based on building profile information for the specific building collected as described above. In this case, the processor 1330 may perform the texturing by tiling respective sub-areas with tiles matching the respective sub-areas based on information of respective layers (e.g., a bottom layer, at least one middle layer, and a top layer) of a virtual object according to the building profile information and tile information for the respective layers.

FIG. 15 illustrates an example of performing texturing on the specific building through sequential tiling for respective sub-areas according to an embodiment of the present disclosure when the specific building is divided into three layers.

Referring to FIG. 15, first, the processor 1330 may detect building profile information corresponding to the specific building. In this case, when the specific building consists of three layers, building profile information including information on the three layers consisting of a bottom layer 1510, a middle layer 1520, and a top layer 1530, and information on tiles 1511, 1521, 1531 corresponding to the respective layers may be detected.

Then, the processor 1330 may first tile any one layer in a sequence of respective layers included in the building profile information (e.g., a sequence from closest to the ground). Accordingly, as shown in (a) of FIG. 15, the processor 1330 may detect a tile (hereinafter referred to as a bottom layer tile) 1511 corresponding to the bottom layer 1510 based on the building profile information, and tile the detected bottom layer tile 1511 on one area of a virtual object 1500 corresponding to the bottom layer 1510, thereby performing texturing on an area of the bottom layer 1510 of the virtual object 1500.

When tiling on the area of the bottom layer 1510 is completed as described above in (a) of FIG. 15, the processor 1330 may perform tiling for a next layer according to a sequence included in the building profile information. In this case, a layer closest to the ground following the bottom layer 1510 may be tiled. Accordingly, when a specific building consists of one middle layer as described above, tiling for the middle layer 1520 may begin. In this case, the processor 1330 may detect a tile (hereinafter referred to as a "middle layer tile") 1521 corresponding to the middle layer 1520 based on the building profile information, and tile the detected middle layer tile 1521 on a sub-area above an area of the bottom layer 1510 on which the tiling is carried out, that is, a sub-area corresponding to the middle layer 1520, thereby performing texturing on an area of the middle layer 1520 following the area of the bottom layer 1510.

Meanwhile, when tiling on the area of the middle layer 1520 is completed, tiling for the top layer 1530 may be subsequently carried out. In this case, the processor 1330 may detect a tile (hereinafter referred to as a top layer tile) 1531 corresponding to the top layer 1530 based on the building profile information, and tile the detected top layer tile 1531 on a sub-area above the area of the middle layer 1520 on which the tiling is carried out, that is, a sub-area corresponding to the top layer 1530, thereby performing texturing on an area of the top layer 1520 following the area of the bottom layer 1510 and the area of the middle layer 1520.

Accordingly, when the specific building consists of three layers, a bottom layer 1510, a middle layer 1520, and a top layer 1530 as described above as shown in FIG. 15, tiling of a sub-area corresponding to the bottom layer 1510 by the bottom layer tile 1511 ((a) of FIG. 15), tiling of a sub-area corresponding to the middle layer 1520 by the middle layer tile 1521 ((b) of FIG. 15), and tiling of a sub-area corresponding to the top layer 1530 by the top layer tile 1531 ((c) of FIG. 15) may be sequentially carried out, thereby carrying out tiling, that is, texturing, on an entire surface area of the virtual object 1500.

FIG. 16 is an exemplary diagram illustrating an example of a resampling process that is carried out as a preprocessing process when displaying a virtual object with textures synthesized according to the operation process illustrated in FIG. 13.

As described above, if a width of a surface area of a virtual object is not an integer multiple of a length of a tile, when tiles are tiled on the surface area of the virtual object, the tiles may be misaligned or a fragmentation phenomenon may occur in which part of the surface area is not filled with tiles.

As an example, as shown in (a) of FIG. 16, an outline 1610 of a cross-section of a virtual object that determines a surface of the virtual object, that is, a contour of the outer wall, may consist of straight lines connecting between a plurality of corner points, that is, outline vertices (e.g., a first vertex 1611, a second vertex 1612, a third vertex 1613).

Here, among the outline vertices shown above in (a) of FIG. 16, a distance between the first vertex 1611 and the second vertex 1612 and between the second vertex 1612 and the third vertex 1613 may be shorter than a preset tile length. Then, when tiling is performed, an area between the first vertex 1611 and the second vertex 1612 and an area between the second vertex 1612 and the third vertex 1613 may not be filled with tiles, or a phenomenon may occur in which tiles synthesized to the surface area protrude outside the surface area of the virtual object during tiling (fragmentation phenomenon).

In order to prevent the occurrence of such a fragmentation phenomenon, the processor 1330 may resample the outline vertices of the cross-section of the virtual object such that a width of the surface area corresponding to a distance between the first vertex 1611 and the second vertex 1612 and between the second vertex 1612 and the third vertex 1613 becomes an integer multiple of a preset tile length (tile width).

Accordingly, as shown in a resampled outline 1620 illustrated in (b) of FIG. 16, distances between the outline vertices, between the first vertex 1611 and the second vertex 1612 and between the second vertex 1612 and the third vertex 1613, which are not integer multiples of the tile width, may be integrated. That is, by omitting the second vertex 1612 through the resampling, the first vertex 1611 and the third vertex 1613 may be directly connected to each other, and accordingly, a distance between the first vertex 1611 and the third vertex 1613 that are connected to each other may become an integer multiple of a preset tile length. In this manner, a distance between outline vertices may become an integer multiple of a preset tile length, edges of respective tiles being tiled when tiling is performed on the surface area of the virtual object may be connected to one another. Therefore, the fragmentation phenomenon may not occur.

In the foregoing description of FIG. 13, on the assumption that a building profile in which tile information corresponding to each sub-area of the target building is assigned is stored in advance for the target building determined based on at least one of the location, speed, and driving direction of the vehicle 100, it has been described that texturing for the target building is carried out based on the tile information stored in the building profile.

However, on the contrary, tile information may not, of course, be assigned for at least part of the sub-areas of the target building. For example, when the vehicle 100 is driving in an area where tile information has not been collected in advance, for example, on a new road, at least one of the building profile information corresponding to buildings around the path in a building area along the driving path detected in the step S1303 of FIG. 13 may include a sub-area of the target building to which tile information has not been assigned.

Alternatively, in the case of building profile information on a target building for which tile information has not been collected, tile information may not have been assigned for all sub-areas of the target building. As an example, the processor 1330 may detect recognition information for recognizing a specific building from map information and characteristic information on the specific building, and generate building profile information including the detected recognition information, that is, location information of the specific building and information on the use or type of the specific building, that is, initial state building profile information that does not include tile information matching respective sub-areas of the specific building and combination information for combining the plurality of sub-areas in which tiling is carried out (e.g., tiling sequence information of the sub-areas).

The processor 1330 may detect a tile similar to an image of a sub-area detected from the specific building for the initial state building profile information or for building profile information in which the tile information is not assigned for a sub-area, and update the building profile information by adding the detected tile information.

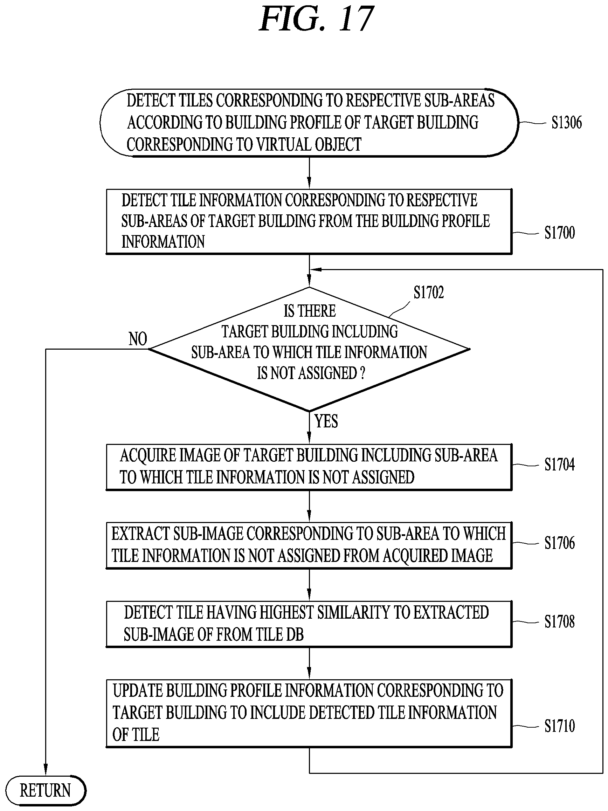

FIG. 17 is a flowchart illustrating an operation process of updating building profile information to include tile information on a sub-area to which tile information is not assigned.

First, when the step S1306 of FIG. 13 is carried out, the processor 1330 may detect tiles corresponding to respective sub-areas of a virtual object corresponding to a target building according to the building profile of the target building determined according to the location, speed, and driving direction of the vehicle 100. Then, tile information of tiles corresponding to the respective sub-areas of the target building may be detected from the building profile information (S1700). Furthermore, as a result of the detection in the step S1700, it may be checked whether there is a sub-area to which tile information is not assigned (S1702).

As a result of the check in the step S1702, there is no sub-area to which tile information is not assigned, the processor 1330 may proceed to the step S1307 of FIG. 13, and perform texturing on a surface area of the virtual object by tiling respective sub-areas in a sequence according to the building profile information using the detected tiles as described in FIG. 13.

However, as a result of the check in the step S1702, when there is a sub-area in the building profile information to which tile information is not assigned, the processor 1330 may acquire an image of the target building including the sub-area to which the tile information is not assigned (S1704). Furthermore, from the acquired image of the target building, a sub-image corresponding to the sub-area to which the tile information is not assigned may be extracted (S1706).

For example, the processor 1330 may segment the acquired image of the target building according to preset sub-area criteria. In this case, when the sub-area criterion is a layer (e.g., a bottom layer, at least one middle layer, a top layer), the processor 1330 may segment the acquired image of the target building into each layer based on a pattern of shapes or forms that are repeated for each preset inter-layer height or for each layer. Furthermore, from the segmented image, a sub-area to which the tile information is not assigned, that is, an image (sub-image) of a specific layer to which the tile information is not assigned may be extracted.

In the step S1706, when a sub-image of a specific layer to which tile information is not assigned is extracted, the processor 1330 may detect a tile most similar to the extracted sub-image from among the tiles stored in the tile DB 1341 (S1708).

Here, the detection of the tile most similar to the extracted sub-image may be carried out through a pre-trained artificial intelligence module. In this case, the trained artificial intelligence module may recognize a feature point of the sub-image from the extracted sub-image. Here, the feature point may be a pattern that is repeated for each area having a predetermined size, such as a shape, form, or color that is repeated in the sub-image.

Meanwhile, the trained artificial intelligence module may calculate a recognition rate for the feature point from the extracted sub-image. For example, the recognition rate is a numerical representation of a probability that the extracted sub-image can be recognized based on the feature point, and in the case of a sub-image in which a predetermined feature point is clearly and continuously repeated (e.g., at predetermined intervals), that is, when the clarity and repetition of the feature point are high, the recognition rate of the feature point for the sub-image may be calculated to be very high.

Conversely, when the feature point detected in the sub-image is not clear or has a low repetition rate, the recognition rate for the feature point may be low. That is, a sub-image with a high recognition rate may be an image that includes a repetitive shape or form, or color, which may be called a feature point, and a sub-image with a low recognition rate may be an image in which a repetitive shape or form, or color, which may be called a feature point, is not detected.

The trained artificial intelligence module may determine the feature point of the sub-image based on a recognition rate calculated from each of the feature points extracted from the sub-image. In this case, the trained artificial intelligence module may determine a feature point having a recognition rate above a predetermined level as a feature point of the sub-image.

When there are multiple feature points with a recognition rate above a predetermined level, the trained artificial intelligence module may detect the feature point with the highest recognition rate as the feature point of the sub-image. Then, the processor 1330 may proceed to the step S1708 to detect any one tile having the highest similarity to the feature point detected from the sub-image from among the tiles stored in the tile DB 1341.

Meanwhile, due to luminance, angle of view, weather, or the like, when an image with low resolution is acquired, or when an image part of which is distorted or obscured is acquired, the trained artificial intelligence module may not be able to detect feature points with a recognition rate above a predetermined level from the acquired image. In this case, when a feature point with a recognition rate above a predetermined level is not detected, the artificial intelligence module may determine that no feature points are detected from the sub-image.

Then, the processor 1330 may proceed to the step S1702 again to check whether there is a sub-area in the building profile information to which tile information is not assigned, and according to a result of the check, proceed to the step S1704 again to re-acquire an image of the target building including the sub-area to which tile information is not assigned. Therefore, when the step S1706 is carried out, a sub-image corresponding to a sub-area to which the tile information is not assigned may be extracted again. Therefore, an image of the sub-area to which a feature point with a recognition rate above a predetermined level is not detected may be extracted again, and the detection of the feature point may be attempted again according to the trained artificial intelligence module. That is, a sub-area to which tile information is not assigned in the step S1702 may refer to a sub-area where a feature point with a recognition rate above a preset level is not detected.

Here, the processor 1330 may attempt to detect feature points in an image of the same sub-area a preset number of times. That is, when a feature point with a predetermined level of recognition rate is not calculated even after the processor 1330 has attempted to detect the feature point the preset number of times, the processor 1330 may postpone feature point detection for the sub-area for a predetermined period of time. Furthermore, after the predetermined period of time has elapsed, when a building including a sub-area where the feature point is not detected is determined as a target building again, the feature point detection for the sub-area may be attempted again.

Meanwhile, in the step S1708, when a tile having the highest similarity to the feature point extracted from the sub-image is detected in the tile DB 1341, the processor 1330 may update the building profile information corresponding to the target building to include tile information of the detected tile (S1710). Therefore, for a sub-area to which the tile information has not been assigned, the tile detected in the step S1708 may be assigned to tile information through the step S1710. Therefore, using the updated building profile information, the processor 1330 may perform tiling using the assigned tile information for the sub-area.

Meanwhile, in the step S1710, when the building profile information is updated, the processor 1330 may proceed to the step S1702 again to check whether there is a target building that includes a sub-area to which tile information is not assigned. Furthermore, according to a result of the check, the processor 1330 may proceed to the step S1307 of FIG. 13, and perform texturing on the surface area of the virtual object by tiling respective sub-areas in a sequence according to the building profile information (when there is no sub-area to which tile information is not assigned). Alternatively, according to a result of the check, the processor 1330 may re-perform the process from the step S1704 to the step S1710 (when there are additional sub-areas to which tile information is not assigned).

Meanwhile, buildings may have much different characteristics in color, shape, size, and form, depending on the use or type thereof. For example, tiles used for texturing in residential buildings, officetel buildings, or commercial buildings may be distinguished from one another depending on a difference in shape, size, or form used therefor.

In this case, when the building characteristic information that can be acquired from the map information, that is, a group of tiles that are mainly used according to the type or use of the building, is classified in advance, the time for detecting tiles according to the similarity calculated from each tile and the feature points detected from the sub-image in FIG. 17 may be greatly shortened. Additionally, different sized tiles may be used depending on the type or use of the building, thereby carrying out texturing that is more similar to the target building.

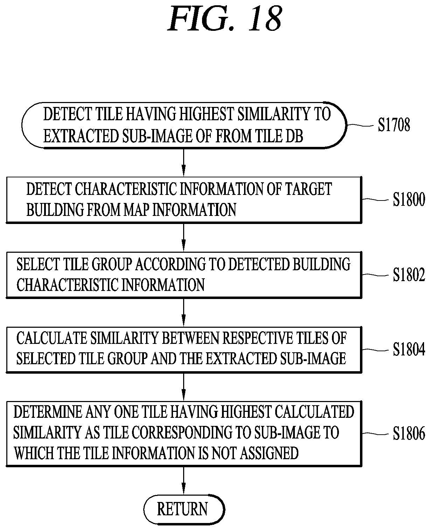

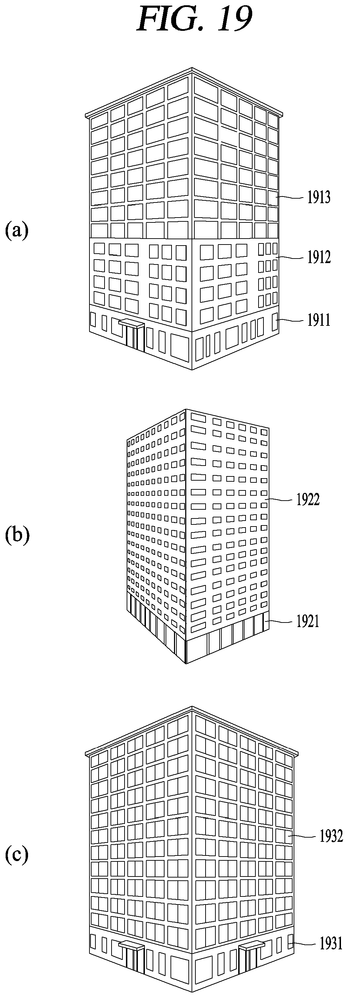

FIG. 18 and FIG. 19 are a flowchart and an exemplary diagram illustrating an operation process of determining a tile group according to characteristic information of a building as described above and determining tiles corresponding to the sub-areas through the determined tile group and an example thereof.

First, referring to FIG. 18, when a step of detecting a tile having the highest similarity to a feature point of a sub-image from the tile DB 1341 is carried out in the step S1708 of FIG. 17, the processor 1330 may first detect characteristic information of a current target building from map information (S1800). Here, the characteristic information may include at least one of the type information and the use information of the target building.

Furthermore, the processor 1330 may select at least one tile group corresponding to the detected characteristic information from the tile DB 1341 (S1802), and calculate a similarity between each tile of the selected tile group and a feature point extracted from the sub-image (S1804). Furthermore, based on the calculated similarity, any one tile having the highest similarity may be determined as a tile corresponding to a sub-area where the tile information is not assigned (S1806). Then, the processor 1330 may proceed to the step S1710 of FIG. 17 to update the building profile information.

As an example, the tiles included in the tile DB 1341 may have been grouped into different tile groups based on different types and uses of buildings. In this case, different tile groups may respectively have differently normalized tiles.

The tiles may be normalized tiles having a preset size. As an example, the tiles may be provided by various providers. The tiles may be provided from a preset server that is connected in communication with the processor 1330 or may be provided from a user. In this case, the user may store tiles that he or she has personally created or purchased or acquired from an offline provider in the memory 1340 so as to be used as tiles for texturing according to an embodiment of the present disclosure.

In this case, the tiles may have different sizes or aspect ratios depending on the provider, or tiling reference points for tiling respective tiles may be different. For example, tiles A provided by provider A may have width and height dimensions of 3 m and 3 m, respectively, while tiles B provided by provider B may have width and height dimensions of 4 m and 3 m, respectively. Additionally, while the tiles A have a tiling reference point at the center of the tile, the tiles B may have a tiling reference point at a lower left corner point. Here, the tiling reference point is a reference point at which tiling of tiles is carried out, and respective tiles may be synthesized based on the tiling reference point.

Therefore, when tiles are acquired, the processor 1330 may perform normalization on the acquired tiles. For example, for tiles that have different sizes or aspect ratios, the processor 1330 may normalize sizes or ratios of the tiles through adjusting widths or heights of the tiles. In addition, the normalization may further include unifying tiling reference points of respective tiles so as to have the same tiling reference point based on the sizes or ratios of the normalized tiles.

In this case, tiles from different tile groups may be tiles that are normalized differently. For example, sizes or ratios thereof may be different, or tiling reference points thereof may be set differently. In this case, when the tiles in each tile group are normalized differently, the tiles included in each tile group may be mutually exclusive between each tile group, and a tile included in any one tile group may not be included in another tile group.

Alternatively, even though the tile groups are different, the normalization of tiles may be carried out in the same manner. In this case, even though the tile groups are different, they may not be mutually exclusive, and accordingly, tiles included in any one tile group may also be jointly included in at least one other tile group.

Meanwhile, when selecting a tile group in this manner and calculating a similarity to a feature point extracted from a sub-image for tiles through the selected tile group, there is an advantage in that a number of tiles for which the similarity is calculated may be greatly reduced. Therefore, a time for detecting a tile based on the similarity in the step S1708 may be significantly shortened. In addition, tiles with optimized sizes or tiling reference points that are set (normalized) according to the characteristics of the target building may be applied, thereby having an advantage in that the tiles normalized according to the characteristics of the target building can be used for texturing the target building.

Meanwhile, FIG. 19 shows examples in which texturing has been carried out for a target building according to a building profile in which tiles from different groups are matched to respective sub-areas according to the characteristics of the target building.

First, referring to (a) of FIG. 19, (a) of FIG. 19 illustrates an example of a residential-commercial complex building in which a target building is a combination of commercial and residential spaces. In the case of such a residential-commercial complex building, the use of some layers above the ground may be assigned to commercial spaces, and layers above the commercial spaces may be assigned to residential spaces.

In order to perform tiling for the building, the processor 1330 may first divide the building into a bottom layer, a middle layer, and a top layer. In this case, the top layer is distinguished when it has a shape or form that is distinct from the middle layer, such as a roof, and when there is no shape or form that is distinct from the middle layer, such as a roof, the processor 1330 may divide the building only into the bottom layer and the middle layer.

Therefore, in the case of a residential-commercial complex building shown in (a) of FIG. 19, the processor 1330 may first distinguish the bottom layer 1911, and then distinguish all the layers thereabove as middle layers. In this case, for a residential-commercial complex building, as described above, it may be divided into a commercial space and a residential space, and since the commercial space and the residential space are distinguished from each other in shape, color, and the like due to different uses thereof, the processor 1330 may divide the middle layer of the building into a first middle layer 1912 and a second middle layer 1913. In this case, the first middle layer 1912 may be a layer assigned to a commercial space, and the second middle layer 1913 may be a layer assigned to a residential space.

Then, the processor 1330 may tile a first tile included in a first tile group for a sub-area assigned to the first middle layer 1912, and tile a second tile included in a second tile group for a sub-area assigned to the second middle layer 1913. Meanwhile, for the bottom layer 1911, a third tile included in a bottom layer group may be tiled.

In this case, the first tile group may be a group of tiles determined based on images of buildings assigned to commercial spaces, and the second tile group may be a group of tiles determined based on images of buildings assigned to residential spaces. Additionally, the bottom layer group may be a group of tiles including a revolving door or an entrance. Here, the first tile group, the second tile group, and the bottom layer group may be subgroups of a tile group grouped as a residential-commercial complex tile group in the tile DB 1341.

Meanwhile, (b) of FIG. 19 illustrates an example in which the target building is a residential building. In the case of a building where an entire building is assigned to a single use, such as a residential building, the building may be divided into a bottom layer 1921 and one middle layer 1922. In this case, the processor 1330 may tile a sub-area corresponding to the bottom layer 1921, that is, an area of the bottom layer 1921, using a tile included in the middle layer group, and may tile an area of the middle layer 1922 using a tile included in the middle layer group. Here, the bottom layer group and the middle layer group may be subgroups of a tile group grouped as a residential building tile group in the tile DB 1341.

Similarly, (c) of FIG. 19 illustrates an example in which the target building is an officetel building. The officetel building may be a building where an entire building is assigned to a single use, like the residential building. Therefore, it may be divided into a bottom layer 1931 and one middle layer 1932. In this case, the processor 1330 may tile an area of the bottom layer 1931 using a tile included in the bottom layer group, and may tile an area of the middle layer 1932 using a tile included in the middle layer group. Here, the bottom layer group and the middle layer group may be subgroups of a tile group grouped as an officetel building tile group in the tile DB 1341.

Meanwhile, even though they are tiles in the same group, the tiles of the residential-commercial building tile group, the tiles of the residential building tile group, and the tiles of the officetel building tile group may be different from one another. For example, even though they are the same bottom layer tiles or middle layer tiles, the tiles of the residential-commercial building tile group, the tiles of the residential building tile group, and the tiles of the officetel building tile group may be different from one another.

Alternatively, even though they are tiles in different groups, tiles in groups corresponding to the same use may be the same as one another as long as the tile groups are distinguished according to the use of the building. For example, in the case of a middle layer tile group of a residential building, a tile group of a layer (e.g., second middle layer 1913) assigned to a residential space in a residential-commercial complex building, that is, the second tile group and the middle layer group of the residential tile group may be the same group. In this case, a tile used in the middle layer of the residential building as shown in (b) of FIG. 19 may also be assigned to a tile of the second middle layer 1913 as shown in (a) of FIG. 19, that is, a sub-area assigned to a residential space.

Meanwhile, in the foregoing description, an operation process of detecting tile information for a sub-area to which tile information is not assigned and updating building profile information to further include the detected tile information has been described. However, on the contrary, even though it is a sub-area to which tile information has already been assigned, tile information may of course be updated based on the acquired image to match a tile that is more similar to an actual target building.

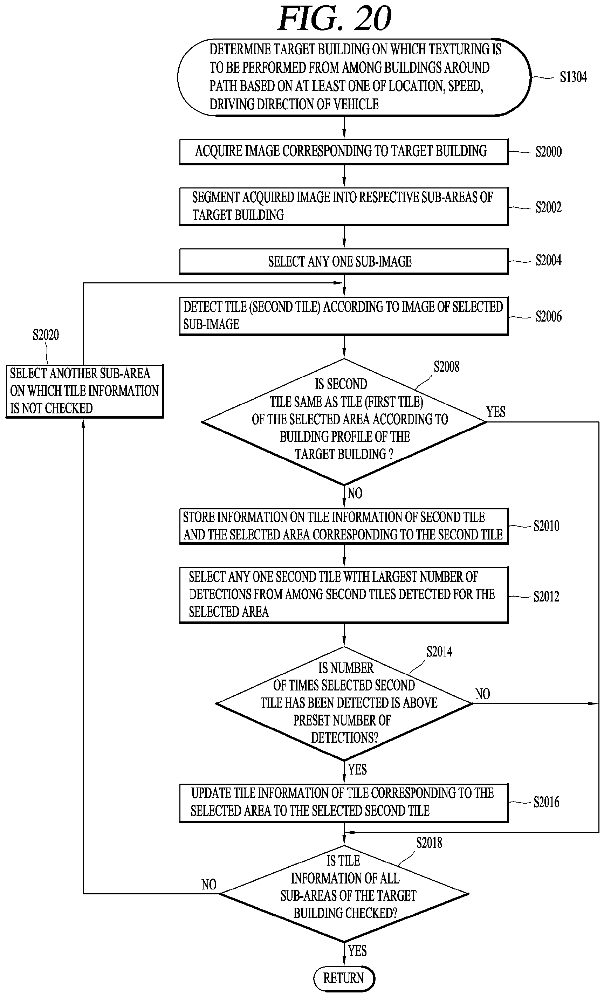

FIG. 20 is a flowchart illustrating an operation process of updating, by the display device 1300 according to an embodiment of the present disclosure, tile information assigned to a specific partial area based on an acquired image.

Referring to FIG. 20, the processor 1330 of the display device 1300 may determine a target building on which texturing is to be performed based on the location, speed, and driving direction in the step S1304 of FIG. 13. Furthermore, when the target building is determined, an image corresponding to the determined target building may be acquired (S2000).

When an image of a target building is acquired in the step S2000, the processor 1330 may segment the acquired image into images for a plurality of sub-areas (S2002). For example, the processor 1330 may divide the target building into a bottom layer and at least one middle layer based on the image of the target building. In addition, a top layer may be further distinguished based on whether it contains a form or shape that is distinguished from the middle layer, such as a roof. Furthermore, the acquired image may be segmented for respective divided layers, an image for each layer, that is, an image for each sub-area, may be acquired.

When an image of each sub-area is acquired through image segmentation in the step S2002, the processor 1330 may select any one sub-area (S2004). Furthermore, a feature point may be recognized from an image of the currently selected sub-area, and any one tile (second tile) from among the tiles provided in the tile DB 1341 may be detected based on the recognized feature point (S2006). For example, the processor 1330 (or artificial intelligence module) may select at least one tile group according to the use or type of the target building in each tile group of the tile DB 1341, and detect any one tile that has the highest similarity to a feature point recognized from the selected sub-area from among the tiles of the selected tile group.

When a tile corresponding to the feature point recognized in the step S2006, that is, a second tile, is detected, the processor 1330 may compare a tile (first tile) according to the tile information assigned to the selected sub-area included in the building profile information with the second tile detected in the step S2006 (S2008).

Furthermore, as a result of the comparison, when the first tile and the second tile are not the same, the processor 1330 may store information on the second tile detected in the step S2004 for the currently selected sub-area (S2010). In this case, when there is a history of detecting a second tile different from the first tile for the currently selected sub-area, a plurality of items of second tile information may be stored for the currently selected sub-area. In this case, at least some of the plurality of items of second tile information may be tile information corresponding to the same tile.

Therefore, when information on the second tile is stored for the currently selected sub-area, the processor 1330 may select any one second tile with the largest number of detections from among the second tiles detected for the currently selected sub-area (S2012). Furthermore, the processor 1330 may check whether a number of times any one currently selected second tile has been detected is above a preset number of tile swaps (S2014). Furthermore, when the number of times the any one of the second tiles is detected as a result of the check in the step S2014 is above a number of times of tile replacements, the processor 1330 may update building profile information corresponding to the target building to replace the tile information of the tile corresponding to the currently selected sub-area with the tile information of the any one of the second tiles selected in the step S2012.

Accordingly, the processor 1330 of the display device 1300 according to an embodiment of the present disclosure may replace tile information included in the building profile information based on the image of the target building acquired in real time, when a number of other more similar tiles are detected based on a real-time image acquired from the target building, even though tile information is already assigned in the building profile information.

Therefore, when the image of the target building changes due to a change according to the passage of time, such as a change in season, tiles synthesized on a surface area of the target building may also change to different tiles according to the image of the target building that changes due to the change in season, and the like. That is, a change in the appearance of the target building according to the passage of time may be reflected in the tiles, and as a result, a texture synthesized to a surface area of a virtual object corresponding to the target building may reflect the passage of time.

Meanwhile, in the step S2016, when the building profile information is updated to replace the tile information for the selected sub-area, the processor 1330 may determine whether a first tile corresponding to the tile information for all sub-areas of the target building is the same as a second tile detected for each sub-area (S2018). Furthermore, as a result of the determination in the step S2018, when it is checked for all sub-areas of the target building whether a tile assigned in the building profile is the same as a tile detected from the acquired image of the sub-area, the operation process of the FIG. 20 may be terminated, and the process may proceed to the step S1305 of the FIG. 13 to detect a virtual object corresponding to the currently determined target building.

On the contrary, as a result of the determination in the step S2018, when it is not checked for all sub-areas of the target building whether a tile assigned in the building profile is the same as a tile detected from the acquired image of the sub-area, the processor 1330 may select another sub-area of the target building for which it is not checked whether the tiles are the same. Then, the processor 1330 may proceed to the step S2006 to detect a second tile again according to the image of the currently selected sub-area, and proceed to the step S2008 to compare again whether the detected second tile and the first tile assigned to the currently selected sub-area according to the building profile information are the same.

As a result of the comparison, when the second tile and the first tile are different from each other, the process from the step S2010 to the step S2016 may be carried out as described above. Here, even though the second tile and the first tile are different in the step S2008, when a number of detections of the second tile with the largest number of detections in the check result of the step S2014 is below a preset number of tile replacements, the processor 1330 may determine that the tile (first tile) assigned in the current building profile information is a tile most similar to the currently selected sub-area. Accordingly, the processor 1330 may proceed directly to the step S2018 without replacing tiles and determine whether the tiles are the same for all sub-areas of the target building.

In addition, as a result of the comparison in the step S2008, even though the second tile and the first tile are the same as each other, the processor 1330 may determine that the tile (first tile) assigned in the current building profile information is a tile most similar to the currently selected sub-area. Accordingly, the processor 1330 may proceed directly to the step S2018 without replacing tiles and determine whether the tiles are the same for all sub-areas of the target building.

Furthermore, when proceeding to the step S2018, depending on the determination result of whether tile replacement for all sub-areas has been checked, the process may proceed to the step S2020 of selecting another sub-area for which tile replacement has not been checked, or may proceed to the step S1305 of FIG. 13 of detecting a virtual object corresponding to the currently determined target building.

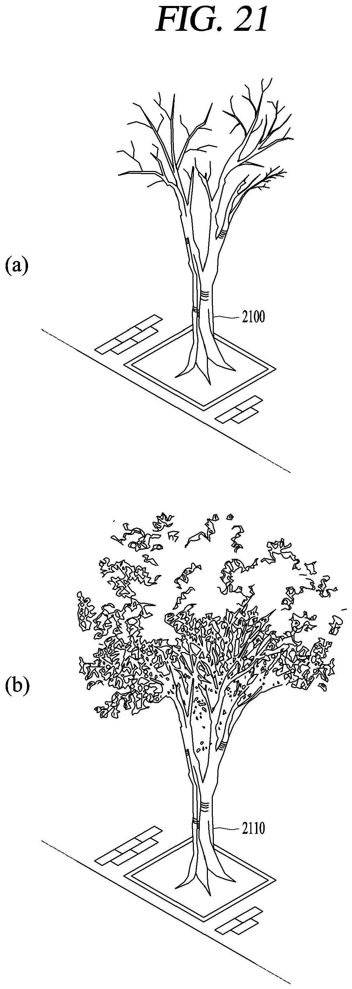

FIG. 21 is an exemplary diagram illustrating an example of updating a texture corresponding to an object around the vehicle 100 to reflect the passage of time according to the operation process of FIG. 20. For convenience of explanation, it will be described on the assumption that an object around the vehicle 100 whose texturing is carried out by tiling using a tile is a 'tree'. In this case, the processor 1330 may perform texturing on a 'tree', which is an object around the vehicle, through tiling using at least one tile.

First, referring to (a) of FIG. 21, when the season is winter, the processor 1330 may acquire an image of the 'tree', which is an object around the vehicle. In this case, since the season is winter, a tree-shaped tile with only branches remaining (e.g., a first tile 2100) may be determined as a tile most similar to the object 'tree' around the vehicle, and accordingly, when tiling is carried out with the first tile, the 'tree', which is an object around the vehicle, may be textured as shown in (a) of FIG. 21.

Meanwhile, as the season changes to summer according to the passage of time, the 'tree', which is an object around the vehicle, may become lush with leaves. In this case, the processor 1330 may acquire an image in the shape of lush leaves from the 'tree', which is an object around the vehicle. Furthermore, from the acquired image, a tile in the shape of a tree with lush leaves (a second tile 2110) may be determined as a tile most similar to the object 'tree' around the vehicle.

Then, the processor 1330 may compare the first tile 2100 included in the building profile information with the second tile 2110 detected from the currently acquired image according to the operation process described in FIG. 20. Then, the processor 1330 may determine that the first tile 2100 and the second tile 2110 are different from each other, and may store information of the second tile 2110 with respect to the object 'tree' around the vehicle.

Meanwhile, the processor 1330 may repeat the foregoing process each time the vehicle drives around the object 'tree' around the vehicle. Accordingly, a number of times the second tile 2110 is detected for the object 'tree' around the vehicle may gradually increase. Furthermore, when the detected number of times reaches a preset number of tile replacement, the processor 1330 may update the tile information included in the building profile information corresponding to the object 'tree' around the vehicle to be changed to the second tile 2110. Then, the processor 1330 may tile the object 'tree' around the vehicle according to the building profile information with the second tile 2110 according to the tile information of the second tile 2110 in the updated building profile information. Accordingly, as shown in (b) of FIG. 21, a virtual object corresponding to the object 'tree' around the vehicle may be textured as a tree with lush leaves.

Meanwhile, the foregoing description of FIG. 21 has been described by using an object 'tree' around the vehicle 100 as an example for convenience of explanation, but may also be applied to any building around the vehicle 100. In this case, a change in a signboard on a building or remodeling of the building may be a change according to the passage of time as described above in FIG. 21. That is, when an external change occurs, such as remodeling of a building around the vehicle 100 or replacement of a signboard, the processor 1330 may detect the most similar tile based on real-time images acquired from the building around the vehicle 100, and update tile information included in the building profile information according to a number of times the tile is detected. Therefore, a digital twin map that is more similar to the real world may be provided to a user.

Meanwhile, in the foregoing description, the processor 1330 of the display device 1300 has generated building profile information corresponding to buildings around the vehicle 100 based on images collected from the camera 310 of the vehicle 100 (building profile information update).

However, in contrast, the building profile information may, of course, be provided from a cloud server (e.g., a second cloud server). In this case, the processor 1330 may receive not only the tile DB 1341 but also building profile information for at least one building from the cloud server, and perform texturing on a virtual object on map information corresponding to the recognized building based on building profile information corresponding to the building recognized from around the vehicle 100 among the received building profile information.

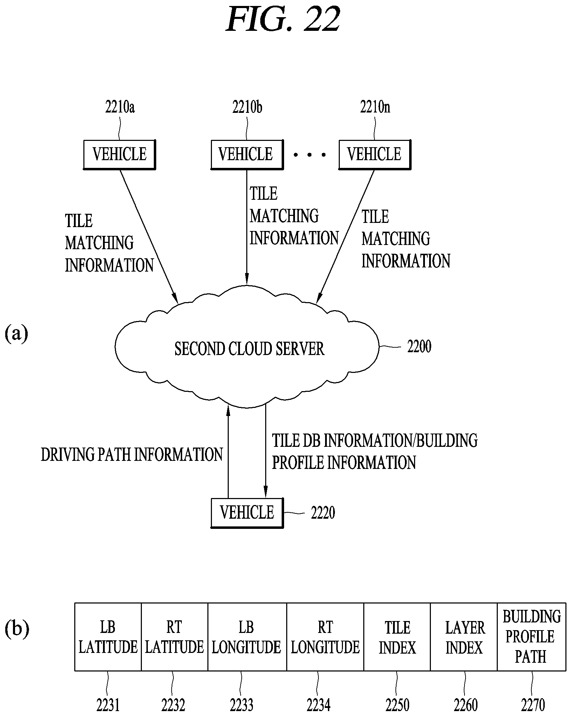

FIG. 22 is a conceptual diagram illustrating a path guiding system including a display device and a cloud server providing building profile information and tile information according to such an embodiment of the present disclosure.

First, (a) of FIG. 22 is a conceptual diagram illustrating a path guiding system including a display device and a cloud server that provides building profile information and tile information.

Here, the cloud server that provides the building profile information and tile information may be the same server as the cloud server 1350 of FIG. 10 that provides map information to the display device 1300 using a digital twin map platform. In this case, the cloud server 1350 of FIG. 10 may provide not only map information but also the building profile information and tile information to the display device 1300.

However, the cloud server that provides the building profile information and tile information may, of course, be a cloud server that is distinguished from the cloud server 1350 of FIG. 10 that provides map information to the display device 1300 using the digital twin map platform. Accordingly, in order to distinguish the cloud server 1350 that provides the map information from the cloud server that provides the building profile information and tile information, the cloud server that provides the map information will be referred to as a first cloud server 1350, and the cloud server that provides the building profile information and tile information will be referred to as a second cloud server 2200.

In the following description, for convenience of explanation, it will be described on the assumption that the second cloud server 2200 is a different server that is distinguished from the first cloud server 1350.

Referring to (a) of FIG. 22, first, the second cloud server 2200 may provide tile DB information to the processor (hereinafter referred to as a processor 1330) of the display device 1300 provided in the vehicle 2220. The tile DB information, which is information including a plurality of tiles and group information on the plurality of tiles as well as information that allows the processor 1330 to generate a tile DB, may be information that enables the generation of a tile DB in synchronization with the tile DB provided in the second cloud server 2200.

Additionally, the tile DB information may be information for updating a tile DB provided in the display device 1300. That is, when the tile DB in the second cloud server 2200 is updated, the second cloud server 2200 may provide data for updating the synchronized tile DB of the display device 1300 as the tile DB information. That is, based on the tile DB information, the tile DB of the second cloud server 2200 and the tile DB 1341 of the display device 1300 may be synchronized with each other.

Meanwhile, the tile DB information may be information for generating a tile DB used to generate building profile information in a plurality of vehicles 2210a, 2210b, ... 2210n that provide building profile information to the second cloud server 2200. That is, the second cloud server 2200 may transmit the tile DB information to the plurality of vehicles 2210a, 2210b, ... 2210n, and the plurality of vehicles 2210a, 2210b, ... 2210n may generate a tile DB in synchronization with the second cloud server 2200 according to the transmitted tile DB information. Furthermore, the second cloud server 2200 may collect tile matching information detected by the plurality of vehicles 2210a, 2210b, ... 2210n, which are connected to one another through a network, for buildings around the vehicles.

Here, the plurality of vehicles 2210a, 2210b, ... 2210n may be vehicles each provided with the display device 1300 according to the foregoing embodiment of the present disclosure. In this case, the second cloud server 2200 may request the tile matching information on the respective sub-areas of the identified buildings around the vehicles from the display device 1300. Then, the display device 1300 may select matching tiles for the respective sub-areas of buildings around the vehicle provided with the display device 1300 in response to the request, and transmit information on the selected tiles as tile matching information to the second cloud server 2200.

Meanwhile, the tile matching information, which is information on tiles matching respective sub-areas of buildings, may be information on tiles selected by the plurality of vehicles 2210a, 2210b, ... 2210n as being similar to the respective sub-areas of the buildings based on images acquired from the buildings around them. The selected tiles may be tiles included in a tile DB provided in each of the plurality of vehicles, which is synchronized with the tile DB of the second cloud server 2200 according to tile DB information provided from the second cloud server 2200.

(b) of FIG. 22 illustrates an example of tile matching information collected from the plurality of vehicles 2210a, 2210b, ... 2210n. As shown in (b) of FIG. 22, the tile matching information collected from the plurality of vehicles 2210a, 2210b, ... 2210n, which is recognition information for recognizing a specific building, may include location information (left bottom (LB) latitude 2231, right top (LT) latitude 2232, LB longitude 2233, RT longitude 2234) of the specific building, information (layer index) 2260 on a sub-area of the specific building, for example, a specific layer (e.g., a bottom layer, at least one middle layer, a top layer), tile information (tile index) 2250 on a tile corresponding to the sub-area, and building profile path information 2270 indicating building profile information corresponding to the specific building.

In this case, the LB latitude and LB longitude and RT latitude and RT longitude may be location information of the specific building extracted from map information. For example, the LB latitude 2231 and LB longitude 2233 may be latitude and longitude coordinate information on map information corresponding to a lower left point of a cross-section of the specific building. In addition, the RT latitude 2232 and RT longitude 2234 may be latitude and longitude coordinate information on map information corresponding to an upper right point of a cross-section of the specific building.

Meanwhile, when tile matching information is collected from the plurality of vehicles 2210a, 2210b, ... 2210n, the second cloud server 2200 may generate building profile information on buildings around the plurality of vehicles 2210a, 2210b, ... 2210n based on the collected tile matching information. For example, the second cloud server 2200 may classify tile matching information for the same building based on building recognition information (e.g., building location information) included in the tile matching information. Therefore, tile matching information including different sub-areas (layers) and tile information corresponding to the sub-areas may be sorted for each building. Furthermore, for each building, information on tiles selected to match each sub-area (layer) may be acquired.

Then, the second cloud server 2200 may determine a tile corresponding to each sub-area of each building based on the received tile matching information. For example, when tile matching information in which different tiles are matched to a specific sub-area of a specific building is received, the second cloud server 2200 may determine any one tile with the largest number of matches to the specific sub-area of the specific building as a tile that matches the specific sub-area of the specific building. Furthermore, building profile information corresponding to the specific building, which includes information on tiles determined for each sub-area of the specific building, may be generated.

Furthermore, the second cloud server 2200 may provide building profile information on at least one building in response to a request when requested. For example, the second cloud server 2200 may provide building profile information on at least one building upon a request from the vehicle 2220 (or the display device 1300 provided in the vehicle) as shown in (a) of FIG. 22.

In this case, the processor 1330 of the display device 1300 provided in the vehicle 2220 may acquire, when a destination of driving is determined, a current location of the vehicle 2220 and a driving path according to the determined destination from the navigation system 770. Furthermore, when the driving path is acquired, a request for building profile information according to the acquired driving path may be transmitted to the second cloud server 2200.

Here, the request for building profile information transmitted to the second cloud server 2200 may include information on the driving path (hereinafter referred to as driving path information). Then, the second cloud server 2200 that receives the request may generate a building area according to the driving path and determine buildings around a path according to the driving path based on the generated building area. Furthermore, for respective buildings around the determined path, building profile information generated according to tile matching information collected from the plurality of vehicles 2210a, 2210b, ... 2210n may be provided in response to the request.

Here, an operation process of the second cloud server 2200 that generates the building area and determines buildings around the path based on the generated building area may be carried out similarly to that described above in FIG. 14.

Meanwhile, the vehicle 2220 that provides driving path information to the second cloud server 2200 and receives building profile information on at least one building around the path in response to the provided driving path information may also be one of the plurality of vehicles 2210a, 2210b, ... 2210n that provide the tile matching information to the second cloud server 2200.

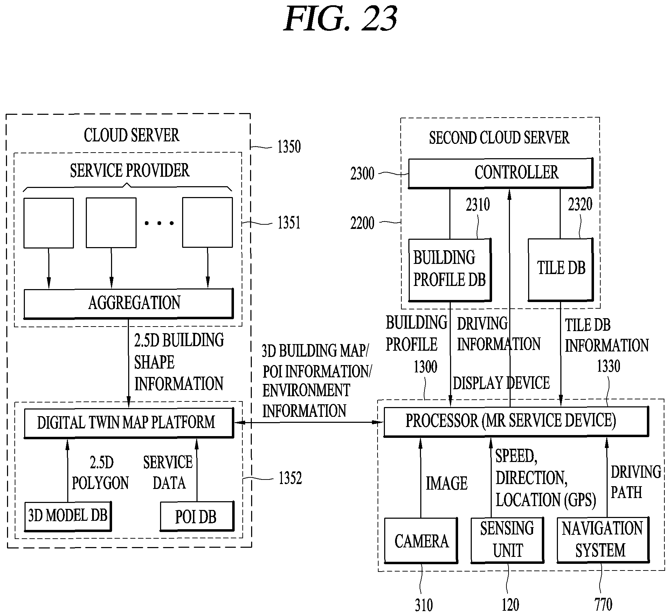

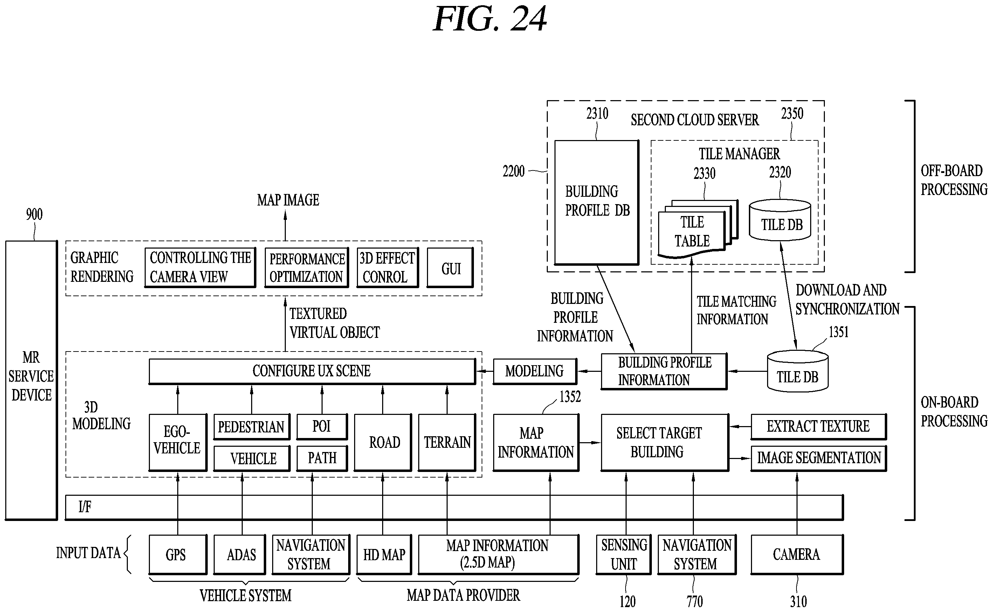

FIG. 23 is a block diagram illustrating a structure of a path guiding system according to FIG. 22. Furthermore, FIG. 24 is a conceptual diagram illustrating an operation flow of a path guiding system including a display device, an MR service device, and a second cloud server as illustrated above in FIG. 23.

First, referring to FIG. 23, the first cloud server 1350 may determine POI information based on a current location, direction, speed, and driving path of the vehicle in the same manner as described above in FIG. 10, and provide three-dimensional map data that further includes the determined POI information to a three-dimensional building map. In addition, the first cloud server 1350 may provide the display device 1300 with 3D map data, which further includes information related to situations around the vehicle, based on the provided information of the objects around the vehicle.

Furthermore, the display device 1300 may render an MR image based on the 3D map data provided from the first cloud server 1350. Furthermore, the display device 1300 may control the MR renderer to display a 3D map screen including models for buildings around the vehicle based on the provided 3D map data. In addition, the path guidance device 1300 may display a graphic object corresponding to the vehicle on the 3D map screen, and display graphic objects corresponding to provided POI data and situation information around the vehicle on the 3D map screen.

Meanwhile, the second cloud server 2200 may be configured to include a tile DB 2320 including a plurality of tiles and grouping information of each tile, a building profile DB 2310 in which building profile information generated from tile matching information collected from a plurality of vehicles is stored, and a controller 2300 that controls an overall function of the second cloud server 2200 and controls each element connected thereto. Additionally, although not shown, it may be configured to include a communication module (not shown) for performing communication connections with a plurality of different vehicles and the processor 1330.

The controller 2300 of the second cloud server 2200 may allow a plurality of vehicles or display devices 1300 that are connected in communication with the second cloud server 2200 to generate the tile DB 1351, or distribute tile DB information that can synchronize the tile DB 1351 provided in the plurality of vehicles or display devices 1300 with the tile DB 2320 of the second cloud server 2200 to the plurality of vehicles or display devices 1300 through the communication module. Accordingly, the plurality of vehicles or display devices 1300 may generate and maintain a tile DB that is the same as the tile DB 2320 of the second cloud server 2200.

In this manner, while a tile DB 1351 that is the same as the tile DB 2320 of the second cloud server 2200 is generated and maintained, the processor 1330 may provide a driving path acquired from the navigation system 770 to the second cloud server 2200. Then, the controller 2300 of the second cloud server 2200 may detect one or more buildings around the path based on the received driving path, and detect building profile information corresponding to the respective detected buildings around the path from the building profile DB 2310. Furthermore, building profile information on the respective at least one building around the path detected from the building profile DB 2310 may be provided to the processor 1330 in a response to the received driving path.

Then, the processor 1330 may detect at least one of buildings around the path according to the driving path as a target building on which texturing is to be performed based on at least one of a location, speed, and driving direction of the vehicle. Furthermore, building profile information corresponding to at least one target building may be detected from among the building profile information received from the second cloud server 2200, and respective sub-areas of the target building may be sequentially tiled using a sequence for respective sub-areas included in the building profile information corresponding to the target building and tiles matching the respective sub-areas. Therefore, texturing may be performed on a surface area of the target building. The on-board processing process in the FIG. 24, which is an operation process performed inside the display device 1300, may be similar to or the same as the corresponding processes in the FIG. 12.

Meanwhile, as described above, the second cloud server 2200 may collect tile matching information including tile information corresponding to respective sub-areas of each building determined by a plurality of different vehicles (or the processor of the display device provided in the vehicle) from the plurality of different vehicles. Accordingly, even though it is the same building, tile matching information including different tiles for a specific sub-area may be collected depending on an entity that collects the tile matching information.

Accordingly, when tile matching information including information of different tiles for the same sub-area of the same building is received, the second cloud server 2200 may store the information of the different tiles in the form of a table. A table including information on different tiles collected for the same sub-area of the same building is referred to as a tile table 2330.

Meanwhile, the controller 2300 of the second cloud server 2200 may detect information of different tiles collected for the same sub-area of the same building based on the tile table 2330. Furthermore, based on the tile table 2330, for a specific sub-area of a specific building in which the different tiles are collected, a tile with the largest number of collections may be detected. Furthermore, the tile with the largest number of collections may be determined as a tile matching a specific sub-area of the specific building. Furthermore, when a matching tile is determined for each sub-area of the specific building, building profile information including information on tiles corresponding to respective sub-areas of the specific building may be generated. In this case, the building profile information may be stored in the building profile DB 2310 so as to correspond to the specific building.

Furthermore, when there is a request for building profile information for the specific building, the controller 2300 of the second cloud server 2200 may detect and provide building profile information corresponding to the specific building from the building profile DB 2310.

Meanwhile, the display device 1300 that has received the building profile information may detect tiles matching respective sub-areas of the target building from the tile DB 1351 according to the building profile information as described above. Furthermore, different sub-areas of a virtual object corresponding to the specific building may be sequentially tiled with the detected tiles to perform texturing on a surface area of the virtual object.

Meanwhile, the processor 1330 may acquire an image of the target building as described above in FIG. 20 and detect a tile corresponding to each sub-area from the acquired image. Furthermore, when a tile detected for a specific sub-area of the target building is different from a tile matching the specific sub-area according to the building profile information, the processor 1330 may transmit the information of the specific sub-area and the tile information of a tile detected differently from the building profile information to the second cloud server 2200. Then, the information of the specific sub-area and the tile information of a tile detected differently from tile information in the building profile information may be stored in the tile table 2330.

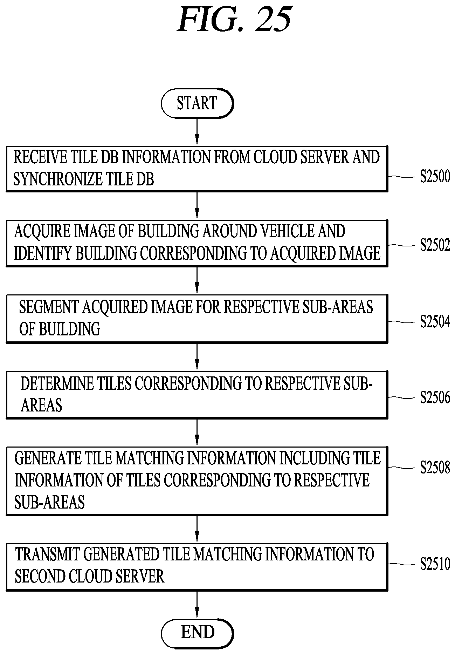

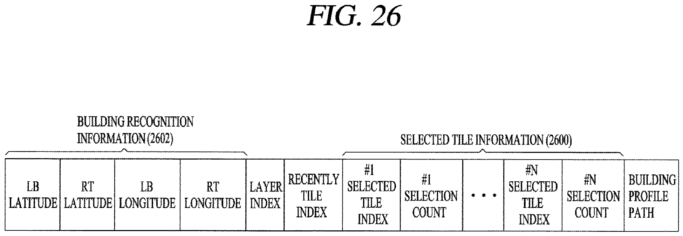

In the above, the configuration of a path guiding system including the second cloud server 2200 that provides a tile DB and building profile information according to an embodiment of the present disclosure has been described in detail. Hereinafter, an operation process of generating, by a plurality of vehicles (or display devices) connected to the second cloud server 2200, tile matching information and transmitting the generated information to the second cloud server 2200, and an operation process of updating, by the controller 2300 of the second cloud server 2200, building profile information based on tile matching information provided from the plurality of vehicles (or display devices) will be described in detail with reference to FIGS. 25 and 26, respectively.

FIG. 25 is a flowchart illustrating an operation process of generating, by a vehicle connected in communication with the second cloud server 2200, tile matching information and providing the generated information to the second cloud server 2200 in the path guiding system illustrated in FIG. 22. Here, the vehicle may be a vehicle provided with the display device 1300 according to an embodiment of the present disclosure and connected in communication with the second cloud server 2200.

Referring to FIG. 25, the processor 1330 of the display device 1300 provided in the vehicle may first receive tile DB information from the second cloud server 2200. Furthermore, based on the received tile DB information, a tile DB may be generated or synchronization between the previously generated tile DB and the tile DB of the second cloud server 2200 may be performed (S2500).

When the tile DB is synchronized, the processor 1330 may acquire and identify images of buildings located around the vehicle (S2502). To this end, the processor 1330 may control the camera 310 through the interface 1320 to acquire an image of a building located around the vehicle. Furthermore, using a radar signal, a lidar signal, an ultrasonic signal, an infrared signal, or the like, which is emitted from the vehicle, a distance and angle between the vehicle and the building around the vehicle from which the image has been acquired may be calculated. Furthermore, based on a current location of the vehicle (e.g., a latitude and longitude in consideration a speed and driving direction) and the calculated distance and angle, an exact location of the detected building around the vehicle may be calculated. Furthermore, a virtual object corresponding to the calculated building location may be detected from map information, thereby identifying the building around the vehicle.

Furthermore, the processor 1330 may segment the acquired image of the building around the vehicle into a plurality of sub-areas (S2504). For example, the processor 1330 may extract a sub-area image corresponding to a bottom layer area and a sub-area image corresponding to at least one middle layer based on an image of a building around the vehicle. In addition, when there is a structure such as a roof, the processor 1330 may further extract a sub-area image corresponding to a top layer area.

When sub-area images corresponding to a respective plurality of sub-areas are extracted through segmentation in the step S2504, the processor 1330 may determine tiles corresponding to the respective extracted sub-area images based on the tiles stored in the tile DB (S2506). In this case, the processor 1330 may acquire characteristic information of a building around the vehicle, for example, information on the use or type, from map information based on a result of identification of the building around the vehicle, and may determine tiles corresponding to the sub-areas based on a tile group in the tile DB according to the acquired use or type of the building.

Here, the processor 1330 may determine tiles corresponding to the sub-areas based on a result of recognizing feature points of the sub-areas. In this case, only for a sub-area where a recognition rate of the feature point is above a predetermined level, the processor 1330 may determine a tile corresponding to the sub-area based on a similarity of the feature point. Therefore, in the case of a sub-area where the recognition rate is below a predetermined level, the processor 1330 may not determine a tile for the sub-area. Therefore, in the step S2506, tiles corresponding to all sub-areas may not be determined.

When tiles corresponding to the respective sub-areas are determined, the processor 1330 may generate tile matching information including tile information of the tiles corresponding to the respective sub-areas (S2508). Here, the tile matching information may include information on combination locations of the respective sub-areas or combination information on combination sequences (e.g., tiling sequences) based on the acquired image of the building surrounding the vehicle. In addition, the tile matching information may include recognition information for recognizing the building around the vehicle, that is, location information of the building around the vehicle based on a result of identification of the building around the vehicle.

When building profile information is generated in the step S2508, the processor 1330 may transmit the generated building profile information to the second cloud server 2200 (S2510).

Meanwhile, the second cloud server 2200 may determine a tile matching each sub-area of a specific building based on tile matching information collected from a plurality of vehicles for the specific building. In this case, if there are a plurality of tiles matching a specific sub-area of the specific building, the second cloud server 2200 may determine, based on the collected tile matching information, from among different tiles matching the specific sub-area, any one tile with the largest number of matches as a tile matching the specific sub-area. Furthermore, building profile information including combination information of respective sub-areas included in each tile matching information, recognition information (location information) of the specific building, and characteristic information (a use or type of the building) of the specific building extracted from map information may be generated.

Furthermore, when there is a request for building profile information from another vehicle (or display device), the second cloud server 2200 may generate a building area based on a driving path acquired from the other vehicle. Furthermore, based on the generated building area, at least one building around the path may be detected, and building profile information corresponding to the detected buildings around the path may be provided in response to the request for building profile information.

Accordingly, even though there is no previously generated building profile information for buildings around a currently set driving path, the other vehicle may perform texturing on virtual objects corresponding to respective buildings around the driving path based on the building profile information provided from the second cloud server 2200.

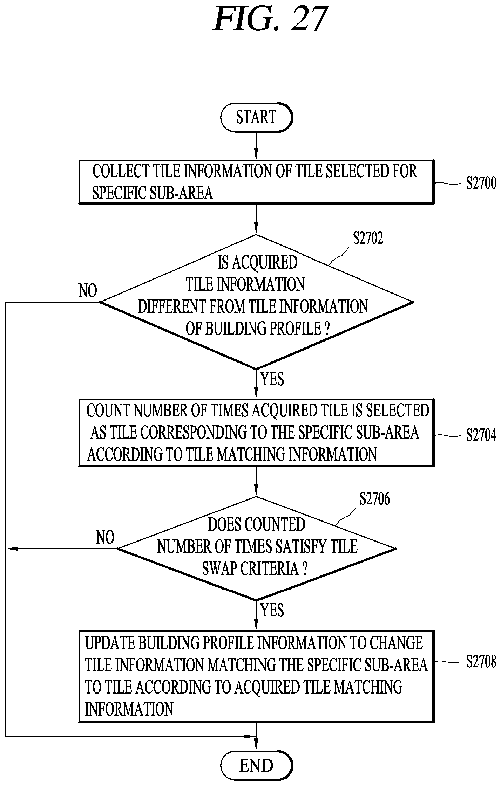

Meanwhile, even after generating building profile information, the second cloud server 2200 may update the previously generated building profile information based on tile matching information collected for a specific building corresponding to the building profile information. FIG. 26 is an exemplary diagram illustrating an example of a tile table generated in the cloud server to update building profile information as described above, and FIG. 27 is a flowchart illustrating an operation process of updating, by the cloud server 2200 of the path guiding system illustrated in FIG. 22, building profile information.

The second cloud server 2200 may collect tile matching information corresponding to respective buildings from a plurality of different vehicles that perform the operation process of FIG. 25. In this case, tile matching information in which different tiles are assigned to the same sub-area of the same building may be collected depending on a speed, driving direction, or angle of view of the vehicle, or a time at which the image of the building is acquired.

Meanwhile, the second cloud server 2200 may sort and store tile matching information corresponding to respective buildings collected by the plurality of different vehicles according to the same building and the same sub-area.

As an example, the second cloud server 2200 may identify tile matching information corresponding to the same building based on the recognition information of the building identified from map information, that is, the location information of the building, and manage the tile matching information according to a result of the identification. That is, the second cloud server 2200 may group and manage tile matching information collected based on each building on the map information.

Then, the second cloud server 2200 may collect information on tiles matching a specific area of a specific building through the grouped tile matching information based on the building. Furthermore, based on a result of the collection, tiles matching the specific sub-area and a number of times each tile is selected may be counted. In this manner, the tiles matching the specific sub-area and the number of times each tile is selected may be stored in the form of a tile table as shown in FIG. 26.

Referring to FIG. 26, the tile table illustrated in FIG. 26 may include information on building location information (an LB latitude, a RT latitude, an LB longitude, a RT longitude) as building recognition information 2602 for building identification. In addition, information 2600 of tiles selected to match a specific sub-area of the building may include information (layer index) of a specific sub-area of the building and information (recently tile index) of tiles currently matched to the specific sub-area (assigned through current building profile information). Furthermore, according to a result of collecting the tile matching information, information of different tiles matching the specific sub-area (#1 selected tile index to #N selected tile index) and information of a number of times each of the different tiles matching the specific sub-area is selected to match the specific sub-area (#1 selection count to #N selection count) may be included therein.

For example, for the specific sub-area, when three different tiles (tile A, tile B, tile C) are matched as a result of analyzing tile matching information collected from 10 different vehicles, the second cloud server 2200 may include tile information of each of the tile A, tile B, and tile C as selected tile information (selected tile index) in the tile table. Furthermore, among the 10 vehicles, a number of vehicles that selected the tile A as corresponding to the specific sub-area, a number of vehicles that selected the B tile as corresponding to the specific sub-area, and a number of vehicles that selected the C tile as corresponding to the specific sub-area may be respectively stored in the tile table as selection count information. Accordingly, the tile table may include tile information on N different tiles as shown above in FIG. 26, and may include information on a number of times each of the N different tiles is selected through different tile matching information.

Meanwhile, when information on tiles matching a specific sub-area and a number of times each tile is selected is collected through the tile table, the second cloud server 2200 may change information on tiles matching the specific sub-area based on the information included in the tile table. Then, the building profile information on the building may be updated to include the changed tile information.

FIG. 27 is a flowchart illustrating an operation process of updating, by the second cloud server 2200 of the path guiding system illustrated in FIG. 22, building profile information.

Referring to FIG. 27, when tile matching information is collected from a specific vehicle (or display device), the second cloud server 2200 may acquire tile information of a tile selected by the specific vehicle (or display device) for a specific sub-area of a specific building from the collected tile matching information (S2700). Furthermore, it may be compared whether the selected tile information is the same as the tile information corresponding to the specific sub-area included in the building profile information corresponding to the specific building (S2702).

As a result of the comparison in the step S2702, when the tile information acquired in the step S2700 is the same as the tile information in the building profile information corresponding to the specific building, the second cloud server 2200 may determine that updating the tile information for the specific sub-area is not required. Accordingly, the second cloud server 2200 may terminate the building profile update operation process of FIG. 27.

On the contrary, as a result of the comparison in the step S2702, when the tile information acquired in the step S2700 is different from the tile information in the building profile information corresponding to the specific building, the second cloud server 2200 may count a number of times that the tile selected to match the specific sub-area through the tile matching information in the step S2700 is selected as a tile corresponding to the specific sub-area (S2704). In this case, the number-of-times count may be to add 1 to a value of a tile selection count (#3 selection count) corresponding to a tile selected to match the specific sub-area (e.g., #3 selected tile index) in the tile table illustrated in FIG. 26.

In the step S2704, when a number of tile selections of a tile selected to match the specific sub-area is counted according to the acquired tile matching information, the second cloud server 2200 may check whether the number of tile selections counted in the step S2704 satisfies a tile swap criteria (S2706). Here, the second cloud server 2200 may check that the tile swap criteria are satisfied when the number of tile selections counted in the step S2704 reaches a preset number.

As a result of the check in the step S2706, when the number of tile selections counted in the step S2704 does not satisfy the tile swap criteria, the second cloud server 2200 may determine that updating tile information on the specific sub-area is not required. Accordingly, the second cloud server 2200 may terminate the building profile update operation process of FIG. 27.

On the contrary, when the number of tile selections counted in the step S2704 satisfies the tile swap criteria as a result of the check in the step S2706, the second cloud server 2200 may update the building profile information corresponding to the specific building by changing the tile information matching the specific sub-area with a tile according to the acquired tile matching information (S2708).

Meanwhile, in the foregoing description, the case where the tile swap condition is above a preset number of times has been described as an example, but on the other hand, the tile swap condition may be whether a tile with the largest number of selections based on the tile table corresponding to the specific sub-area and a tile matching the specific sub-area included in current building profile information are different from each other. In this case, if the tile with the largest number of selections is the same as the tile matching the specific sub-area included in the current building profile information, the second cloud server 2200 may determine that the tile swap condition is not satisfied. However, if the tile with the largest number of selections is different from the tile matching the specific sub-area included in the current building profile information, the second cloud server 2200 may determine that the tile swap condition is satisfied, and proceed to the step S2708 to change the tile information corresponding to the specific sub-area to the tile with the largest number of selections.

Meanwhile, the foregoing description has described only that the number of tile selections matching a specific sub-area increases while collecting tile matching information, but the number of tile selections may, of course, decrease depending on preset conditions.

For example, the second cloud server 2200 may also delete the collected tile matching information after a predetermined period of time has passed since the information was collected. Then, as the tile matching information is deleted, the tile information matching a specific sub-area according to the tile matching information may also be deleted. Accordingly, as tile matching information is deleted, the number of tile selections matching a specific sub-area according to the deleted tile matching information may be reduced. Then, the second cloud server 2200 may check whether a tile swap condition is satisfied by reflecting the reduced number of tile selections, and determine whether to change a tile corresponding to the specific sub-area based on a result of the check.

Meanwhile, in the foregoing description, the case where the second cloud server collects tile matching information from a plurality of vehicles has been described as an example. Here, the tile matching information may be different information from the building profile information. For example, building profile information may be information including recognition information (e.g., location information) for recognizing a specific building, combination information for combining a plurality of sub-areas constituting the specific building, tile information of tiles matching the respective plurality of sub-areas, and characteristic information including information on the type and use of the specific building. In contrast, the tile matching information may be information including information of at least one sub-area of the specific building and tile information of tiles matching the respective at least one sub-area.

Meanwhile, the tile matching information may include tile information of tiles respectively corresponding to all of the plurality of sub-areas constituting the specific building, or may include tile information of a tile matching only one of the plurality of sub-areas constituting the specific building. Alternatively, the tile matching information may further include combination information for combining a plurality of sub-areas constituting the specific building. That is, the tile matching information may be at least part of the building profile information.

Therefore, instead of the above-described tile matching information, the second cloud server may collect building profile information collected from a plurality of vehicles. In this case, the display device according to the embodiment of the present disclosure may receive building profile information corresponding to a specific building from the second cloud server, and change tile information matching a specific sub-area of the specific building according to the foregoing operation process of FIG. 20. Furthermore, the building profile information received from the second cloud server may be updated to include changed tile information and information of a specific sub-area where the tile information matches. Furthermore, the display device may transmit the updated building profile information to the second cloud server. Then, the second cloud server may collect the updated building profile information, in FIG. 22 and subsequent drawings, as tile matching information collected by the second cloud server from a plurality of vehicles, detect tiles selected differently for a specific sub-area of a specific building from the building profile information collected from the plurality of vehicles, respectively, and update the building profile information (distributed to other vehicles) corresponding to the specific building based on numbers of times the tiles have been selected.

Meanwhile, the foregoing description has described an example in which the tile DBs of a cloud server that provides building profile information and a display device that receives building profile information are synchronized with each other. However, on the contrary, when the cloud server provides building profile information, data of tiles corresponding to tile information included in the building profile information may, of course, be provided together with the provision of the building profile information.

In this case, even though the tile DBs of the cloud server and the display device that receives the building profile information are not synchronized with each other, the display device may perform tiling for each virtual object corresponding to the provided building profile information based on the tile data provided together with the building profile information.

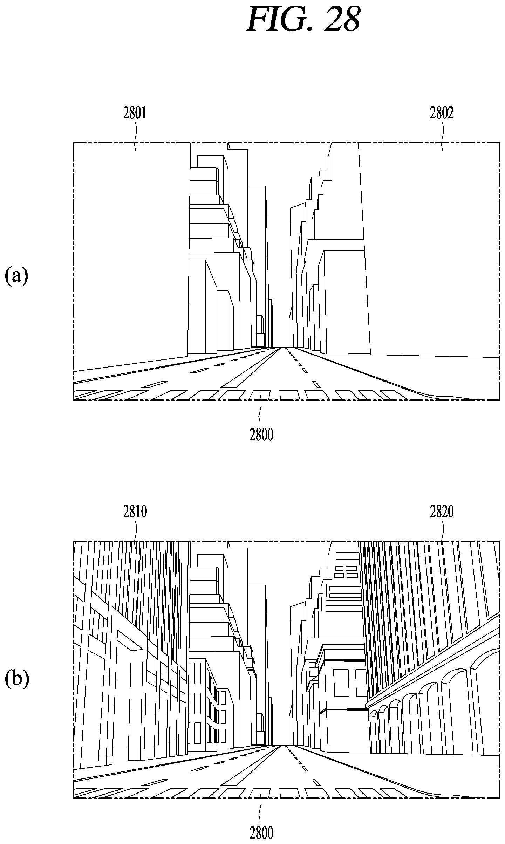

Meanwhile, FIG. 28 is an exemplary diagram illustrating an example of synthesizing textures to a polygon-shaped virtual object according to an embodiment of the present disclosure.

First, referring to (a) of FIG. 28, (a) of FIG. 28 illustrates a case where texturing is not carried out according to tiling of tiles according to an embodiment of the present disclosure. In this case, virtual objects 2801, 2802 corresponding to buildings located around a driving path 2800 of a vehicle may be displayed as polygon-shaped virtual objects representing locations and three-dimensional volumes of buildings.

Meanwhile, in the case of the display device 1300 and the path guiding system according to an embodiment of the present disclosure, when the driving path 2800 of the vehicle is determined, building profile information including tile information of tiles matching respective sub-areas and combination information on which the respective sub-areas tiled by the matching tiles are to be combined with one another, for buildings located around the driving path 2800 from map information, may be directly generated or received from a preset server (e.g., a second cloud server 2200).

Furthermore, based on the generated or received building profile information for buildings located around the driving path 2800 and the information of pre-stored tiles (e.g., tile DB), texturing may be carried out on surface areas of the virtual objects 2801, 2802 corresponding to respective buildings located around the driving path 2800. In this case, for the virtual objects 2801, 2802 corresponding to the respective buildings located around the driving path 2800, tiling may be performed with respective matching tiles for respective sub-areas, and the respective tiled sub-areas may be combined with one another in a preset sequence according to combination information. Accordingly, as shown in (b) of FIG. 28, the virtual objects 2810, 2820 around the driving path 2800 whose surface areas are textured by tiles that are tiled for the respective sub-areas may be displayed on the display.

The above-described present disclosure may be implemented as computer-readable codes (or an application or software) on a program-recorded medium. The control method of the path guidance device described above can be implemented using codes stored in memory, etc.

The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (for example, transmission via the Internet). Also, the computer may include a processor or a controller. Therefore, the detailed description should not be limitedly construed in all of the aspects, and should be understood to be illustrative. The scope of the present disclosure should be determined by reasonable interpretation of the appended claims and all changes that come within the equivalent scope of the present disclosure are included in the scope of the present disclosure.

## Claims

1. A display device comprising:
an interface unit that receives sensing information collected from at least one sensor provided in a vehicle;
a memory that stores a tile database including tiles corresponding to at least one of shapes and images of parts of different buildings, map information including virtual objects corresponding to buildings in an area where the vehicle is located, and building profiles of buildings corresponding to the virtual objects included in the map information; and
a processor that detects building profiles corresponding to buildings located around the vehicle based on a driving path of the vehicle when the driving path of the vehicle is determined, tiles different areas of each virtual object with different tiles of the tile database based on area-specific tile information included in a building profile corresponding to each of the virtual objects, for respective virtual objects corresponding to respective buildings located around the vehicle, combines respective areas on which tiling is carried out according to the building profile to perform texturing on each of the virtual objects, and controls the interface unit to display MR information that renders at least one of the textured virtual objects on a display module of the vehicle.

2. The display device of claim 1, wherein the interface unit acquires a building image corresponding to a specific building whose building profile is not detected from among the buildings around the vehicle through a camera provided in the vehicle, and
wherein the processor acquires images of different areas of the specific building based on the building image, determines tiles corresponding to the different areas of the specific building from the tile database based on the acquired images of the different areas, and generates and stores a building profile including combination information for combining information of the determined tiles for the different areas of the specific building and the acquired images of the different areas based on the building image.

3. The display device of claim 2, wherein the tile database is provided with a plurality of tile groups including different tiles depending on the type of a building, and
wherein the processor determines a tile corresponding to a specific area of the specific building from tiles included in a specific tile group of the tile database according to the type of the specific building.

4. The display device of claim 1, wherein the interface unit acquires a building image corresponding to a specific building from among the buildings around the vehicle through a camera provided in the vehicle, and
wherein the processor acquires an image of a specific area of the specific building based on the building image, determines a tile corresponding to the specific area from the tile database based on the acquired image of the specific area, and updates tile information of the specific area included in building profile information corresponding to the specific building based on a result of comparing the determined tile with the tile information of the specific area included in the building profile information corresponding to the specific building.

5. The display device of claim 1, further comprising a communication unit that communicates with a cloud server,
wherein the processor transmits a driving path of the vehicle to the cloud server, and receives building profile information corresponding to at least one of buildings located around the vehicle from the cloud server in response to the transmitted driving path.

6. The display device of claim 5, wherein the processor receives at least one tile according to the received building profile information from the cloud server.

7. The display device of claim 5, wherein the cloud server receives building profile information, which is generated by a plurality of vehicles, corresponding to respective buildings in an area where the vehicles are located, from the plurality of vehicles that are connected in communication with the cloud server, compares tile information set in different areas of the buildings included in the respective received building profile information with one another, and generates building profile information including information on the most selected tile for each area of the buildings as tile information corresponding to each area of the buildings.

8. The display device of claim 5, wherein the cloud server collects, from a plurality of vehicles connected to the cloud server, information on tiles corresponding to different areas of respective buildings in an area where the vehicles are located, and generates building profile information including information on the most selected tile for each area of the buildings as tile information corresponding to each area of the buildings.

9. The display device of claim 4, wherein the processor determines any one tile corresponding to the specific area based on a result of calculating a similarity between at least one of a shape, a color, and a form extracted from an image of the specific area and each of the tiles included in the tile database.

10. The display device of claim 9, wherein the processor calculates, based on features detected from an image of the specific area, a recognition rate for a building image of the specific area, and determines whether to determine a tile corresponding to the specific area based on the calculated recognition rate.

11. The display device of claim 4, wherein in the tile database, matchable tiles are grouped for the respective plurality of preset layers, and
wherein the processor divides the specific building into the plurality of preset layers based on the acquired building image, and determines tiles corresponding to each of the divided layers from the grouped tiles of the tile database corresponding to each of the divided layers based on the image of each of the divided layers.

12. The display device of claim 11, wherein the processor normalizes, when tiles are acquired into the tile database, the stored tiles according to preset sizes or aspect ratios to store the normalized tiles in the tile database, and
wherein the sizes or aspect ratios of the normalized tiles are different for the respective plurality of preset layers of the grouped tile database.

13. The display device of claim 12, wherein the processor divides, based on the acquired building image, the specific building into a bottom layer, which is a layer closest to the ground, and at least one middle layer, detects a sub-area corresponding to the bottom layer area from the acquired building image according to normalized sizes of tiles included in a tile group of the tile database corresponding to the bottom layer, and detects a sub-area corresponding to the at least one middle layer area from the acquired building image according to normalized sizes of tiles included in a tile group of the tile database corresponding to the middle layer.

14. The display device of claim 1, wherein the processor removes, on at least one virtual object included in the map information, overlapping vertices between virtual objects and corrects an outline of the virtual object through a vertex resampling algorithm, and performs texturing on a virtual object corresponding to a building around the vehicle according to the building profile for the virtual object whose vertices have been removed and whose outline has been corrected.

15. The display device of claim 14, wherein the processor detects outline vertices, which are corner points of an outline constituting an outline of the virtual object, detects areas between outline vertices whose distance to another outline vertex is not an integer multiple of a horizontal length of a preset tile, from among the outline vertices, and removes at least one of the detected outline vertices so as to allow a distance between the outline vertices to correspond to an integer multiple of a preset length of tile.

16. The display device of claim 12, wherein the normalization further comprises tiling reference point normalization that changes the tiling reference points of the acquired tiles to preset tiling reference points.

17. A path guiding system comprising:
a cloud server that detects, when a driving path of a vehicle is received, buildings located around the received driving path from map information, and transmits building profiles corresponding to the respective detected buildings as a response to the received driving path; and
a display device provided in the vehicle to transmit a driving path according to a destination of the vehicle acquired from a navigation system of the vehicle to the cloud server, determine a target building on which texturing is to be performed based on at least one of a location, a speed, and a driving direction of the vehicle when the building profiles are received in response to the transmission of the driving path, tile different areas of a virtual object corresponding to the target building with different tiles based on area-specific tile information included in a building profile corresponding to the determined target building, among the received building profiles, and perform texturing on the virtual object by combining respective areas where tiling is carried out according to the building profile.

18. The path guiding system of claim 17, wherein the cloud server acquires images of surrounding buildings through a camera, acquires images of different areas of the surrounding buildings based on the acquired building images, determines tiles corresponding to the different areas of the surrounding buildings based on the acquired images of the different areas, receives building profile information generated by a plurality of vehicles, which includes combination information for combining the acquired images of different areas based on the information of the determined tiles and the building image, from the plurality of vehicles, and determines a building profile corresponding to a specific building based on at least one building profile information received for the specific building from among the received building profile information.

19. The path guiding system of claim 18, wherein the cloud server determines, when among the received building profile information, there is building profile information including tile information of different tiles for a specific area of the specific building, any one tile having the largest amount of collected building profile information corresponding to the specific area, among the different tiles corresponding to the specific area, as a tile corresponding to the specific area.

20. The path guiding system of claim 19, wherein the cloud server is provided with a tile database including tile data for each of a plurality of tiles to provide tile database information for synchronization with the tile database to the plurality of vehicles and the display device, and
wherein the plurality of vehicles and the display device are provided with a tile database in synchronization with the tile database of the cloud server based on the tile database information to determine a tile corresponding to a specific area of a specific building based on a plurality of tiles included in the tile database in synchronization therewith.
